# EUROPÄISCHE PATENTSCHRIFT

(11) **EP 3 665 127 B1**
(45) Veröffentlichungstag und Bekanntmachung des Hinweises auf die Patenterteilung: **24.03.2021**
(21) Anmeldenummer: 18737227.1
(22) Anmeldetag: 02.07.2018
(51) Int. Cl.: C02F 1/28, C02F 101/30

(54) **VERFAHREN UND ANLAGE FÜR DIE BEHANDLUNG UND/ODER AUFREINIGUNG VON WASSER**
METHOD AND SYSTEM FOR TREATING AND/OR PURIFYING WATER
PROCÉDÉ ET INSTALLATION POUR LE TRAITEMENT ET/OU LA PURIFICATION DE L'EAU

(30) Priorität: 27.09.2017 DE 102017009037; 27.09.2017 DE 102017009038; 08.11.2017 DE 102017126118
(43) Veröffentlichungstag der Anmeldung: 17.06.2020
(73) Patentinhaber: Blücher GmbH, 40699 Erkrath (DE)
(72) Erfinder: SCHÖNFELD, Raik, 40699 Erkrath (DE); FISCHER, Charlotte, 40699 Erkrath (DE); RAISER, Jan-Peter, 40699 Erkrath (DE)
(74) Vertreter: Strehlke, Ingo Kurt
(86) Internationale Anmeldenummer: PCT/EP2018/067727
(87) Internationale Veröffentlichungsnummer: WO 2019/063150

(56) Entgegenhaltungen:
- WO-A1-2014/080230
- WO-A1-2017/161117
- US-A- 4 048 068
- US-A1- 2006 011 553
- US-A1- 2013 032 541
- US-A1- 2014 224 715
- US-B2- 6 616 833

## Beschreibung

Die vorliegende Erfindung betrifft das technische Gebiet der Behandlung bzw. Aufreinigung von Wasser, insbesondere von für die Herstellung von Trinkwasser bzw. Brauchwasser eingesetztem Wasser, wie Rohwasser.

Insbesondere betrifft die vorliegende Erfindung ein Verfahren zur vorzugsweise kontinuierlichen Behandlung bzw. Aufreinigung von mit Verunreinigungen belastetem Wasser zu Zwecken der Gewinnung bzw. des Erhalts von behandeltem bzw. aufgereinigtem Wasser, wie beispielsweise Trinkwasser bzw. Brauchwasser, wobei die Verunreinigungen adsorptiv aus dem zu behandelnden bzw. aufzureinigenden Wasser entfernt werden, und zwar bevorzugt im Falle von zeitlich begrenzt bzw. spontan auftretenden Konzentrationsanstiegen der Verunreinigungen in dem zu behandelnden bzw. aufzureinigenden Wasser.

Darüber hinaus betrifft die vorliegende Erfindung auch eine Wasseraufreinigungsanlage, insbesondere zur vorzugsweise kontinuierlichen Behandlung bzw. Aufreinigung von mit Verunreinigungen belastetem Wasser.

Darüber hinaus betrifft die vorliegende Erfindung auch eine Verwendung der erfindungsgemäßen Wasseraufreinigungsanlage zur vorzugsweise kontinuierlichen Behandlung bzw. Aufreinigung von mit Verunreinigungen belastetem Wasser.

Darüber hinaus betrifft die vorliegende Erfindung auch eine Verwendung der erfindungsgemäßen Wasseraufreinigungsanlage zur Abschwächung bzw. Vergleichmäßigung von zeitlich begrenzten bzw. spontan auftretenden Konzentrationsanstiegen von Verunreinigungen in einem zu behandelnden bzw. aufzureinigenden Wasser bzw. zur Entfernung von mit den Konzentrationsanstiegen im Zusammenhang stehenden Verunreinigungen.

Weiterhin betrifft die vorliegende Erfindung eine Verwendung der erfindungsgemäßen Wasseraufreinigungsanlage zur Nachrüstung bzw. Ergänzung von bestehenden Anlagen bzw. Vorrichtungen, welche zur kontinuierlichen Behandlung bzw. Aufreinigung von mit Verunreinigungen belastetem Wasser eingesetzt werden.

Die allgemein zunehmende Gewässerverschmutzung bzw. Wasserverunreinigung und somit die Verschmutzung von Oberflächengewässern, wie Flüssen, Seen, Meeren, sowie von Grund- bzw. Trinkwasser stellt eine große umweltspezifische Herausforderung dar, und zwar auch vor dem Hintergrund, dass Wasser in Form von Trinkwasser eines der wichtigsten und nicht ersetzbaren Lebensmittel darstellt. Dies gilt insbesondere auch vor dem Hintergrund, dass die menschliche Gesundheit unmittelbar beeinflussende Substanzen, wie toxische bzw. krebserregende Substanzen, in häufig übermäßiger Weise in die aquatische Umwelt eingebracht werden und infolgedessen auch in das Trinkwasser gelangen können.

Die Verschmutzung von Gewässern kann in diesem Zusammenhang beispielsweise als direkte Verschmutzung und somit durch unmittelbares Einbringen von Verunreinigungen in ein Gewässer erfolgen, wie es beispielsweise für die Einleitung von Abwässern aus Fabriken bzw. Siedlungen, welche beispielsweise über die Kanalisation abgeleitet werden, der Fall ist. Darüber hinaus kann eine Gewässerverschmutzung auch durch das indirekte Einbringen von Verunreinigungen vorliegen, wie es beispielsweise für auf landwirtschaftliche Nutzflächen ausgebrachte Dünger oder Pestizide, Reifenabrieb, Auftausalze und Öle in Straßenabwässern oder Luftschadstoffe, die mit dem Regen in das Wassersystem eingewaschen werden, der Fall ist. In diesem Zusammenhang kann oftmals auch das Grundwasser von solchen Verschmutzungen betroffen sein. Etwa die Hälfte der Gewässerbelastung geht auf direkte Einleitungen und die andere Hälfte auf indirekte Einleitungen zurück, wobei die Bilanz jedoch in Abhängigkeit von dem konkret betrachteten Schadstoff und von dem von der Verschmutzung betroffenen Gewässer hiervon unterschiedlich ausfallen kann.

In diesem Zusammenhang stellen auch sogenannte Mikroverunreinigungen ein großes Problem dar, welche synonym auch als Spurenstoffe bzw. *micropollutants* bezeichnet werden. Hierzu zählen insbesondere auch landwirtschaftlich genutzte Chemikalien, wie Pestizide, Fungizide, Insektizide oder dergleichen, sowie weitere bestimmte Industriechemikalien, wie Weichmacher, insbesondere Bisphenol-A, Röntgenkontrastmittel, wie Amidotrizoesäure und lopamidol, Tenside, wie perfluorierte Tenside, oder dergleichen. Hinzu kommen auch pharmazeutische Wirkstoffe bzw. Humanpharmaka, wie Analgetika, Hormonwirkstoffe oder dergleichen, welche nach Verabreichung unverändert oder nach chemischem Umbau im menschlichen Organismus als Konjugate bzw. Metabolite ausgeschieden und in der Folge in das Abwasser bzw. in die aquatische Umwelt gelangen können. Als weitere Beispiele für Mikroverunreinigungen können zudem auch sogenannte Antiklopfmittel, wie Methyl-tert-butylether (MTBE), genannt werden. Weiterhin sind sogenannte *Dissolved Organic Compounds* bzw. *Dissolved Organic Carbons* (DOC) anzuführen, welche gleichermaßen als unerwünschte Verunreinigungen im Wasser auftreten können. Dabei ist insbesondere beachtlich, dass die vorgenannten Substanzen bereits in geringen Mengen ein hohes toxisches Potenzial bzw. eine geringe Bioverträglichkeit aufweisen, so dass auch von daher bereits geringe Mengen bzw. Kontaminationen als äußerst problematisch einzustufen sind.

Die vorgenannten Stoffe bzw. Substanzklassen weisen somit insbesondere die Gemeinsamkeit auf, dass sie bereits bei Aufnahme sehr geringer Mengen im µg- oder sogar im ng-Bereich einen erheblichen Einfluss auf den menschlichen Organismus bzw. die menschliche Gesundheit haben können, beispielsweise im Hinblick auf eine hormonelle Wirkung, ihre Eigenschaft als endokrine Disruptoren sowie die Ausbildung von Resistenzen oder dergleichen. Auch insofern besteht ein hoher Bedarf, derartige Substanzen insbesondere im Rahmen der Trinkwassergewinnung aus dem hierzu verwendeten (Roh-)Wasser zu entfernen.

Zudem werden insbesondere Pestizide, wie Pflanzenschutzmittel, Biozide oder dergleichen, insbesondere auch infolge einer zunehmenden Intensivierung der Landwirtschaft in stetig steigenden Mengen eingesetzt, was auch zu einer zusätzlichen Belastung von Gewässersystemen bzw. dem Grundwasser mit nicht zu vernachlässigenden Mengen an Pestiziden bzw. Pestizidrückständen führt, was insbesondere auch für die Trinkwasserherstellung von Relevanz ist. Aufgrund des toxischen Potentials von Pestiziden liegen im Hinblick auf die Entfernung dieser Verunreinigungen entsprechend hohe Anforderungen vor, insbesondere was die der Trinkwassergewinnung zugrundeliegenden Aufbereitung von (Roh-)Wasser anbelangt, bei welcher die in Rede stehenden Substanzen entfernt werden müssen.

Insbesondere kann die Ausbringung von Pestiziden oder dergleichen beispielswiese auf landwirtschaftliche Flächen zu einer entsprechenden Kontamination bzw. Belastung sowohl von Oberflächen- als auch von Grundwasser führen, insbesondere wenn die Substanzen nach deren Ausbringung mit Regenwasser ausgewaschen und abgeleitet werden.

In diesem Zusammenhang kommt auch dem Pestizid Metaldehyd eine entsprechende Bedeutung zu, wobei es sich hierbei im Speziellen um ein sogenanntes Molluskizid handelt, welches beispielsweise in Schneckenkorn vorhanden ist. Metaldehyd tritt insbesondere als Folge eines übermäßigen Einsatzes in der Landwirtschaft in mitunter nicht unbeträchtlicher Menge als Verunreinigung in aufzureinigendem (Roh-)Wasser auf. In diesem Zusammenhang wurden beispielsweise in Großbritannien im Zeitraum von 2008 bis 2014 mehr als 1.600 Tonnen Metaldehyd eingesetzt, wobei Metaldehyd insbesondere aufgrund seiner physikochemischen Eigenschaften beispielsweise durch Auswaschung mit dem Regenwasser relativ schnell insbesondere in Oberflächengewässer sowie nicht zuletzt auch in das Grundwasser gelangen kann und in der Folge auch an entsprechend lokalisierten Trinkwassergewinnungsanlagen vorliegen kann. So werden beispielsweise in Großbritannien insbesondere während des Anwendungszeitraums von Metaldehyd, welches insbesondere im Herbst und im Winter auf landwirtschaftliche Flächen ausgebracht wird, oftmals die vorgegebenen Grenzwerte im Trinkwasser überschritten, so dass nicht zuletzt auch von daher ein großer Bedarf an effektiven Aufbereitungs- bzw. Aufreinigungsverfahren und diesbezüglichen Vorrichtungen bzw. Anlagen besteht.

Darüber hinaus werden Humanpharmaka insbesondere aufgrund des demographischen Wandels und der steigenden individuellen Lebenserwartung mit dem damit in Verbindung stehenden erhöhten Arzneimittelkonsum zukünftig in noch größerer Menge und Anzahl z. B. über kommunale Abwasserwege in die Umwelt gelangen, was gleichermaßen für Veterinärpharmaka aufgrund des allgemein steigenden Fleischkonsums mit den damit einhergehenden Tierhaltungsformen gilt.

Zudem können pharmakologisch aktive Substanzen, welche in der Veterinärmedizin eingesetzt werden, gleichermaßen in Oberflächengewässer sowie in das Grundwasser gelangen, beispielweise durch Ausbringung entsprechend belasteter Gülle und nachfolgende Auswaschung der damit gedüngten landwirtschaftlichen Flächen durch Niederschläge, so dass eine Elution bzw. eine Einspülung der entsprechenden Mikroverunreinigungen in Gewässersysteme bzw. in das Grundwasser erfolgen kann.

Aufgrund der Toxizität, Persistenz und des hohen Bioakkumulationspotentials von Mikroverunreinigungen bzw. Spurenstoffen sowie der zunehmenden Verwendung derartiger Substanzen besteht ein hoher Bedarf an einer effektiven Aufreinigung von belastetem (Roh-)Wasser, welches zur Herstellung von Trinkwasser verwendet wird, insbesondere im Wasserwerk vor Einspeisung in das Trinkwassernetz, zumal die in Rede stehenden Mikroverunreinigungen durch ihre steigende Präsenz in der aquatischen Umwelt zunehmend und in mitunter kritischen Mengen auch im Trinkwasser vorliegen bzw. nachzuweisen sind.

In diesem Zusammenhang ist die Aufreinigung bzw. Aufbereitung von (Roh-)-Wasser zur Gewinnung von Trinkwasser oftmals mit der Problematik verbunden, dass die in Rede stehenden Verunreinigungen, wie (Mikro-)Schadstoffe bzw. Spurenstoffe, insbesondere Pestizide oder dergleichen, nicht in konstanter Menge bzw. Konzentration in dem aufzubereitenden (Roh-)Wasser vorliegen, sondern diesbezüglichen Schwankungen unterworfen sind, beispielsweise in Form von zeitlich begrenzt bzw. temporär in dem zu behandelnden bzw. aufzureinigenden Wasser vorliegenden bzw. auftretenden Konzentrationsanstiegen bzw. -erhöhungen, welche synonym auch als Spitzenlastkonzentration bzw. Konzentrationsspitzen (Konzentrations-*Peaks*) der Verunreinigungen bezeichnet werden.

So kann es beispielsweise der Fall sein, dass auf landwirtschaftliche Flächen ausgebrachte Industriechemikalien, wie Pestizide oder dergleichen, beispielweise bei entsprechend starkem Niederschlag aus dem Boden ausgewaschen werden und nachfolgend in relativ kurzer Zeit und in großen Mengen auch in für die Trinkwasseraufbereitung verwendeten Oberflächengewässer bzw. in das Grundwasser gelangen und somit wiederum mit in die Trinkwasseraufbereitung einfließen. Entsprechendes gilt grundsätzlich auch für weitere Industriechemikalien, welche beispielsweise infolge eines unsachgemäßen Gebrauchs oder bei Extremereignissen, wie Großbränden oder dergleichen, in übermäßiger Weise in die Umwelt gelangen und dort auch zu einer entsprechenden Gewässerbelastung führen können.

Im Allgemeinen können somit - insbesondere auch im Zusammenhang mit der Trinkwasserherstellung - nicht vorhersagbare, mitunter plötzlich auftretende Konzentrationsanstiege bzw. -erhöhungen von Verunreinigungen, wie Mikroschadstoffen bzw. Spurenstoffen, wie zuvor angeführt, in einem aufzubereitendem (Roh-) Wasser auftreten. Bei den angeführten Konzentrationsanstiegen handelt es sich im Allgemeinen um zeitlich relativ begrenzte, spontan auftretende Ereignisse, bei welchen die Verunreinigungen in relativ kurzen Zeiträumen in relativ hohen Mengen anfallen, was mit entsprechenden Problemen im Hinblick auf deren Entfernung, beispielsweise aus Trinkwasser, einhergeht.

Folglich stellen die in Rede stehenden Konzentrationsspitzen der Verunreinigungen auch eine große Herausforderung insbesondere auch für im Rahmen der Trinkwasseraufbereitung eingesetzte Aufbereitungsanlagen bzw. Filtersysteme dar, welche nämlich in der Lage sein müssen, derartige Konzentrationsspitzen aufzufangen bzw. zu entfernen, um eine gleichbleibende Trinkwasserqualität unter Einhaltung der zugrundeliegenden Schadstoffgrenzwerte zu gewährleisten. In diesem Zusammenhang ist es dabei insbesondere auch problematisch, dass das konkrete Auftreten der Konzentrationsanstiege bzw. -erhöhungen als solches im Allgemeinen nicht vorhersehbar ist, und zwar weder was das zeitliches Auftreten (d.h. wann die Konzentrationsanstiege bzw. -erhöhungen auftreten), deren Zeitdauer (d.h. wie lange die Konzentrationsanstiege bzw. -erhöhungen vorliegen) noch was deren konkrete Höhe (d.h. in welcher konkreten Konzentration bzw. Menge die Verunreinigungen vorliegen) anbelangt. Hierzu liegt allenfalls eine gewisse Tendenz dahingehend vor, dass die Wahrscheinlichkeit des Auftretens von Konzentrationsanstiegen bzw. -erhöhungen im Winter bzw. bei starkem Niederschlag erhöht ist.

Zusammenfassend ist somit festzuhalten, dass Verunreinigungen, wie Spurenstoffe bzw. Mikroverunreinigungen, beispielsweise in Form von industriell-landwirtschaftlich eingesetzten Substanzen (wie Pestiziden oder dergleichen) industriellmedizinisch eingesetzten Substanzen (wie Arzneimitteln) sowie Industriechemikalien als solchen im zunehmenden Maße auch in aquatischen Systemen vorliegen. Die vorgenannten Substanzen können dabei auch in für die Trinkwassergewinnung verwendetem (Roh-)Wasser in Form von aufreinigungstechnisch schwer handhabbaren Konzentrationsanstiegen bzw. -spitzen auftreten, so dass in diesem Zusammenhang eine latente Kontaminationsgefahr von Trinkwasser resultiert, und zwar insbesondere auch bedingt durch bislang oftmals unzureichende und nicht an die konkrete Belastungssituation anpassbare Aufreinigungsmaßnahmen bei der Trinkwasserherstellung, einhergehend mit einem hohen Gefährdungspotential für den Endverbraucher.

Infolge der unzureichenden Handhabung von spontan auftretenden Konzentrationsanstiegen liegt im Stand der Technik bei der Wasseraufbereitung eine große Gefahr der Ausbildung von mit den Konzentrationsanstiegen einhergehenden Durchbrüchen der Verunreinigungen, insbesondere in Form von Mikroschadstoffen bzw. Spurenstoffen, in das aufgereinigte Wasser vor, und zwar auch im Zusammenhang mit der Verwendung von herkömmlicher bzw. konventioneller Aktivkohle als Filter- bzw. Adsorptionsmaterial, was zu einer übermäßigen Kontamination bzw. Belastung und damit zur Unbrauchbarkeit des erhaltenen Trinkwassers führen kann.

Neben der Gefahr von spontanen Durchbrüchen bei plötzlichem Auftreten von Konzentrationsspitzen liegt darüber hinaus im Stand der Technik nach Abklingen bzw. Durchlaufen eines Konzentrationsanstiegs der Verunreinigungen insbesondere bei Verwendung herkömmlicher Filtersysteme bzw. herkömmlicher Aktivkohle als Filter- bzw. Adsorptionsmaterial die zusätzliche Gefahr einer unerwünschten Freisetzung bzw. Desorption von zuvor zurückgehaltenen bzw. adsorbierten Verunreinigungen vor, wonach nämlich zuvor aufgenommene Schadstoffe wieder in das aufzureinigende Wasser abgegeben werden. Die Desorption bereits adsorbierter Schadstoffe wird dabei - ohne sich auf diese Theorie beschränken oder festlegen zu wollen - insbesondere durch den auftretenden Konzentrationsabfall der Verunreinigungen in dem zu behandelnden Wasser nach Durchlaufen des Konzentrationsanstiegs und die damit einhergehende Verschiebung des Gleichgewichts zwischen im Wasser vorhandenen Verunreinigungen einerseits und an der Aktivkohle gebundenen bzw. adsorbierten Verunreinigungen andererseits hervorgerufen. Auch diese Problematik ist im Stand der Technik bislang nicht in zufriedenstellender Weise gelöst worden.

Im Allgemeinen kann zur Erhöhung der Filter- bzw. Aufreinigungseffizienz insbesondere bei Vorliegen der in Rede stehenden Konzentrationsanstiege versucht werden, den Wasserdurchsatz zu verringern bzw. die Verweilzeit in dem zugrundeliegenden Filtersystem zu erhöhen, was jedoch der Verfahrenseffizienz abträglich ist und zudem nicht immer zu der gewünschten Aufreinigungsqualität führt. Zudem kann versucht werden, die Filterkapazität bzw. Adsorptionskapazität als solche dauerhaft zu vergrößern, was aber verfahrenstechnisch aufwendig und wirtschaftlich nachteilig ist. Zudem können die vorgenannten Ansätze auch nicht der angeführten Desorptionsproblematik entgegenwirken.

Im Allgemeinen sind im Stand der Technik zahlreiche Ansätze verfolgt worden, auf deren Basis belastetes Wasser, insbesondere (Roh-)Wasser für die Gewinnung von Trinkwasser, von Mikroschadstoffen bzw. Spurenstoffen befreit werden soll. Jedoch führen die bekannten Ansätze zur Wasseraufreinigung nicht immer zum gewünschten Erfolg. Insbesondere ist es bei den Wasseraufbereitungskonzepten des Standes der Technik mitunter nicht immer möglich, spontan auftretende Mengen- bzw. Konzentrationsanstiege an Verunreinigungen, wie Mikroverunreinigungen bzw. Spurenstoffen, in effektiver Weise abzufangen, so dass gegebenenfalls unerwünschte Durchbrüche an Schadstoffen in dem aufgereinigten Wasser vorliegen können.

Im Stand der Technik besteht ein Ansatz zu Reduzierung von Mikroverunreinigungen bzw. Spurenstoffen darin, die in einem Rohwasser vorhandenen Verunreinigungen durch Oxidationsprozesse chemisch zu zersetzen, wobei die zugrundeliegenden Methoden im Allgemeinen als *Advanced Oxidation Process* (AOP) bezeichnet werden. Hierzu zählt beispielsweise eine Ozon- bzw. UV-Behandlung des aufzureinigenden Wassers. Nachteilig bei diesen Verfahren sind jedoch die damit in Verbindung stehenden hohen Energiekosten, die aufwendige Entfernung von Rest-Ozon im behandelten Wasser sowie die Bildung toxischer Metabolite bzw. Abbauprodukte. Zudem können die Aufreinigungsbedingungen nicht immer in optimaler Weise an plötzlich auftretende Mengen- bzw. Konzentrationsspitzen angepasst bzw. dementsprechend reguliert werden.

Darüber hinaus besteht ein weiterer Ansatz zur Aufreinigung von Wasser im Stand der Technik auch darin, Membran-basierte Filteranlagen einzusetzen, wobei beispielsweise das Prinzip der Umkehrosmose (*Reverse Osmosis,* RO) sowie der *N*a*nofiltration* (NF) und *Ultrafiltration* (UF) zum Einsatz kommt. Derartige Aufreinigungskonzepte sind jedoch grundsätzlich mit dem Nachteil verbunden, dass mitunter komplexe und aufwendige sowie wartungsintensive Filteranlagen konzipiert und betrieben werden müssen, wobei der Betrieb der entsprechenden Anlagen mit hohen Betriebs- bzw. Energiekosten einhergeht. Zudem resultieren oftmals stark belastete toxische Rückstände, deren Entsorgung eine weitere wirtschaftliche und logistische Herausforderung darstellt. Nachteilig sind zudem die mitunter geringe Selektivität sowie die geringen Betriebs- bzw. Standzeiten der entsprechenden Filteranlagen, wobei der Betrieb beispielsweise durch einen (mikro-)biologischen Bewuchs der Membran nachhaltig gestört werden kann. Zudem weisen die in Rede stehenden Anlagen eine nur begrenzte Anpassbarkeit der Filterkapazität im Hinblick auf plötzlich auftretende Mengen- bzw. Konzentrationsspitzen der zugrundeliegenden Schadstoffe auf.

Darüber hinaus ist, wie zuvor angeführt, eine weitere Methode zur Verringerung des Gehalts an Mikroverunreinigungen bzw. unerwünschten Schadstoffen in Wasser darin zu sehen, dass die in Rede stehenden Verunreinigungen adsorptiv unter Verwendung von singulär eingesetzten Adsorptionsfiltern auf Basis von herkömmlicher bzw. konventioneller Aktivkohle aus dem Wasser entfernt werden. Die entsprechenden Konzepte mit der technischen Umsetzung und den hierzu oftmals eingesetzten herkömmlichen Aktivkohlen sind jedoch oftmals dahingehend nachteilig, dass aufgrund der Filterkonzeption im Stand der Technik mitunter nur niedrige Filterkapazitäten und gleichermaßen geringe Betriebs- bzw. Standzeiten bereitgestellt werden können oder Filter überdimensioniert ausgelegt werden, um die gewünschten Betriebs- bzw. Standzeiten bereitzustellen, was aus ökonomischer Sicht nicht sinnvoll ist. Zudem sind adsorptive Systeme zur Aufbereitung von Wasser unter Verwendung herkömmlicher Aktivkohle gemäß dem Stand der Technik auch mit dem Nachteil behaftet, dass deren Kapazität bzw. Effizienz im Hinblick auf das Abfangen von im Rahmen von Mengen- bzw. Konzentrationsspitzen auftretenden Verunreinigungen oftmals nicht ausreichend ist und dass auf dieser Basis der zuvor beschriebenen Desorptionsproblematik nicht entgegengewirkt werden kann, so dass es unter extremen Bedingungen zu spontanen Durchbrüchen an Verunreinigungen bzw. Schadstoffen kommen kann. Dabei kann es gleichermaßen der Fall sein, dass einzuhaltende Schadstoffgrenzwerte überschritten werden.

Im Stand der Technik ist somit bei der (Trink-)Wasseraufbereitung eine ausreichende Entfernung bzw. Abtrennung insbesondere von im Rahmen von plötzlichen bzw. spontanen Konzentrationsanstiegen anfallenden Verunreinigungen nicht immer gewährleistet, und zwar auch nicht mit den im Stand der Technik eingesetzten singulären Adsorptionsstufen auf Basis konventioneller Aktivkohle, welche im Allgemeinen als letzter bzw. nachgeschalteter Verfahrensschritt in Trinkwasseraufbereitungsanlagen eingesetzt werden können. Insbesondere weisen derartige Aufreinigungs- bzw. Aufbereitungsanlagen des Standes der Technik eine relativ geringe Aufreinigungseffizienz auf, was auch mit entsprechend geringen Standzeiten einhergeht, was wiederum mit erhöhten Betriebskosten und einer verringerten Wirtschaftlichkeit einhergeht, insbesondere bedingt durch den relativ häufigen Austausch der eingesetzten Adsorptionsmaterialien.

Auch sind die im Stand der Technik bekannten Aufreinigungs- bzw. Aufbereitungsanlagen oftmals insofern nicht effizient, als eine zufriedenstellende Aufreinigung von zu behandelndem Wasser nicht realisiert werden kann, insbesondere im Hinblick auf Problemstoffe, wie Pestizide, perfluorierte Tenside, wie Perfluoroktansulfat (PFOS), Antiklopfmittel, wie Methyl-tert-butylether (MTBE), Röntgenkontrastmittel, wie lopamidol und Amidotrizoesäure, was insbesondere auch für den Fall des Auftretens von plötzlichen Konzentrationsanstiegen der angeführten Verunreinigungen gilt.

Die US 6 616 833 B2 betrifft eine Dekontaminationsanlage zum Dekontaminieren von mit einer schäumenden feuerunterdrückenden Zusammensetzung kontaminiertem Bilgenwasser ("*bilge water*") in einer Bilge (Kielraum) eines Schiffes, bei welchem zuvor ein Brand an Bord vorlag. Die Vorrichtung soll einen Einlass aufweisen, in welcher das kontaminierte Wasser einströmt, und einen Auslass, aus welchem dekontaminiertes Wasser abgeleitet wird. Zudem soll die Vorrichtung eine Vielzahl von Wasseraufbereitungsmodulen umfassen, welche jeweils eine unabhängige Stütz- bzw. Trägerstruktur aufweisen, um mindestens eine zugeordnete Wasseraufbereitungsvorrichtung in einer solchen Position zu halten, welche für den Transport zu der Stelle und den Betrieb an der Stelle des Vorliegens des verunreinigten Wassers geeignet ist. Die den jeweiligen Modulen zugrundeliegenden Wasseraufbereitungsvorrichtungen sind jeweils selektiv und lösbar hydraulisch verbindbar, um einen kontinuierlichen Strömungsweg zu definieren, der sich vom Einlass durch die Anlage bzw. Vorrichtung erstreckt, wobei jede der zugeordneten Wasseraufbereitungsvorrichtungen eine zugeordnete Dekontaminationsfunktion aufweist, um eine zugrundeliegende Verunreinigung zumindest teilweise aus dem Fluss des kontaminierten Wassers zu entfernen, welcher sequentiell durch die Vielzahl von Modulen entlang des Strömungsweges geleitet wird. In diesem Zusammenhang soll die Anlage gemäß D1 eine Vielzahl speziell ausgebildeter Vorrichtungen bzw. Module umfassen, welche jeweils eine spezielle Filterfunktion aufweisen, wobei hierzu Filtermedien in Form von Aktivkohle oder Harzen, zum Einsatz kommen.

Weiterhin betrifft die WO 2014/080230 A1 ein Verfahren zur Behandlung von mit Pestiziden oder pharmazeutischen Rückständen kontaminiertem Wasser, wobei das kontaminierte Wasser mit einem mikro-/mesoporösen oder mikro/makroporösen Kohlenstoff in Kontakt gebracht wird, wobei der Kohlenstoff in Kohlendioxid aktiviert worden ist, um die Einführung von Oberflächensauerstofffunktionalität zu verringern und wobei der Kohlenstof eine Oberflächenfunktionalität auf Basis eines niedrigen Heteroatoms ("*low hetero atom surface functionality*") aufweist.

Die US 2014/224715 A1 betrifft ein System zur Entfernung von Verunreinigungen aus Abwasser. Das System soll ein erstes Behältnis (*tank*) aus einer Vielzahl von Behältern aufweisen, welche ein zeolithisches Material zur Entfernung der Verunreinigungen aus dem Abwasser, welches durch den ersten Behälter hindurchläuft, enthalten, um hierdurch aufbereitetes bzw. behandeltes Wasser zu erzeugen. Zudem weist das System mindestens einen Sensor auf, welcher dem ersten Behälter zugeordnet ist und derart konfiguriert ist, dass eine Konzentration der Verunreinigungen in dem zu behandelndem Wasser erfasst wird. Weiterhin ist ein Steuermittel vorgesehen, welches kommunikativ mit dem Sensor gekoppelt ist, wobei das Steuermittel derart ausgebildet ist, dass der Fluss des behandelten Wassers zu einem zweiten Behältnis (*tank*) aus der Vielzahl von Behältnissen basierend auf der erfassten Konzentration des behandelten Wassers gelenkt wird, wobei das Wasser in dem zweiten Behältnis weitergehend mit zeolithischem Material behandelt wird.

Weiterhin betrifft die WO 2017/161117 A1 ein Verfahren zur Überwachung von Naphthensäuren in Abwasser, wobei das Verfahren die Filterung von Abwasser, welches Naphthensäuren enthält, umfasst, wobei die Filterung durch einen Filter erfolgt, welcher Naphthensäuren aus dem Abwasser entfernen kann. Das Verfahren umfasst zudem eine Kontaktierung des gefilterten Abwassers mit einem Fluoreszenzsensor, welcher in der Lage ist, chromophore Komponenten von Naphthensäuren und das Vorhandensein von Naphthensäuren im gefilterten Abwasser nachzuweisen bzw. zu detektieren.

Zudem betrifft die US 2013/032541 A1 ein Verfahren zur Entfernung von Sulfolan aus mit Sulfolan kontaminiertem Grundwasser, umfassend das Leiten des mit Sulfolan kontaminierten Grundwassers durch ein Filtersystem, um gereinigtes Wasser zu bilden, wobei das Filtrationssystem Aktivkohle umfasst und das gereinigte Wasser Trinkwasserqualität aufweisen soll.

Darüber hinaus betrifft die US 4 048 068 A eine Filtervorrichtung für verunreinigte Flüssigkeiten, umfassend einen primären Einlass und einen primären Auslass, ein erstes Bett aus einem körnigen Filtermedium zwischen dem primären Einlass und dem primären Auslass sowie einen sekundären Einlass und einen sekundären Auslass, ein zweites Bett aus körnigem Filtermedium zwischen dem sekundären Einlass und dem sekundären Auslass sowie weiterhin Flüssigkeitstransportmittel, die den primären Auslass mit dem sekundären Einlass verbinden, wobei das erste Bett und das zweite Bett mindestens zwei vertikal übereinanderliegende, unterschiedliche Schichten aus körnigem Filtermedium aufweisen, wobei die Schichten in jedem der Betten entlang einer Grenzfläche miteinander vermischt sind, um das Eindringen von partikulären Verunreinigungen in die unteren Schichten zu verbessern. Zudem umfasst die Vorrichtung gemäß D6 auch Mittel zum Zuführen verunreinigter Flüssigkeit zu dem primären Einlass. Das zweite Bett soll zudem mindestens ungefähr doppelt so groß ist wie das erste Bett, so dass die Flussrate durch das erste Bett mindestens ungefähr doppelt so groß sein wie die Fließgeschwindigkeit durch das zweite Bett und wobei die durchschnittliche Größe der Körnchen des Filtermediums jeder einzelnen Schicht größer sein soll als die durchschnittliche Größe der Körnchen des Filtermediums einer hierauf folgenden Schicht in Richtung des Filtrationsflusses ist.

Weiterhin betrifft die US 2006/011553 A1 ein System zum Überwachen und zum Reinigen einer Grundwasseroxidations-Filtrationsvorrichtung, wobei die Oxidations-Filtrationsvorrichtung einen Belüftungsabschnitt und einen Filtrationsabschnitt aufweist.

Die deutsche Gebrauchsmusterschrift DE 88 15 345 U1 betrifft einen Wasseraufbereiter, insbesondere zur Aufbereitung bzw. Bereitstellung von schadstofffreiem Trinkwasser, wobei der Wasseraufbereiter mit einem nach dem Prinzip der Umkehrosmose arbeitenden Plattenmodul ausgerüstet ist.

Zudem betrifft die DE 10 2008 041 164 A1 ein Verfahren zur Aufbereitung von Wasser zur Entfernung von Halogenid-Ionen durch oxidatives Halogenieren einer dem Wasser zugesetzten organischen Verbindung, welche nachfolgend abgetrennt wird, wobei im Wasser verbleibende Chlorat-, Jodat- bzw. Bromat-Ionen zu den entsprechenden Halogenid-Ionen umgesetzt werden, wonach eine erneute oxidative Halogenierung erfolgen soll.

Weiterhin betrifft die EP 1 044 928 A1 ein Wasserbehandlungsverfahren, welches die Zugabe von Ozon zu Rohwasser und das Filtrieren des Rohwassers unter Verwendung einer Ozon-resistenten Membran umfasst, wobei das Filtrat weiterhin mit Aktivkohle oder einer Umkehrosmosemembran behandelt werden kann.

Mit den im Stand der Technik angeführten Ansätzen ist jedoch eine nachhaltige Entfernung insbesondere auch von solchen Verunreinigungen nicht zufriedenstellend möglich, welche im Zusammenhang mit zeitlich begrenzt bzw. spontan auftretenden Konzentrationsanstiegen in zu behandelndem bzw. aufzureinigendem Wasser auftreten. Hierbei ist es insbesondere problematisch, dass innerhalb einer relativ kurzen Zeit hohe Mengen an Verunreinigungen auftreten bzw. entfernt werden müssen, was oftmals zu einer Überlastung von im Stand der Technik eingesetzten Wasseraufreinigungsanlagen führt, einhergehend mit dem Auftreten von unerwünschten Schadstoffdurchbrüchen oder dergleichen in das so bereitgestellte aufgereinigte Wasser.

Vor diesem technischen Hintergrund liegt daher vorliegenden Erfindung die Aufgabe zugrunde, ein effizientes Verfahren und entsprechende Anlagen bzw. Vorrichtungen zur Behandlung bzw. Aufreinigung von (Roh-)Wasser, insbesondere zur Gewinnung von Trinkwasser, bereitzustellen, wobei die zuvor geschilderten Nachteile des Standes der Technik zumindest weitgehend vermieden oder aber wenigstens abgeschwächt werden sollen.

Insbesondere ist eine Aufgabe der vorliegenden Erfindung darin zu sehen, ein Verfahren und diesbezügliche Anlagen bzw. Vorrichtungen bereitzustellen, wobei insbesondere anorganisch bzw. organisch, insbesondere organisch basierte, Verunreinigungen, wie Mikroschadstoffe bzw. Spurenschadstoffe, aus einem zu behandelnden bzw. aufzureinigenden (Roh-)Wasser nachhaltig bzw. dauerhaft entfernt werden sollen und wobei insbesondere eine verbesserte Entfernung von im Zusammenhang mit insbesondere zeitlich begrenzten bzw. spontanen Konzentrationsanstiegen auftretenden Verunreinigungen, wie Pestiziden, aus dem zu behandelnden bzw. aufzureinigenden Wasser gewährleistet werden soll. In diesem Zusammenhang soll auch eine nachträgliche Freisetzung bzw. Desorption zuvor aufgenommener Schadstoffe nach Durchlaufen bzw. Abklingen des Konzentrationsanstiegs verhindert werden.

In diesem Zusammenhang ist eine weitere Aufgabe der vorliegenden Erfindung insbesondere auch darin zu sehen, ein effizientes Verfahren bereitzustellen, anhand dessen zeitlich begrenzt bzw. spontan auftretende Konzentrationsanstiege auch von speziellen Verunreinigungen, wie beispielsweise landwirtschaftlich bzw. industriell-landwirtschaftlich eingesetzten Substanzen, insbesondere in Form von Pestiziden oder dergleichen, abgeschwächt bzw. abgefangen werden. Dabei sollen die den Konzentrationsanstieg verursachenden Verunreinigungen effizient und dauerhaft aus dem zu behandelnden bzw. aufzureinigenden (Roh-)Wasser entfernt werden.

Diesbezüglich soll - gemäß einer weiteren Aufgabe der vorliegenden Erfindung - auch eine vorzeitige Erschöpfung von im Rahmen der Aufbereitung bzw. Aufreinigung eingesetzten Adsorptionsmaterialien verhindert werden, so dass diesbezüglich auch verlängerte Einsatz- bzw. Standzeiten der erfindungsgemäß bereitgestellten Anlagen bzw. Vorrichtungen gewährleistet werden sollen.

Weiterhin soll - gemäß einer wiederum weiteren Aufgabe der vorliegenden Erfindung - auch eine leistungsfähige Wasseraufreinigungsanlage mit entsprechenden Vorrichtungen bzw. Einrichtungen, insbesondere zur Durchführung des erfindungsgemäßen Verfahrens, bereitgestellt werden, wobei bei gleichzeitig hoher Aufreinigungseffizienz mit der Vermeidung von spontanen Durchbrüchen bei bzw. nach Auftreten von plötzlichen Konzentrationsanstiegen der Verunreinigungen auch eine hohe Wirtschaftlichkeit gewährleistet werden soll, insbesondere was die Betriebsdauer bzw. Standzeit, den Verbrauch an Adsorptionsmittel zur Aufreinigung des zu behandelnden Wassers und den erforderlichen Energieeinsatz anbelangt.

Zudem soll ein kontinuierlicher bzw. ununterbrochener Betrieb einer solchen Anlage bzw. eine kontinuierliche bzw. ununterbrochene Durchführung des Verfahrens ermöglicht werden.

Insbesondere liegt eine nochmals weitere Aufgabe der vorliegenden Erfindung darin, eine Aufreinigungs- bzw. Aufbereitungsanlage, insbesondere zur Durchführung des erfindungsgemäßen Verfahrens, bereitzustellen, mittels derer das Adsorptionsmittel zur Aufbereitung des zu behandelnden Wassers effizient und dauerhaft eingesetzt werden kann, insbesondere was verlängerte und ununterbrochene Betriebs- und Standzeiten der in diesem Zusammenhang eingesetzten Adsorptionseinrichtungen, insbesondere Adsorptionsfiltereinrichtungen, anbelangt.

Zur Lösung der zuvor geschilderten Aufgabe schlägt die vorliegende Erfindung somit - gemäß einem **ersten** Aspekt der vorliegenden Erfindung - ein Verfahren zur vorzugsweise kontinuierlichen Behandlung bzw. Aufreinigung von mit organischen Verunreinigungen, vorzugsweise Mikroschadstoffen bzw. Spurenstoffen, belastetem Wasser, insbesondere Rohwasser, zu Zwecken der Gewinnung bzw. des Erhalts von behandeltem bzw. aufgereinigtem Wasser, insbesondere Reinwasser, vorzugsweise Trinkwasser bzw. Brauchwasser, gemäß Patentanspruch 1 vor; weitere vorteilhafte Weiterbildungen und Ausgestaltungen dieses Erfindungsaspekts sind Gegenstand der entsprechenden Verfahrensunteransprüche.

Weiterer Gegenstand der vorliegenden Erfindung ist zudem - gemäß einem **zweiten** Aspekt der vorliegenden Erfindung - eine Wasseraufreinigungsanlage, insbesondere zur vorzugsweise kontinuierlichen Behandlung bzw. Aufreinigung von mit Verunreinigungen belastetem Wasser, wie in dem entsprechenden unabhängigen, die erfindungsgemäße Wasseraufreinigungsanlage betreffenden unabhängigen Anspruch definiert.

Darüber sind ein weiterer Gegenstand der vorliegenden Erfindung - gemäß einem **dritten** Aspekt der vorliegenden Erfindung - auch die erfindungsgemäßen Verwendungen, wie sie jeweils in dem die diesbezüglichen Verwendungen betreffenden unabhängigen Patentanspruch definiert sind.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Zu Zwecken der Veranschaulichung der vorliegenden Erfindung wird in der nachfolgenden Beschreibung der erfindungsgemäßen Gegenstände auch auf die in den Figuren angeführten Bezugszeichen zurückgegriffen; die diesbezügliche Anführung der Bezugszeichen ist dabei rein veranschaulichend und geht mit keinerlei Beschränkung der erfindungsgemäßen Gegenstände einher.

Dies vorausgeschickt, wird im Folgenden die vorliegende Erfindung näher beschrieben.

Gegenstand der vorliegenden Erfindung ist somit - gemäß einem **ersten** Aspekt der vorliegenden Erfindung - ein Verfahren zur vorzugsweise kontinuierlichen Behandlung von mit organischen Verunreinigungen, vorzugsweise Mikroschadstoffen und/oder Spurenstoffen, belastetem Wasser A, insbesondere Rohwasser, zu Zwecken der Gewinnung von behandeltem und aufgereinigtem Wasser B, insbesondere Reinwasser, vorzugsweise Trinkwasser und/oder Brauchwasser,
wobei die Verunreinigungen adsorptiv aus dem zu behandelnden und aufzureinigenden Wasser A entfernt werden, bevorzugt im Falle von zeitlich begrenzt bzw. spontan auftretenden Konzentrationsanstiegen der Verunreinigungen (synonym auch als Konzentrationserhöhung, Spitzenlastkonzentration bzw. Konzentrationsspitze bezeichnet) in dem zu behandelnden und aufzureinigenden Wasser A,
wobei das zu behandelnde und aufzureinigende Wasser A einer Wasseraufreinigungsanlage 1 (synonym auch als Wasseraufbereitungsanlage bezeichnet) zur adsorptiven Entfernung der Verunreinigungen zugeführt wird, wobei die Wasseraufreinigungsanlage 1 mindestens eine Hauptadsorptionseinrichtung 2 (synonym auch als Grundlastadsorptionseinrichtung bezeichnet) und mindestens eine in Abhängigkeit von einem vorgegebenen Einlasskonzentrationsgrenzwert der Verunreinigungen in dem zu behandelnden bzw. aufzureinigenden Wasser A zuschaltbare, stromaufwärts zur Hauptadsorptionseinrichtung 2 angeordnete Spitzenlastadsorptionseinrichtung 3 aufweist,
wobei die Hauptadsorptionseinrichtung (2) ein Festbett auf Basis einer partikelförmigen Aktivkohle in loser Schüttung der partikelförmigen Aktivkohle aufweist und wobei die Spitzenlastadsorptionseinrichtung (3) ein Festbett auf Basis einer partikelförmigen Aktivkohle in loser Schüttung der partikelförmigen Aktivkohle aufweist,
wobei die Spitzenlastadsorptionseinrichtung (3) ein geringeres Festbettfiltervolumen (V_{SLA}) als die Hauptadsorptionseinrichtung (2) aufweist, wobei das Verhältnis des Festbettfiltervolumens (V_{HA}) der Hauptadsorptionseinrichtung (2) einerseits zu dem Festbettfiltervolumen (V_{SLA}) der Spitzenlastadsorptionseinrichtung (3) andererseits mindestens 1,2 : 1 beträgt,
wobei die Verweilzeit des zu behandelnden und aufzureinigenden Wassers (A) in der Spitzenlastadsorptionseinrichtung (3) auf einen kleineren Wert als in der Hauptadsorptionseinrichtung (2) eingestellt wird, wobei das Verhältnis der Verweilzeit des zu behandelnden und aufzureinigenden Wassers (A) in der Hauptadsorptionseinrichtung (2) zu der Verweilzeit des zu behandelnden und aufzureinigenden Wassers (A) in der Spitzenlastadsorptionseinrichtung (3) auf einen Wert von mindestens 1,2 : 1 eingestellt wird,
wobei das zu behandelnde und aufzureinigende Wasser A der Hauptadsorptionseinrichtung 2 zugeführt und in der Hauptadsorptionseinrichtung 2 behandelt und aufgereinigt wird, wobei die Verunreinigungen adsorptiv zumindest im Wesentlichen vollständig in der Hauptadsorptionseinrichtung 2 entfernt werden, insbesondere derart, dass die Konzentration der Verunreinigungen unterhalb eines vorgegebenen Auslasskonzentrationsgrenzwertes abgesenkt wird, und
wobei bei Überschreitung des vorgegebenen Einlasskonzentrationsgrenzwertes der Verunreinigungen in dem zu behandelnden bzw. aufzureinigenden Wasser A die Spitzenlastadsorptionseinrichtung 3 zugeschaltet bzw. der Hauptadsorptionseinrichtung 2 vorgeschaltet wird derart, dass das zu behandelnde und aufzureinigende Wasser A zumindest teilweise, vorzugsweise vollständig, zunächst der Spitzenlastadsorptionseinrichtung 3 zugeführt und in der Spitzenlastadsorptionseinrichtung 3 behandelt und aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird (d. h. bevor das zu behandelnde bzw. aufzureinigende Wasser A nachfolgend der Hauptadsorptionseinrichtung 2 zugeführt wird).

Was den für die auftretenden Konzentrationsanstiege der Verunreinigungen verwendeten Begriff "zeitlich begrenzt" anbelangt, so stellt dieser insbesondere darauf ab, dass die in Rede stehenden Konzentrationsanstiege in einem zeitlich begrenzten Zeitraum bzw. insbesondere temporär auftreten, wobei die diesbezügliche Zeitdauer im Allgemeinen in großen Bereichen variieren kann. So können die in Rede stehenden Konzentrationsanstiege rein beispielhaft und in nicht beschränkender Weise eine Zeitdauer im Bereich von wenigen Minuten bis hin zu mehreren Stunden, Tagen bzw. Monaten aufweisen. Zudem zielt der Begriff "spontan", wie er gleichermaßen für die auftretenden Konzentrationsanstiege der Verunreinigungen verwendet wird, insbesondere darauf ab, dass die Konzentrationsanstiege als solche zumindest im Wesentlichen nicht konkret vorhersehbar bzw. nicht vorbestimmbar sind, insbesondere was die Häufigkeit und Dauer ihres Auftretens sowie die damit einhergehende konkret anfallende Konzentration bzw. Menge der Verunreinigungen anbelangt.

Nur der Klarstellung halber sei auch auf Folgendes hingewiesen: Die erfindungsgemäß verwendeten Begriffe "stromaufwärts" bzw. "stromabwärts" (zu welchen die Begriffe "vorgeschaltet" bzw. "nachgeschaltet" jeweils gleichbedeutend sind), beziehen sich im Allgemeinen auf die dem erfindungsgemäßen Verfahren bzw. der erfindungsgemäßen Wasseraufreinigungsanlage 1 zugrundeliegende Verfahrens- bzw. Prozessrichtung (was gleichbedeutend ist mit dem Strom bzw. der Stromrichtung des zu behandelnden bzw. aufzureinigenden Wassers).

Eine grundlegende Idee der vorliegenden Erfindung ist somit darin zu sehen, im Rahmen der Behandlung bzw. Aufreinigung von mit Verunreinigungen belastetem Wasser A, beispielsweise Rohwasser, wie es insbesondere zur Gewinnung bzw. zum Erhalt von Trinkwasser bzw. Brauchwasser B verwendet wird, in zweckgerichteter Weise - sozusagen situationsabhängig bzw. bedarfsweise - eine zusätzliche adsorptive Filterstufe in Form der Spitzenlastadsorptionseinrichtung 3 für den Fall als zusätzliche adsorptive Filterkomponente bzw. -stufe einzusetzen bzw. einer dem Behandlungs- bzw. Aufreinigungsverfahren zugrundeliegenden Wasseraufreinigungsanlage 1 zuzuschalten, bei welchem ein vorgegebener Einlasskonzentrationsgrenzwert der Verunreinigungen überschritten wird. Im Rahmen der vorliegenden Erfindung wird dabei im Falle eines zeitlich begrenzten bzw. spontan auftretenden (Einlass-)Konzentrationsanstiegs der Verunreinigungen in dem zu behandelnden bzw. aufzureinigenden Wasser A und somit bei Vorliegen einer Konzentrationsspitze bzw. Spitzenlastkonzentration eine zusätzliche Filterstufe in Form der Spitzenlastadsorptionseinrichtung 3 in einer zur Wasseraufreinigung verwendete Wasseraufreinigungsanlage 1 eingesetzt bzw. zugeschaltet, und zwar dahingehend, dass die zusätzliche Adsorptionsstufe in Form der Spitzenlastadsorptionseinrichtung 3 der in Rede stehenden Hauptadsorptionseinrichtung 2 vor- bzw. zugeschaltet bzw. stromaufwärts hierzu angeordnet und mit dem aufzureinigendem Wasser befahren wird, was mit einer nachhaltigen Verringerung der Menge der im Zusammenhang mit dem Konzentrationsanstieg anfallenden Verunreinigungen durch die Spitzenlastadsorptionseinrichtung 3 führt, so dass die für diesen Fall nachgeschaltete Hauptadsorptionseinrichtung 2 sozusagen immer nur mit einer niedrigen Konzentration der Verunreinigungen befahren wird.

Erfindungsgemäß werden somit in Abhängigkeit von der dem zu behandelnden bzw. aufzureinigenden Wasser A zugrundeliegenden Konzentration an Verunreinigungen, insbesondere bei Vorliegen eines zeitlich begrenzten oder spontan auftretenden Konzentrationsanstiegs, sozusagen zusätzliche Adsorptionskapazitäten (nämlich in Form der für diesen Fall zugeschalteten Spitzenlastadsorptionseinrichtung 3) bereitgestellt, welche der Hauptadsorptionseinrichtung 2 vorgeschaltet werden und diese insgesamt entlasten.

Die vorliegende Erfindung zielt somit insbesondere auf die zusätzliche Inbetriebnahme einer Vorstufe in Form der Spitzenlastadsorptionseinrichtung 3 in Reaktion auf bzw. in Abhängigkeit von dem Auftreten eines Konzentrationsanstiegs der Verunreinigungen ab, und zwar zu Zwecken der Verringerung bzw. dem Abfangen von zeitlich begrenzt auftretenden hohen Eingangs- bzw. Einlasskonzentrationen an Verunreinigungen.

Dabei ist die Spitzenlastadsorptionseinrichtung 3 insbesondere derart konzipiert, dass der Konzentrationsanstieg der Verunreinigungen abgeschwächt bzw. vergleichmäßigt wird bzw. die im Rahmen des Konzentrationsanstiegs anfallenden bzw. vorliegenden Verunreinigungen sozusagen zumindest teilweise abgefangen werden und somit die Konzentration an Verunreinigungen in der Spitzenlastadsorptionseinrichtung 3 unter dem vorgegebenen Einlasskonzentrationsgrenzwert abgesenkt wird. Folglich wird im Rahmen des erfindungsgemäßen Verfahrens für den Fall bzw. in Abhängigkeit des Auftretens eines Konzentrationsanstiegs die der Spitzenlastadsorptionseinrichtung 3 nachgeschaltete bzw. stromabwärts hierzu angeordnete Hauptadsorptionseinrichtung 2 dahingehend entlastet, dass das dort eintretende und in der Spitzenlastadsorptionseinrichtung 3 vorbehandelte Wasser eine vergleichmäßigte bzw. verringerte Konzentration an Verunreinigungen aufweist bzw. bereits von den mit dem Konzentrationsanstieg einhergehenden Verunreinigungen zumindest teilweise befreit ist. Folglich kann mittels der nachgeschalteten Hauptadsorptionseinrichtung 2 eine weiterführende und nachhaltige Entfernung der restlichen Verunreinigungen erfolgen, und zwar ohne Überlastung bzw. ohne vorzeitige Erschöpfung der Hauptadsorptionseinrichtung 2.

Auf Basis der erfindungsgemäßen Konzeption wird somit durch die gezielte Zuschaltung der Spitzenlastadsorptionseinrichtung 3 bei vorliegender Überschreitung des vorgegebenen Einlasskonzentrationsgrenzwerts mit der einhergehenden Entlastung der für diesen Fall nachgeschalteten Hauptadsorptionseinrichtung 2 die Gefahr von Durchbrüchen an Verunreinigungen für den kritischen Fall des Auftretens von Konzentrationsanstiegen der Verunreinigungen nachhaltig verringert bzw. vermieden.

Durch die erfindungsgemäße Konzeption der konzentrations- bzw. grenzwertabhängigen Zuschaltung der Spitzenlastadsorptionseinrichtung 3 zum zweckgerichteten Abfangen bzw. Abschwächen von zeitlich begrenzten bzw. spontan auftretenden Konzentrationsanstiegen der Verunreinigungen wird im Rahmen der vorliegenden Erfindung ein maßgeschneidertes Verfahren zur optimierten Behandlung bzw. Aufbereitung von (Roh-)Wasser, insbesondere zur Gewinnung von Trink- bzw. Brauchwasser, bereitgestellt, welches bei gleichermaßen verbesserter Verfahrensökonomie eine sichere und der jeweiligen Belastungssituation angepasste, maßgeschneiderte Aufreinigung des zugrundeliegenden Wassers ermöglicht und anhand dessen durch das gezielte Abfangen bzw. Abschwächen von Konzentrationsanstiegen der zugrundeliegenden Verunreinigungen auch die Gefahr von Schadstoffdurchbrüchen minimiert wird, wie zuvor angeführt.

In diesem Zusammenhang wird erfindungsgemäß sozusagen auf zwei Betriebszustände abgestellt, wonach nämlich bei normaler Belastung des zu behandelnden bzw. aufzureinigenden Wassers mit den Verunreinigungen sozusagen einstufig unter alleinigem Betrieb der Hauptadsorptionseinrichtung 2 verfahren wird, während bei entsprechend auftretenden Konzentrationsanstiegen mit der Überschreitung des (Einlass-)Grenzwertes sozusagen zweistufig unter zusätzlichem Betrieb bzw. Zu- und/oder Vorschaltung der Spitzenlastadsorptionseinrichtung 3 verfahren wird.

Dabei ergänzen sich die Spitzenlastadsorptionseinrichtung 3 einerseits und die Hauptadsorptionseinrichtung 2 andererseits funktional insbesondere dahingehend, dass einerseits der Konzentrationsanstieg in der Spitzenlastadsorptionseinrichtung 3 abgeschwächt bzw. verringert wird (einhergehend mit der Entlastung der Hauptadsorptionseinrichtung 2) und dass andererseits die Hauptadsorptionseinrichtung 2 nach Durchlaufen der Spitzenlastadsorptionseinrichtung 3 noch im zu behandelnden bzw. aufzureinigenden Wasser A vorhandene, jedoch verringerte Konzentrationen an Verunreinigungen ohne Weiteres abzufangen imstande ist.

Auf Basis der erfindungsgemäßen Konzeption wird zudem auch die Standzeit bzw. Einsatz- bzw. Betriebsdauer der erfindungsgemäß eingesetzten Wasseraufreinigungsanlage 1 deutlich verlängert, da zum einen die Hauptadsorptionseinrichtung 2 durch das konzentrationsabhängige Zuschalten der Spitzenlastadsorptionseinrichtung 3 entlastet wird und da zum anderen die Spitzenlastadsorptionseinrichtung 3 als solche nur unter bestimmten Bedingungen, nämlich bei Vorliegen der in Rede stehenden Konzentrationsanstiegen, zugeschaltet wird, so dass auch deren Standzeit bzw. Einsatz- bzw. Betriebsdauer erhöht ist.

In diesem Zusammenhang wird die Standzeit auch insofern erhöht, als die jeweiligen Komponenten in Form der Spitzenlastadsorptionseinrichtung 3 sowie der Hauptadsorptionseinrichtung 2 effizienter ausgenutzt werden können, insbesondere im Hinblick auf eine maximale Ausnutzung der jeweils zugrundeliegenden Adsorptions- bzw. Filterkapazität. So kann zum einen die Spitzenlastadsorptionseinrichtung 3 von daher höher mit Verunreinigungen beladen werden (d. h. sogar (nahezu) bis zu deren Kapazitätsgrenze), dass selbst bei etwaiger Überschreitung der Kapazitätsgrenze die im Fall des Vorliegens von Konzentrationsanstiegen nachgeschaltete Hauptadsorptionseinrichtung 2 die zuvor nicht adsorbierten Verunreinigungen ohne Weiteres abzufangen imstande ist. Zudem kann auch die Hauptadsorptionseinrichtung 2 selbst höher mit Verunreinigungen beladen werden (d. h. gleichermaßen (nahezu) bis zu deren Kapazitätsgrenze), da durch die Vergleichmäßigung der Schadstoffkonzentration durch die im Fall des Vorliegens von Konzentrationsanstiegen vorgeschaltete Spitzenlastadsorptionseinrichtung 3 die nachgeschaltete Hauptadsorptionseinrichtung 2 nicht übermäßig mit Verunreinigungen beladen wird, da diese bereits zuvor abgefangen worden sind. Hierdurch kann das den jeweiligen Adsorptionseinrichtungen 2, 3 zugrundeliegende Adsorptionsmaterial insgesamt effizienter ausgenutzt werden.

Zudem kann die Verweildauer des zu behandelnden bzw. aufzureinigenden Wassers insbesondere in der Hauptadsorptionseinrichtung 2 insbesondere aufgrund der reduzierten Vorlast mit den in Rede stehenden Verunreinigungen reduziert werden, was auch dem Verfahrensumsatz insgesamt zuträglich ist.

Ein weiterer zentraler Vorteil der vorliegenden Erfindung ist auch darin zu sehen, dass infolge der erfindungsgemäßen Konzeption mit der konzentrationsabhängigen Vorschaltung der Spitzenlastadsorptionsstufe 3 die Gefahr einer unerwünschten Desorption, insbesondere mit nachfolgendem Durchbruch in das erhaltene Trink- bzw. Brauchwasser, von zuvor adsorbierten Verunreinigungen nach Überschreiten des Konzentrationsanstiegs bzw. bei abfallender Schadstoffkonzentration in dem zu behandelnden bzw. aufzureinigenden Wasser A, verhindert werden kann.

Denn durch den zweckgerichteten Einsatz der Spitzenlastadsorptionseinrichtung 3 bei Vorliegen hoher (Spitzenlast-)Konzentrationen der Verunreinigungen wird die Gefahr einer Desorption in Bezug auf die erfindungsgemäß verwendete Wasseraufreinigungsanlage 1 insgesamt reduziert, da die Spitzenlastadsorptionseinrichtung 3 nur mit bzw. bei hohen Eingangs- bzw. Einlasskonzentrationen bzw. hohen Konzentrationsanstiegen der Verunreinigungen betrieben bzw. befahren wird, während die Hauptadsorptionseinrichtung 2 durchgängig nur mit entsprechend verringerten bzw. niedrigen und gleichmäßigen bzw. vergleichmäßigten (Eingangs- bzw. Einlass-) Konzentrationen betrieben bzw. befahren wird, so dass beide Komponente jeweils mit relativ gleichmäßigen Verunreinigungskonzentrationen befahren werden.

Die erfindungsgemäße Konzeption berücksichtigt auch die überraschende Erkenntnis der Anmelderin, dass nämlich niedrige Eingangs- bzw. Einlasskonzentrationen von Verunreinigungen zu niedrigen (Adsorptions-)Kapazitäten der eingesetzten Adsorptionsmaterialien in Form von Aktivkohle führen, während hohe Eingangskonzentrationen in Verunreinigungen zu hohen (Adsorptions-)Kapazitäten führen. Auch insofern werden für die nur bei hohen Schadstoffkonzentrationen bzw. Konzentrationsanstiegen der Verunreinigungen zugeschaltete Spitzenlastadsorptionseinrichtung 3 hohe Kapazitäten erreicht, was zu einer weiteren Effizienzsteigerung führt.

Im Rahmen der vorliegenden Erfindung ist auch von Vorteil, dass die Spitzenlastadsorptionseinrichtung 3 lediglich derart konzipiert zu sein braucht, dass die Konzentration an Verunreinigungen zunächst insbesondere unter den vorgegebenen Einlasskonzentrationsgrenzwert des zu behandelnden bzw. aufzureinigenden Wassers A verringert wird, so dass eine weitere Verringerung der Konzentration insbesondere auf den vorgegebenen Auslasskonzentrationsgrenzwert des insgesamt behandelten bzw. aufgereinigten Wassers B insofern nicht erforderlich ist, als die Konzentration durch die nachgeschaltete Hauptadsorptionseinrichtung 2 weiterführend verringert wird. Folglich wird insgesamt unter Verwendung der erfindungsgemäß eingesetzten Wasseraufreinigungsanlage 1 nach deren Durchlaufen ein vorgegebener (Trinkwasser-)Grenzwert der Verunreinigungen erreicht.

Auch infolgedessen kann die Spitzenlastadsorptionseinrichtung 3 insgesamt kleiner dimensioniert werden bzw. ein geringeres Filtervolumen bzw. eine geringere Menge an Adsorptionsmaterial im Vergleich zu der Hauptadsorptionseinrichtung 2 aufweisen, was gleichermaßen von Vorteil ist.

Ein weiterer Vorteil der vorliegenden Erfindung ist auch darin zu sehen, dass die erfindungsgemäß verwendete Wasseraufreinigungsanlage 1 mit der diesbezüglichen Hauptadsorptionseinrichtung 2 und der der Hauptadsorptionseinrichtung 2 vorschaltbaren Spitzenlastadsorptionseinrichtung 3 in bestehende Aufreinigungsanlagen integriert werden kann bzw. bestehende Aufreinigungsanlagen mit der Wasseraufreinigungsanlage 1, einhergehend mit einer Durchführung des erfindungsgemäßen Verfahrens, nachgerüstet werden können. In diesem Zusammenhang kann die Wasseraufreinigungsanlage 1 bzw. das erfindungsgemäße Verfahren insbesondere im Rahmen einer zu einer bestehenden Anlage nachgeschalteten Aufreinigung bzw. Behandlung eingesetzt werden, wobei insbesondere die Hauptadsorptionseinrichtung 2 als finale Behandlungs- bzw. Aufreinigungsstufe fungieren kann, insbesondere mit gegebenenfalls vorgeschalteter bzw. stromaufwärts hierzu angeordneter Spitzenlastadsorptionseinrichtung 3, welche im Falle des Überschreitens eines Konzentrationsgrenzwertes an Verunreinigungen, insbesondere Einlasskonzentrationsgrenzwertes, zusätzlich zu der Hauptadsorptionseinrichtung 2 betrieben bzw. befahren wird.

Zudem können die Spitzenlastadsorptionseinrichtung 3 einerseits sowie die Hauptadsorptionseinrichtung 2 andererseits insgesamt verkleinert werden, insbesondere was deren Filtervolumen bzw. Adsorptionskapazität anbelangt, was die Kosteneffizienz erhöht und die Handhabung insgesamt vereinfacht.

Im Allgemeinen kann die Spitzenlastadsorptionseinrichtung 3 derart ausgebildet bzw. betrieben werden, dass bei Überschreiten des vorgegebenen Einlasskonzentrationsgrenzwertes die Konzentration der Verunreinigungen am Auslass der Spitzenlastadsorptionseinrichtung 3 unter den vorgegebenen Einlasskonzentrationsgrenzwert abgesenkt wird. Zudem kann die Hauptadsorptionseinrichtung 2 insbesondere derart ausgebildet bzw. betrieben werden, dass die Konzentration an Verunreinigungen in dem zu behandelnden bzw. aufzureinigenden Wasser A und/oder dem erhaltenen Trinkwasser und/oder Brauchwasser B am Ausgang bzw. am Auslass der Hauptadsorptionseinrichtung 2 unter den vorgegebenen Auslasskonzentrationsgrenzwert abgesenkt wird.

Durch die zweckgerichtete Vorgehensweise der Abschwächung bzw. Vergleichmäßigung der zeitlich begrenzt bzw. spontan auftretenden Konzentrationsanstiege der Verunreinigungen kann zudem die Standzeit der zugrundeliegenden Wasseraufreinigungsanlage 1 bzw. einer entsprechenden Gesamtanlage genauer bestimmt bzw. vorhergesagt werden.

Im Hinblick auf das erfindungsgemäße Verfahren verhält es sich somit zusammenfassend insbesondere derart, dass die Spitzenlastadsorptionseinrichtung 3 insbesondere nur mit bzw. bei hohen Eingangskonzentrationen der Verunreinigungen (Schadstoffkonzentration oberhalb des vorgegebenen Einlasskonzentrationsgrenzwertes), wie sie bei Vorliegen eines zeitlich begrenzten bzw. spontan auftretenden Konzentrationsanstiegs vorliegen, beladen bzw. befahren wird, wobei diesbezüglich hohe Beladungskapazitäten und hohe Entfernungsraten vorliegen. Gleichermaßen geht mit der zweckgerichteten Zuschaltung der Spitzenlastadsorptionseinrichtung 3 bei Vorliegen bzw. Auftreten des Konzentrationsanstiegs ein reduziertes Risiko des Auftretens einer unerwünschten Desorption der Verunreinigungen einher. Zudem kann die Spitzenlastadsorptionseinrichtung 3 bis zur Erschöpfung bzw. Absättigung der dortigen Adsorptionsmaterialien eingesetzt werden. Erfindungsgemäß wird die Spitzenlastadsorptionseinrichtung 3 sozusagen in Reaktion auf das Vorliegen eines Konzentrationsanstiegs der Verunreinigungen gezielt zum Einsatz gebracht und der Hauptadsorptionseinrichtung 2 zur Entlastung vorgeschaltet.

Die erfindungsgemäße Konzeption führt insbesondere auch dazu, dass die im Falle des Vorliegens eines Konzentrationsanstiegs die der Spitzenlastadsorptionseinrichtung 3 nachgeschaltete Hauptadsorptionseinrichtung 2 mit konstant geringen bzw. niedrigen Eingangskonzentrationen der Verunreinigungen beladen bzw. befahren wird, welche insbesondere unterhalb des vorgegebenen Einlasskonzentrationswertes, liegen. Hierdurch wird die Standzeit der Hauptadsorptionseinrichtung 2 verlängert, wobei zudem auch deren Standzeit präzise vorhersagbar ist. Gleichermaßen wird auch für die Hauptadsorptionseinrichtung 2 und damit für die Wasseraufreinigungsanlage 1 insgesamt das Risiko einer Desorption von Verunreinigungen verringert, insbesondere da bei Betrieb mit der Vorschaltung der Spitzenlastadsorptionseinrichtung 3 auch in der Hauptadsorptionseinrichtung 2 kein plötzlicher Konzentrationsabfall der Verunreinigungen vorliegt. Insgesamt führt die erfindungsgemäße Konzeption somit auch zu einer Verlängerung der Standzeit auch der Hauptadsorptionseinrichtung 2 und damit gleichermaßen der Wasseraufreinigungsanlage 1 insgesamt.

Nachfolgend wird das erfindungsgemäße Verfahren mit den diesbezüglichen erfindungsgemäßen Ausführungsformen weiterführend beschrieben:
Was das im Rahmen des erfindungsgemäßen Verfahrens zu behandelnde bzw. aufzubereitende Wasser A anbelangt, so handelt es sich hierbei, wie zuvor angeführt, insbesondere um Rohwasser, vorzugsweise um trinkwassergemäß vorbehandeltes Rohwasser. Insbesondere kann das erfindungsgemäß zu behandelnde bzw. aufzureinigende Wasser A, insbesondere Rohwasser, vorzugsweise trinkwassergemäß vorbehandelte Rohwasser, in nicht beschränkender Weise ausgewählt sein aus Grundwasser, Uferfiltrat und Oberflächenwasser insbesondere aus Fließgewässern und/oder Seen und/oder Talsperren. Dabei kann das in Rede stehende Wasser bereits insbesondere für die Trinkwassergewinnung relevante und/oder erforderliche Aufreinigungsstufen durchlaufen haben.

Insbesondere kann es erfindungsgemäß vorgesehen sein, dass die Spitzenlastadsorptionseinrichtung 3 zugeschaltet bzw. der Hauptadsorptionseinrichtung 2 vorgeschaltet wird derart, dass die Konzentration an Verunreinigungen in dem zu behandelnden bzw. aufzureinigenden Wasser A stromabwärts zu der Spitzenlastadsorptionseinrichtung 3 und/oder am Auslass der Spitzenlastadsorptionseinrichtung 3, bezogen auf die Verfahrens- bzw. Prozessrichtung, unterhalb des vorgegebenen Einlasskonzentrationsgrenzwertes abgesenkt wird.

Gleichermaßen kann es erfindungsgemäß vorgesehen sein, dass die Spitzenlastadsorptionseinrichtung 3 zugeschaltet und/oder der Hauptadsorptionseinrichtung 2 vorgeschaltet wird derart, dass - somit auch im Fall des Verlaufs eines Konzentrationsanstiegs bzw. einer Spitzenlastkonzentration - die Konzentration an Verunreinigungen in dem behandelten und aufgereinigten Wasser B und/oder stromabwärts zu der Hauptadsorptionseinrichtung 2 und/oder am Auslass der Hauptadsorptionseinrichtung 2, bezogen auf die Verfahrens- und/oder Prozessrichtung, unterhalb des vorgegebenen Auslasskonzentrationsgrenzwertes abgesenkt wird.

Wie zuvor angeführt, wird durch die gezielte Zuschaltung bzw. Vorschaltung der Spitzenlastadsorptionseinrichtung 3, welche im Falle des Auftretens bzw. der Erfassung eines zeitlich begrenzten bzw. spontan auftretenden Konzentrationsanstiegs der Verunreinigungen durchgeführt wird, eine nachhaltige Verringerung der mit dem Konzentrationsanstieg einhergehenden Belastung des zu behandelnden bzw. aufzureinigenden Wassers mit den Verunreinigungen erreicht, so dass nach Durchlaufen der zugeschalteten Spitzenlastadsorptionseinrichtung 3 die Konzentration der Verunreinigungen insbesondere unterhalb des vorgegebenen Einlasskonzentrationsgrenzwertes abgesenkt wird, wobei es im Rahmen der erfindungsgemäßen Konzeption zudem gewährleistet ist, dass durch die für den Fall stromabwärts zu der Spitzenlastadsorptionseinrichtung 3 angeordnete Hauptadsorptionseinrichtung 2 die Schadstoffbelastung in dem behandelten bzw. aufgereinigten Wasser B weiter verringert wird, so dass nach Durchlaufen der Hauptadsorptionseinrichtung 2 die Konzentration der Verunreinigungen insgesamt unterhalb des vorgegebenen Auslassgrenzwertes verringert wird, so dass insgesamt auch bei Auftreten des in Rede stehenden Konzentrationsanstiegs eine effektive und sichere Aufreinigung des zugrundeliegenden Wasser gewährleistet ist.

Was in diesem Zusammenhang den vorgegebenen Einlasskonzentrationsgrenzwert (d. h. insbesondere der Konzentrationswert am Einlass bzw. Eingang der Wasseraufbereitungsanlage 1 bzw. Spitzenlastadsorptionseinrichtung 3) einerseits und den vorgegebenen Auslasskonzentrationsgrenzwert (d. h. insbesondere der Konzentrationswert der Verunreinigungen am Auslass bzw. Ausgang der Wasseraufbereitungsanlage 1 bzw. der Hauptadsorptionseinrichtung 2) andererseits anbelangt, so kann es sich im Rahmen des erfindungsgemäßen Verfahrens insbesondere derart verhalten, dass der Auslasskonzentrationsgrenzwert im Vergleich zu dem vorgegebenen Einlasskonzentrationsgrenzwert kleiner ausgewählt wird. Insbesondere kann der Auslasskonzentrationsgrenzwert in Anlehnung an diesbezügliche Vorgaben bzw. Anforderungen an Trinkwasser bzw. Rohwasser vorgegeben werden. Der Auslasskonzentrationsgrenzwert kann beispielsweise unter Hinzuziehung sogenannter gesundheitlicher Orientierungswerte (GOW) vorgegeben werden, und zwar insbesondere in Abhängigkeit von dem jeweils zu entfernenden Verunreinigungen. Insbesondere kann der vorgegebene Auslassgrenzwert auch unter Berücksichtigung gesetzlich vorgeschriebener Grenzwerte sowie sogenannter Zielwerte bestimmt werden. Beispielsweise kann der Auslassgrenzwert in Bezug auf Pestizide, insbesondere Metaldehyd, in Anlehnung an den gesetzlich erlaubten Grenzwert (< 0,1 µg/l) bzw. den diesbezüglichen Zielwert (< 0,05 µg/l) vorgegeben werden. Auf dieser Basis ist insgesamt eine flexible bzw. maßgeschneiderte Handhabung in Bezug auf die zu entfernenden Verunreinigungen sowie die gewünschte bzw. geforderte Qualität des behandelten bzw. aufgereinigten Wassers B möglich. Demgegenüber kann der vorgegebene Einlasskonzentrationsgrenzwert, insbesondere unter Einbezug des zugrundeliegenden Konzentrationsanstiegs sowie in Abhängigkeit von den zu entfernenden Verunreinigungen ausgewählt bzw. vorgegeben werden. Hierzu kann auch auf nachfolgende Ausführungen verwiesen werden. Erfindungsgemäß hat es sich als besonders vorteilhaft erwiesen, wenn die Hauptadsorptionseinrichtung 2 eine partikelförmige Aktivkohle in Form einer kornförmigen Aktivkohle, bevorzugt einer kugelförmigen Aktivkohle, aufweist. Erfindungsgemäß weist die Hauptadsorptionseinrichtung 2 einen Festbettfilter bzw. ein Festbett auf Basis partikelförmiger Aktivkohle, vorzugsweise auf Basis kornförmiger Aktivkohle, bevorzugt auf Basis kugelförmiger Aktivkohle, in loser Schüttung der partikelförmigen Aktivkohle auf.

Gleichermaßen ist es erfindungsgemäß von Vorteil, wenn die Spitzenlastadsorptionseinrichtung 3 eine partikelförmige Aktivkohle in Form einer kornförmigen Aktivkohle, bevorzugt einer kugelförmigen Aktivkohle, aufweist.

Erfindungsgemäß weist die Spitzenlastadsorptionseinrichtung 3 einen Festbettfilter und/oder ein Festbett auf Basis partikelförmiger Aktivkohle, vorzugsweise auf Basis kornförmiger Aktivkohle, bevorzugt auf Basis kugelförmiger Aktivkohle, in loser Schüttung der partikelförmigen Aktivkohle auf.

Durch die Verwendung der vorgenannten Adsorptionsmaterialien werden besonders gute Aufreinigungs- bzw. Adsorptionsergebnisse hinsichtlich der zu entfernenden Verunreinigungen erreicht, wobei gleichermaßen das Strömungsverhalten des zu behandelnden bzw. aufzureinigenden Wasser A in den entsprechenden Einrichtungen 2, 3 weiterführend verbessert ist. Erfindungsgemäß ist es in diesem Zusammenhang insbesondere vorgesehen, dass das zu behandelnde bzw. aufzureinigende Wasser A bei Durchführung des erfindungsgemäßen Verfahrens jeweils durch eine lose Schüttung der vorgenannten Adsorptionsmaterialien geführt bzw. geleitet wird.

Was die im Rahmen des erfindungsgemäßen Verfahrens eingesetzte Spitzenlastadsorptionseinrichtung 3 weiterhin anbelangt, so ist hierzu insbesondere auf Folgendes abzustellen:
Erfindungsgemäß ist es vorgesehen, dass die Spitzenlastadsorptionseinrichtung 3 ein geringeres Festbettfiltervolumen V_{SLA}, insbesondere ein geringeres Volumen der Schüttung, der partikelförmigen Aktivkohle, vorzugsweise der kornförmigen Aktivkohle, bevorzugt der kugelförmigen Aktivkohle, und/oder eine geringere Menge der partikelförmigen Aktivkohle, vorzugsweise der kornförmigen Aktivkohle, bevorzugt der kugelförmigen Aktivkohle, als die Hauptadsorptionseinrichtung 2 aufweist.
- Zudem kann die Spitzenlastadsorptionseinrichtung 3 ein Festbettfiltervolumen V_{SLA}, insbesondere ein Volumen der Schüttung, der partikelförmigen Aktivkohle, vorzugsweise der kornförmigen Aktivkohle, bevorzugt der kugelförmigen Aktivkohle, von mindestens 0,01 m³, insbesondere mindestens 0,1 m³, vorzugsweise mindestens 0,5 m³, bevorzugt mindestens 1 m³, besonders bevorzugt mindestens 5 m³, ganz besonders bevorzugt mindestens 10 m³, weiter bevorzugt mindestens 15 m³, aufweisen.
- Weiterhin kann die Spitzenlastadsorptionseinrichtung 3 ein Festbettfiltervolumen V_{SLA}, insbesondere ein Volumen der Schüttung, der partikelförmigen Aktivkohle, vorzugsweise der kornförmigen Aktivkohle, bevorzugt der kugelförmigen Aktivkohle, in einem Bereich von 0,01 m³ bis 750 m³, insbesondere in einem Bereich von 0,1 m³ bis 600 m³, vorzugsweise in einem Bereich von 0,5 m³ bis 500 m³, bevorzugt in einem Bereich von 1 m³ bis 300 m³, besonders bevorzugt in einem Bereich von 5 m³ bis 200 m³, ganz besonders bevorzugt in einem Bereich von 10 m³ bis 100 m³, weiter bevorzugt in einem Bereich von 15 m³ bis 150 m³, aufweisen.

Was zudem die im Rahmen des erfindungsgemäßen Verfahrens eingesetzte Hauptadsorptionseinrichtung 2 anbelangt, so kann hierzu insbesondere auf Folgendes abgestellt werden:
- So kann es erfindungsgemäß vorgesehen sein, dass die Hauptadsorptionseinrichtung 2 ein Festbettfiltervolumen V_{HA}, insbesondere ein Volumen der Schüttung, der partikelförmigen Aktivkohle, vorzugsweise der kornförmigen Aktivkohle, bevorzugt der kugelförmigen Aktivkohle, von mindestens 1 m³, insbesondere mindestens 5 m³, vorzugsweise mindestens 10 m³, bevorzugt mindestens 15 m³, besonders bevorzugt mindestens 20 m³, aufweist.
- Insbesondere kann die Hauptadsorptionseinrichtung 2 ein Festbettfiltervolumen V_{HA}, insbesondere ein Volumen der Schüttung, der partikelförmigen Aktivkohle, vorzugsweise der kornförmigen Aktivkohle, bevorzugt der kugelförmigen Aktivkohle, in einem Bereich von 1 m³ bis 1.500 m³, insbesondere in einem Bereich von 5 m³ bis 1.000 m³, vorzugsweise in einem Bereich von 10 m³ bis 800 m³, bevorzugt in einem Bereich von 15 m³ bis 600 m³, besonders bevorzugt in einem Bereich von 20 m³ bis 400 m³, aufweisen.

Im Hinblick auf eine effiziente adsorptive Entfernung der zugrundeliegenden Verunreinigungen, insbesondere auch im Hinblick auf die Entfernung der einem zeitlich begrenzten bzw. spontan auftretenden Konzentrationsanstieg zugrundeliegenden Verunreinigungen kann es insbesondere vorgesehen sein, dass das Verhältnis des Festbettfiltervolumens V_{HA}, insbesondere des Volumens der Schüttung, der partikelförmigen Aktivkohle, vorzugsweise der kornförmigen Aktivkohle, bevorzugt der kugelförmigen Aktivkohle, der Hauptadsorptionseinrichtung 2 einerseits zu dem Festbettfiltervolumen V_{SLA}, vorzugsweise Volumen der Schüttung, der partikelförmigen Aktivkohle, vorzugsweise der kornförmigen Aktivkohle, bevorzugt der kugelförmigen Aktivkohle, der Spitzenlastadsorptionseinrichtung 3 andererseits mindestens 1,2 : 1, besonders bevorzugt mindestens 1,4 : 1, ganz besonders bevorzugt mindestens 1,6 : 1, beträgt.

Insbesondere kann das Verhältnis des Festbettfiltervolumens V_{HA}, insbesondere des Volumens der Schüttung, der partikelförmigen Aktivkohle, vorzugsweise der kornförmigen Aktivkohle, bevorzugt der kugelförmigen Aktivkohle, der Hauptadsorptionseinrichtung 2 einerseits zu dem Festbettfiltervolumen V_{SLA}, vorzugsweise Volumen der Schüttung, der partikelförmigen Aktivkohle, vorzugsweise der kornförmigen Aktivkohle, bevorzugt der kugelförmigen Aktivkohle, der Spitzenlastadsorptionseinrichtung 3 andererseits in einem Bereich von 1,2 : 1 bis 30 : 1, besonders bevorzugt in einem Bereich von 1,4 : 1 bis 20 : 1, ganz besonders bevorzugt in einem Bereich von 1,6: 1 bis 10: 1, weiter bevorzugt in einem Bereich von 1,8 : 1 bis 5 : 1, liegen.

Erfindungsgemäß kann es gleichermaßen vorgesehen sein, dass die Spitzenlastadsorptionseinrichtung 3 eine geringere Menge, insbesondere Gewichtsmenge, an partikelförmiger Aktivkohle, vorzugsweise kornförmiger Aktivkohle, bevorzugt kugelförmiger Aktivkohle, als die Hauptadsorptionseinrichtung 2 aufweist bzw. dass die Hauptadsorptionseinrichtung 2 eine größere Menge, insbesondere Gewichtsmenge, an partikelförmiger Aktivkohle, vorzugsweise kornförmiger Aktivkohle, bevorzugt kugelförmiger Aktivkohle, als die Spitzenlastadsorptionseinrichtung 3 aufweist.

In diesem Zusammenhang kann das Verhältnis der Menge, insbesondere Gewichtsmenge, an partikelförmiger Aktivkohle, vorzugsweise kornförmiger Aktivkohle, bevorzugt kugelförmiger Aktivkohle, der Hauptadsorptionseinrichtung 2 einerseits zu der Menge, insbesondere Gewichtsmenge, an partikelförmiger Aktivkohle, vorzugsweise kornförmiger Aktivkohle, bevorzugt kugelförmiger Aktivkohle, der Spitzenlastadsorptionseinrichtung 3 andererseits mindestens 1 : 1, insbesondere mindestens 1,05:1, vorzugsweise mindestens 1,1:1, bevorzugt mindestens 1,2 : 1, besonders bevorzugt mindestens 1,4 : 1, ganz besonders bevorzugt mindestens 1,6 : 1, betragen.

Insbesondere kann das Verhältnis der Menge, insbesondere Gewichtsmenge, an partikelförmiger Aktivkohle, vorzugsweise kornförmiger Aktivkohle, bevorzugt kugelförmiger Aktivkohle, der Hauptadsorptionseinrichtung 2 einerseits zu der Menge, insbesondere Gewichtsmenge, an partikelförmiger Aktivkohle, vorzugsweise kornförmiger Aktivkohle, bevorzugt kugelförmiger Aktivkohle, der Spitzenlastadsorptionseinrichtung 3 andererseits in einem Bereich von 1,05 : 1 bis 100 : 1, insbesondere in einem Bereich von 1,1 : 1 bis 50 : 1, vorzugsweise in einem Bereich von 1,2 : 1 bis 30 : 1, bevorzugt in einem Bereich von 1,4 : 1 bis 20 : 1, besonders bevorzugt in einem Bereich von 1,6 : 1 bis 10 : 1, ganz besonders bevorzugt in einem Bereich von 1,8 : 1 bis 5 : 1, liegen.

Im Allgemeinen kann die Spitzenlastadsorptionseinrichtung 3 zudem eine geringere Gesamtfilterkapazität, insbesondere Gesamtadsorptionskapazität, als die Hauptadsorptionseinrichtung 2 aufweisen. Mit anderen Worten kann somit die Hauptadsorptionseinrichtung 2 eine größere Gesamtfilterkapazität, insbesondere Gesamtadsorptionskapazität, als die Spitzenlastadsorptionseinrichtung 3 aufweisen.

Diesbezüglich kann das Verhältnis der Gesamtfilterkapazität, insbesondere Gesamtadsorptionskapazität, der Hauptadsorptionseinrichtung 2 einerseits zu der Gesamtfilterkapazität, insbesondere Gesamtadsorptionskapazität, der Spitzenlastadsorptionseinrichtung 3 andererseits mindestens 1 : 1, insbesondere mindestens 1,1 : 1, vorzugsweise mindestens 1,2 : 1, bevorzugt mindestens 1,3 : 1, besonders bevorzugt mindestens 1,5 : 1, betragen.

In diesem Zusammenhang kann das Verhältnis der Gesamtfilterkapazität, insbesondere Gesamtadsorptionskapazität, der Hauptadsorptionseinrichtung 2 einerseits zu der Gesamtfilterkapazität, insbesondere Gesamtadsorptionskapazität, der Spitzenlastadsorptionseinrichtung 3 andererseits in einem Bereich von 1,1:1 bis 150 : 1, insbesondere in einem Bereich von 1,2 : 1 bis 100 : 1, vorzugsweise in einem Bereich von 1,3 : 1 bis 50 : 1, bevorzugt in einem Bereich von 1,5 : 1 bis 25 : 1, liegen.

Folglich kann die erfindungsgemäß eingesetzte Spitzenlastadsorptionseinrichtung 3 insgesamt kleiner dimensioniert werden als die Hauptadsorptionseinrichtung 2, was insbesondere auf der überraschenden Erkenntnis der Anmelderin beruht, dass hohe Eingangskonzentrationen - wie sie bei Überschreiten des vorgegebenen Einlasskonzentrationsgrenzwertes für die der Hauptadsorptionseinrichtung 2 zugeschalteten Spitzenlastadsorptionseinrichtung 3 vorliegen - zu hohen Beladungskapazitäten des Adsorptionsmaterials führen, so dass auf dieser Basis entsprechend hohe Entfernungsraten bei relativ kleiner Dimensionierung der Spitzenlastadsorptionseinrichtung 3 realisiert werden können.

Im Rahmen des erfindungsgemäßen Verfahrens verhält es sich zudem derart, dass die Verweilzeit des zu behandelnden und aufzureinigenden Wassers A in der Spitzenlastadsorptionseinrichtung 3 kleiner ist als in der Hauptadsorptionseinrichtung 2 bzw. dass die Verweilzeit des zu behandelnden und aufzureinigenden Wassers A in der Spitzenlastadsorptionseinrichtung 3 auf einen kleineren Wert als in der Hauptadsorptionseinrichtung 2 eingestellt wird. Insbesondere kann es vorgesehen sein, dass die Verweilzeit des zu behandelnden und aufzureinigenden Wassers A in der Hauptadsorptionseinrichtung 2 größer ist als in der Spitzenlastadsorptionseinrichtung 3 bzw. dass die Verweilzeit des zu behandelnden und aufzureinigenden Wassers A in der Hauptadsorptionseinrichtung 2 auf einen größeren Wert als in der Spitzenlastadsorptionseinrichtung 3 eingestellt wird.

Diesbezüglich kann die Verweilzeit des zu behandelnden und aufzureinigenden Wassers A in der Spitzenlastadsorptionseinrichtung 3 in einem Bereich von 1 s bis 420 min, insbesondere 5 s bis 240 min, vorzugsweise 20 s bis 120 min, bevorzugt 1 min bis 90 min, besonders bevorzugt 2 min bis 45 min, liegen bzw. auf die vorgenannten Werte eingestellt werden.

In diesem Zusammenhang kann die Verweilzeit des zu behandelnden und aufzureinigenden Wassers A in der Hauptadsorptionseinrichtung 2 in einem Bereich von 10 s bis 600 min, insbesondere in einem Bereich 30 s bis 300 min, vorzugsweise in einem Bereich von 1 min bis 180 min, bevorzugt in einem Bereich von 2 min bis 120 min, besonders bevorzugt in einem Bereich von 4 min bis 90 min, liegen bzw. auf die vorgenannten Werte eingestellt werden.

Erfindungsgemäß wird das Verhältnis der Verweilzeit des zu behandelnden und aufzureinigenden Wassers A in der Hauptadsorptionseinrichtung 2 zu der Verweilzeit des zu behandelnden und aufzureinigenden Wassers A in der Spitzenlastadsorptionseinrichtung 3 auf einen Wert von mindestens 1,2 : 1, besonders bevorzugt mindestens 1,4 : 1, ganz besonders bevorzugt mindestens 1,6 : 1, eingestellt .

Insbesondere kann das Verhältnis der Verweilzeit des zu behandelnden und aufzureinigenden Wassers A in der Hauptadsorptionseinrichtung 2 zu der Verweilzeit des zu behandelnden und aufzureinigenden Wassers A in der Spitzenlastadsorptionseinrichtung 3 in einem Bereich von 1,2 : 1 bis 10 :1, besonders bevorzugt in einem Bereich von 1,4 : 1 bis 5 :1, ganz besonders bevorzugt in einem Bereich von 1,6 : 1 bis 2 :1, liegen bzw. auf die vorgenannten Werte eingestellt werden.

Die vorgenannten Maßnahmen tragen insbesondere der Funktion der Spitzenlastadsorptionseinrichtung 3 im Hinblick auf die Abschwächung bzw. Vergleichmäßigung des Konzentrationsanstiegs der Verunreinigungen weiterführend Rechnung. Durch die vorgenannten Maßnahmen wird zudem die Aufreinigung des zugrundeliegenden Wassers insgesamt weiterführend verbessert, insbesondere auch im Hinblick auf den Erhalt eines vorgegebenen Auslasskonzentrationsgrenzwertes der Verunreinigungen.

Erfindungsgemäß können zudem bevorzugte bzw. die nachfolgend angeführten Betriebs- bzw. Standzeiten erreicht werden:
Die dem erfindungsgemäßen Verfahren zugrundeliegende Wasseraufreinigungsanlage 1 kann in diesem Zusammenhang eine Standzeit und/oder ein Bettvolumen (BV) von mindestens 1.000 BV, insbesondere mindestens 5.000 BV, vorzugsweise mindestens 10.000 BV, bevorzugt mindestens 15.000 BV, besonders bevorzugt mindestens 20.000 BV, aufweisen, berechnet als Quotient aus dem Volumen des behandelten und aufgereinigten Wassers (V_{H2O}) einerseits und der Summe des Festbettfiltervolumens (V_{SLA}), insbesondere des Volumens der Schüttung, des partikelförmigen Adsorptionsmaterials der Spitzenlastadsorptionseinrichtung 3 und des Festbettfiltervolumens (V_{HA}), insbesondere des Volumens der Schüttung, des partikelförmigen Adsorptionsmaterials der Hauptadsorptionseinrichtung 2 andererseits [BV = V_{H2O[m³]} / (V_{SLA[m³]} + V_{HA[m³]})].

In diesem Zusammenhang kann die Wasseraufreinigungsanlage 1 eine Standzeit und/oder ein Bettvolumen (BV) in einem Bereich von 1.000 BV bis 500.000 BV, insbesondere in einem Bereich von 5.000 BV bis 200.000 BV, vorzugsweise in einem Bereich von 10.000 BV bis 100.000 BV, bevorzugt in einem Bereich von 15.000 BV bis 50.000 BV, besonders bevorzugt in einem Bereich von 20.000 BV bis 40.000 BV, aufweisen, berechnet als Quotient aus dem Volumen des behandelten und aufgereinigten Wassers (V_{H2O}) einerseits und der Summe des Festbettfiltervolumens (V_{SLA}), insbesondere des Volumens der Schüttung, des partikelförmigen Adsorptionsmaterials der Spitzenlastadsorptionseinrichtung 3 und des Festbettfiltervolumens (V_{HA}), insbesondere des Volumens der Schüttung, des partikelförmigen Adsorptionsmaterials der Hauptadsorptionseinrichtung 2 andererseits [BV = V_{H2O[m³]} / (V_{SLA[m³]} + V_{HA[m³]})].

Das Festbettfiltervolumen V_{SLA} der Spitzenlastadsorptionseinrichtung 3 bzw. das Festbettfiltervolumen V_{HA} der Hauptadsorptionseinrichtung 2 beziehen sich dabei, wie zuvor angeführt, insbesondere auf das jeweilige Festbettfiltervolumen, insbesondere das Volumen der Schüttung, des jeweiligen partikelförmigen Adsorptionsmaterials in Form der partikelförmigen Aktivkohle, vorzugsweise der kornförmigen Aktivkohle, bevorzugt der kugelförmigen Aktivkohle.

Auf Basis der erfindungsgemäßen Konzeption resultiert dabei im Vergleich zu Systemen des Standes der Technik eine signifikante Verlängerung der Standzeit bzw. der Einsatz- bzw. Betriebsdauern der zugrundeliegenden Wasseraufreinigungsanlage 1, was mit einer hohen Wirtschaftlichkeit der erfindungsgemäßen Konzeption einhergeht. Insbesondere können die jeweiligen Adsorptionsmaterialien, wie zuvor angeführt, hinsichtlich ihrer Adsorptionskapazität optimal ausgenutzt werden, da auch bei hoher Beladung der Adsorbentien mit den Verunreinigungen die Gefahr von Durchbrüchen deutlich verringert wird und gleichermaßen die vorgegebenen Auslasskonzentrationsgrenzwerte erreicht werden.

Was das erfindungsgemäße Verfahren weiterhin anbelangt, so ist es bevorzugt, dass die Wasseraufreinigungsanlage 1 zumindest im Wesentlichen kontinuierlich betrieben bzw. dass das zu behandelnde bzw. aufzureinigende Wasser A zumindest im Wesentlichen kontinuierlich durch die Wasseraufreinigungsanlage 1, insbesondere die Spitzenlastadsorptionseinrichtung 3 und/oder die Hauptadsorptionseinrichtung 2, geführt bzw. geleitet wird. Hierdurch können insgesamt hohe Durchsätze bei hervorragender Aufreinigungseffizienz erreicht werden.

In diesem Zusammenhang verhält es sich erfindungsgemäß insbesondere derart, dass die Behandlung bzw. Aufreinigung des mit Verunreinigungen belasteten Wassers A zumindest im Wesentlichen kontinuierlich durchgeführt wird.

Insbesondere wird das zu behandelnde bzw. aufzureinigende Wasser A zumindest im Wesentlichen kontinuierlich der Wasseraufreinigungsanlage 1 zugeführt. Insbesondere wird zudem das behandelte bzw. aufgereinigte Wasser B, insbesondere das Trinkwasser und/oder Brauchwasser, zumindest im Wesentlichen kontinuierlich aus der Wasseraufreinigungsanlage 1 abgeführt. Folglich resultiert in der erfindungsgemäßen Wasseraufreinigungsanlage 1 insbesondere ein kontinuierlicher Strom, insbesondere Volumenstrom, bzw. Fluss des eingesetzten Wassers.

Auch vor diesem Hintergrund kann die erfindungsgemäße Verfahrensführung dahingehend maßgeschneidert werden, dass der Volumenstrom bzw. der Durchsatz des zu behandelnden bzw. aufzureinigenden Wassers A bzw. des behandelten bzw. aufgereinigten Wassers B (wobei die entsprechenden Volumenströme aufgrund des zumindest im Wesentlichen verlustfreien Betriebs der Anlage zumindest im Wesentlichen gleich groß sind) in weiten Bereichen variieren, so dass das erfindungsgemäße Verfahren auch von daher individuell ausgerichtet werden kann:
Insbesondere kann die Wasseraufreinigungsanlage 1 mit einem Volumenstrom, insbesondere Volumenstrom an zu behandelndem bzw. aufzureinigendem Wasser A und/oder Volumenstrom an behandeltem bzw. aufgereinigtem Wasser B, in einem Bereich von 1 m³/h bis 50.000 m³/h, insbesondere in einem Bereich von 5 m³/h bis 30.000 m³/h, vorzugsweise in einem Bereich von 10 m³/h bis 10.000 m³/h, bevorzugt in einem Bereich von 50 m³/h bis 5.000 m³/h, besonders bevorzugt in einem Bereich von 100 m³/h bis 3.000 m³/h, betrieben werden.

Insbesondere verhält es sich im Rahmen des erfindungsgemäßen Verfahrens derart, dass das zu behandelnde und aufzureinigende Wasser A durch und/oder in die Spitzenlastadsorptionseinrichtung 3 geleitet bzw. geführt wird (und zwar für den Fall der Zuschaltung der Spitzenlastadsorptionseinrichtung 3 bzw. der Vorschaltung vor die Hauptadsorptionseinrichtung 2 bei Überschreiten des vorgegebenen Konzentrationsgrenzwertes, insbesondere Eingangskonzentrationsgrenzwertes).

Gleichermaßen verhält es sich erfindungsgemäß insbesondere derart, dass das zu behandelnde und aufzureinigende Wasser A durch und/oder in die Hauptadsorptionseinrichtung 2 geleitet bzw. geführt wird (und zwar sowohl für den Fall der Zuschaltung der Spitzenlastadsorptionseinrichtung 3 (zweistufiger Adsorptionsprozess) als auch für den Fall des alleinigen Betriebs der Hauptadsorptionseinrichtung 2 bei Unterschreiten bzw. bei Nichterreichen des vorgegebenen Adsorptionsgrenzwertes, insbesondere Einlasskonzentrationsgrenzwertes (einstufiger Adsorptionsprozess)).

Folglich verhält es sich erfindungsgemäß mit anderen Worten insbesondere derart, dass bei Überschreitung des vorgegebenen Einlasskonzentrationsgrenzwertes das zu behandelnde und aufzureinigende Wasser A zumindest teilweise, vorzugsweise vollständig, zunächst durch und/oder in die Spitzenlastadsorptionseinrichtung 3 geleitet bzw. geführt und anschließend durch und/oder in die Hauptadsorptionseinrichtung 2 geleitet bzw. geführt wird.

Insbesondere wird - mit anderen Worten - bei Überschreitung des vorgegebenen Einlasskonzentrationsgrenzwertes das zu behandelnde und aufzureinigende Wasser A zumindest teilweise, vorzugsweise vollständig, zunächst durch und/oder in die Spitzenlastadsorptionseinrichtung 3 geleitet bzw. geführt.

Erfindungsgemäß wird somit insbesondere derart vorgegangen, dass bei Überschreitung des vorgegebenen Einlasskonzentrationsgrenzwertes das zu behandelnde und aufzureinigende Wasser A zumindest teilweise, vorzugsweise vollständig, zunächst der Spitzenlastadsorptionseinrichtung 3 zugeführt und in der Spitzenlastadsorptionseinrichtung 3 behandelt bzw. aufgereinigt wird und nachfolgend der Hauptadsorptionseinrichtung 2 zugeführt und in der Hauptadsorptionseinrichtung 2 behandelt bzw. aufgereinigt wird.

Demgegenüber verhält es sich bei Unterschreiten bzw. Nichterreichen des vorgegebenen Einlasskonzentrationswertes insbesondere derart, dass das zu behandelnde bzw. aufzureinigende Wasser A, insbesondere unter Umgehung bzw. Auslassen der Spitzenlastadsorptionseinrichtung 3 unmittelbar in der Hauptadsorptionseinrichtung 2 behandelt bzw. aufgereinigt wird.

Gemäß einer ersten, erfindungsgemäß bevorzugten Ausführungsform kann insbesondere derart vorgegangen werden, dass bei Überschreitung des vorgegebenen Einlasskonzentrationsgrenzwertes der Gesamtstrom des zu behandelnden und aufzureinigenden Wassers A und/oder das zu behandelnde und aufzureinigende Wassers A zunächst der Spitzenlastadsorptionseinrichtung 3 zugeführt und das zu behandelnde und aufzureinigende Wassers A in der Spitzenlastadsorptionseinrichtung 3 behandelt bzw. aufgereinigt wird und nachfolgend der Hauptadsorptionseinrichtung 2 zugeführt und in der Hauptadsorptionseinrichtung 2 behandelt bzw. aufgereinigt wird. In erfindungsgemäß bevorzugter Weise wird somit bei Zu- bzw. Vorschaltung der Spitzenlastadsorptionseinrichtung 3 der gesamte Volumenstrom des zu behandelnden bzw. aufzureinigenden Wassers B über bzw. durch die Spitzenlastadsorptionseinrichtung 3 geleitet, so dass auf dieser Basis eine möglichst effiziente Entfernung bzw. Verringerung der mit dem Konzentrationsanstieg einhergehenden erhöhten Menge an Verunreinigungen gewährleistet wird.

Gemäß einer weiteren erfindungsgemäßen Ausführungsform kann es darüber hinaus auch vorgesehen sein, dass bei Überschreitung des vorgegebenen Einlasskonzentrationsgrenzwertes der Gesamtstrom des zu behandelnden und aufzureinigenden Wasser A aufgeteilt wird derart, dass ein erster Teilstrom des zu behandelnden und aufzureinigenden Wassers A zunächst der Spitzenlastadsorptionseinrichtung 3 zugeführt und in der Spitzenlastadsorptionseinrichtung 3 behandelt bzw. aufgereinigt und nachfolgend der Hauptadsorptionseinrichtung 2 zugeführt und in der Hauptadsorptionseinrichtung 2 behandelt bzw. aufgereinigt wird und dass ein zweiter Teilstrom des zu behandelnden und aufzureinigenden Wassers A der Hauptadsorptionseinrichtung 2 unmittelbar und/oder unter Umgehung und/oder Auslassen der Spitzenlastadsorptionseinrichtung 3 zugeführt und in der Hauptadsorptionseinrichtung 2 behandelt bzw. aufgereinigt wird.

Diesbezüglich kann der erste Teilstrom und der zweite Teilstrom stromaufwärts zur Hauptadsorptionseinrichtung 2 zusammengeführt bzw. vereinigt werden. Insbesondere kann der erste Teilstrom dem zweiten Teilstrom stromaufwärts zur Hauptadsorptionseinrichtung 2 zugeführt werden. Für diesen Fall wird somit die Hauptadsorptionseinrichtung 2 mit dem Gesamtstrom der zuvor vereinigten Teilströme betrieben bzw. befahren.

Grundsätzlich ist es jedoch auch möglich, dass der erste Teilstrom und der zweite Teilstrom stromabwärts zur Hauptadsorptionseinrichtung 2 zusammengeführt bzw. vereinigt werden. Dementsprechend kann der erste Teilstrom dem zweiten Teilstrom stromabwärts zur Hauptadsorptionseinrichtung 2 zugeführt werden.

Was die zuvor genannten Teilströme insgesamt anbelangt, so kann der Anteil, insbesondere Volumenstromanteil, des zweiten Teilstroms am Gesamtstrom mindestens 50 %, insbesondere mindestens 60 %, vorzugsweise mindestens 70 %, bevorzugt mindestens 80 %, besonders bevorzugt mindestens 90 %, ganz besonders bevorzugt mindestens 95 %, bezogen auf den Gesamtstrom, betragen.

Gemäß dem erfindungsgemäßen Verfahren ist es insbesondere vorgesehen, dass bei Unterschreiten bzw. Vorliegen bzw. Nichterreichen des vorgegebenen Einlasskonzentrationsgrenzwertes das zu behandelnde und aufzureinigende Wassers A zumindest im Wesentlichen vollständig der Hauptadsorptionseinrichtung 2 unmittelbar und/oder unter Umgehung und/oder Auslassen der Spitzenlastadsorptionseinrichtung 3 zugeführt und in der Hauptadsorptionseinrichtung 2 behandelt bzw. aufgereinigt wird, wie zuvor angeführt.

Mit anderen Worten verhält es erfindungsgemäß insbesondere derart, dass bei zuvor zugeschalteter Spitzenlastadsorptionseinrichtung 3 bei Unterschreiten des in Rede stehenden Grenzwertes die Spitzenlastadsorptionseinrichtung 3 wieder abgeschaltet wird, so dass der Gesamtstrom des zu behandelnden bzw. aufzureinigenden Wassers A nunmehr unter Umgehung der Spitzenlastadsorptionseinrichtung 3 durch die Hauptadsorptionseinrichtung 2 geführt wird. Erfindungsgemäß wird somit auf einen temporären bzw. zeitlich begrenzten Einsatz der Spitzenlastadsorptionseinrichtung 3 abgestellt, welche nämlich maßgeblich bei Vorliegen eines Konzentrationsanstiegs der Verunreinigungen bzw. bei Überschreiten des in Rede stehenden Einlasskonzentrationsgrenzwertes in Betrieb genommen und der Hauptadsorptionseinrichtung 2 vorgeschaltet wird. Durch den lediglich temporären bzw. zeitlich begrenzten Einsatz der Spitzenlastadsorptionseinrichtung 3, welcher sozusagen von dem Vorliegen des Konzentrationsanstiegs abhängt, wird deren Adsorptions- bzw. Filterkapazität folglich nicht unnötig verbraucht. Zudem wird aufgrund dieser erfindungsgemäßen Konzeption, wie zuvor angeführt, auch die Gefahr einer unerwünschten Desorption der Verunreinigungen aus der Spitzenlastadsorptionseinrichtung 3 vermieden, da die Spitzenlastadsorptionseinrichtung 3 nur bei entsprechend hohen Konzentrationen an Verunreinigungen betrieben bzw. befahren wird, so dass in der Spitzenlastadsorptionseinrichtung 3 kein die Desorption hervorrufender Konzentrationsabfall in dem zu behandelnden bzw. aufzureinigenden Wasser A vorliegt.

Erfindungsgemäß kann es auch vorgesehen sein, dass die Wasseraufreinigungsanlage 1 zusätzlich zur Hauptadsorptionseinrichtung 2 und/oder Spitzenlastadsorptionseinrichtung 3 mindestens eine weitere Aufbereitungs- und/oder Behandlungseinrichtung, insbesondere eine Mehrzahl an weiteren Aufbereitungs- bzw. Behandlungseinrichtungen, aufweist. Diesbezüglich kann die weitere Aufbereitungs- bzw. Behandlungseinrichtung in Form einer mechanisch, physikalisch, chemisch und/oder biologisch basierenden und/oder funktionierenden Aufbereitungs-und/oder Behandlungseinrichtung ausgebildet werden bzw. vorliegen. Insbesondere werden die weiteren Aufbereitungs- bzw. Behandlungseinrichtungen der Adsorptionseinrichtung 2 bzw. der Spitzenlastadsorptionseinrichtung 3 vorgeschaltete bzw. stromaufwärts hierzu angeordnet.

Erfindungsgemäß kann es sich hinsichtlich der Maßnahme, wonach die Wasseraufreinigungsanlage 1 zusätzlich zur Hauptadsorptionseinrichtung 2 bzw. zusätzlich zur Spitzenlastadsorptionseinrichtung 3 mindestens eine weitere Aufbereitungs- bzw. Behandlungseinrichtung aufweist, insbesondere derart verhalten, dass die weitere Aufbereitungs- und/oder Behandlungseinrichtung mindestens eine insbesondere mechanischen Vor- und/oder Grobfiltereinrichtung und/oder mindestens eine Flockungs- und/oder Sedimentationseinrichtung und/oder mindestens eine insbesondere mechanischen Feinfiltereinrichtung und/oder mindestens eine Grundadsorptionseinrichtung aufweist oder hieraus besteht.

Insbesondere kann es gemäß einer bevorzugten Ausführungsform vorgesehen sein, dass die weitere Aufbereitungs- und/oder Behandlungseinrichtung
(i) mindestens eine insbesondere mechanische Vor- und/oder Grobfiltereinrichtung,
(ii) mindestens eine Flockungs- und/oder Sedimentationseinrichtung,
(iii) mindestens eine insbesondere mechanische Feinfiltereinrichtung und
(iv) gegebenenfalls mindestens eine Grundadsorptionseinrichtung
aufweist, insbesondere in der vorstehenden Reihenfolge (i) bis (iv), bezogen auf die Verfahrens- und/oder Prozessrichtung.

In diesem Zusammenhang kann es somit vorgesehen sein, dass die Flockungs-und/oder Sedimentationsvorrichtung stromabwärts zu der Vor- und/oder Grobfiltervorrichtung angeordnet wird. Gleichermaßen kann es vorgesehen sein, dass die Feinfiltervorrichtung stromabwärts zu der Vor- und/oder Grobfiltervorrichtung und/oder der Flockungs- und/oder Sedimentationsvorrichtung angeordnet wird. Schließlich ist es erfindungsgemäß auch möglich, dass die Grundadsorptionsvorrichtung stromabwärts zu der Vor- und/oder Grobfiltervorrichtung und/oder der Flockungs- und/oder Sedimentationsvorrichtung und/oder der Feinfiltervorrichtung angeordnet wird.

Durch die Vor- bzw. Grobfiltervorrichtung kann insbesondere eine mechanische Vor- bzw. Aufreinigung des zu behandelnden bzw. aufzureinigenden Wassers A durchgeführt werden, wobei beispielsweise relativ große und nicht gelöste Bestandteile des zu behandelnden bzw. aufzureinigenden Wassers A oder dergleichen entfernt werden können. Unter Verwendung der Flockungs- bzw. Sedimentationsvorrichtung kann das zu behandelnde bzw. aufzureinigende Wasser A insbesondere chemisch, beispielsweise unter Verwendung von Flockungsmitteln oder dergleichen, bzw. weiterführend mechanisch behandelt werden, wobei insbesondere die zuvor ausgeflockten Bestandteile in Form eines Sediments entfernt werden können. Unter Verwendung der gegebenenfalls vorgesehenen mechanischen Feinfiltereinrichtung können insbesondere relativ große bzw. grobe nicht gelöste Bestandteile des zu behandelnden bzw. aufzureinigenden Wassers oder dergleichen entfernt werden. Schließlich kann unter gegebenenfalls vorgesehener Verwendung der Grundadsorptionseinrichtung eine insbesondere der Wasseraufreinigungsanlage 1 vorgeschaltete (Grund-)Adsorption von Verunreinigungen durchgeführt werden, insbesondere unter Verwendung bzw. Einsatz von Standardadsorptionsmaterialien, wie beispielsweise holzkohle-, steinkohle-, braunkohle-, pech-, olivenkern-und/oder kokosnussschalenbasierter Aktivkohle oder dergleichen.

Erfindungsgemäß kann es insbesondere vorgesehen sein, dass die erfindungsgemäß eingesetzte Wasseraufreinigungsanlage 1 genau eine Aufbereitungs- bzw. Behandlungseinrichtung aufweist, welche der Spitzenlastadsorptionseinrichtung 3 und der Hauptadsorptionseinrichtung 2 vorgeschaltet bzw. stromaufwärts hierzu angeordnet wird, wobei die Aufbereitungs- bzw. Behandlungseinrichtung eine Vor- bzw. Grobfiltereinrichtung, eine Flockungs- bzw. Sedimentationseinrichtung, eine mechanische Filtereinrichtung sowie gegebenenfalls eine Grundadsorptionseinrichtung aufweist, wobei die zuvor genannten Vorrichtungen in der vorgenannten Reihenfolge angeordnet werden, bezogen auf die Verfahrens- bzw. Prozessrichtung.

Folglich kann die erfindungsgemäß eingesetzte Wasseraufreinigungsanlage 1 als funktionale Gesamtanlage zur Bereitstellung von behandeltem bzw. aufgereinigtem Wasser B, insbesondere Trink- bzw. Brauchwasser, ausgebildet werden, wobei durch konkrete Auswahl und Abstimmung bzw. Anordnung der in Rede stehenden Vorrichtungen die erfindungsgemäß verwendete Wasseraufreinigungsanlage 1 im Hinblick auf den jeweiligen Anwendungs- bzw. Einsatzzweck individuell ausgebildet bzw. maßgeschneidert werden kann.

Im Allgemeinen kann die weitere Aufbereitungs- und/oder Behandlungseinrichtung, insbesondere die Mehrzahl an weiteren Aufbereitungs- und/oder Behandlungseinrichtungen, stromaufwärts zu der Spitzenlastadsorptionseinrichtung 3 und/oder der Hauptadsorptionseinrichtung 2 angeordnet werden, wie zuvor angeführt. Insbesondere kann die Spitzenlastadsorptionseinrichtung 3 und die Hauptadsorptionseinrichtung 2 stromabwärts zu der weiteren Aufbereitungs- und/oder Behandlungseinrichtung, insbesondere der Mehrzahl an weiteren Aufbereitungs- und/oder Behandlungseinrichtungen, angeordnet werden.

Im Hinblick auf die zusätzliche Verwendung der in Rede stehenden Aufbereitungs- bzw. Behandlungseinrichtungen, insbesondere wie zuvor definiert, kann erfindungsgemäß insbesondere derart vorgegangen werden, dass bei Überschreitung des vorgegebenen Einlasskonzentrationsgrenzwertes die Spitzenlastadsorptionseinrichtung 3 stromabwärts zu der weiteren Aufbereitungs- und/oder Behandlungseinrichtung, insbesondere der Mehrzahl an weiteren Aufbereitungs- und/oder Behandlungseinrichtungen, einerseits und stromaufwärts zu der Hauptadsorptionseinrichtung 2 andererseits zwischen- und/oder zugeschaltet wird.

Insbesondere kann es in diesem Zusammenhang mit anderen Worten bei Überschreiten des vorgegebenen Eingangskonzentrationsgrenzwertes vorgesehen sein, dass das zu behandelnde und aufzureinigende Wasser A nach Durchlaufen und/oder Passieren der weiteren Aufbereitungs- und/oder Behandlungseinrichtung(en) zumindest teilweise, vorzugsweise vollständig, zunächst der Spitzenlastadsorptionseinrichtung 3 zugeführt und in der Spitzenlastadsorptionseinrichtung 3 behandelt und aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird, und anschließend der Hauptadsorptionseinrichtung 2 zugeführt und in der Hauptadsorptionseinrichtung 2 behandelt und aufgereinigt wird.

Insbesondere kann es erfindungsgemäß vorgesehen sein, dass die Spitzenlastadsorptionseinrichtung 3 bzw. die Hauptadsorptionseinrichtung 2 stromabwärts zu der Vor- und/oder Grobfiltervorrichtung und/oder der Flockungs- und/oder Sedimentationsvorrichtung und/oder der Feinfiltervorrichtung und/oder der Grundadsorptionsvorrichtung, insbesondere stromabwärts zu der Grundadsorptionseinrichtung, angeordnet wird.

Mit anderen Worten kann es erfindungsgemäß im Hinblick auf den gegebenenfalls vorgesehenen Einsatz der in Rede stehenden Aufbereitungs- bzw. Behandlungseinrichtung(en) vorgesehen sein, dass das zu behandelnde bzw. aufzureinigende Wasser A bei Überschreitung des vorgegebenen Einlasskonzentrationsgrenzwertes nach Durchlaufen und/oder Passieren der weiteren Aufbereitungs- und/oder Behandlungseinrichtung(en) zumindest teilweise, vorzugsweise vollständig, zunächst der Spitzenlastadsorptionseinrichtung 3 zugeführt und in der Spitzenlastadsorptionseinrichtung 3 behandelt und aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird, und anschließend der Hauptadsorptionseinrichtung 2 zugeführt und in der Hauptadsorptionseinrichtung 2 behandelt bzw. aufgereinigt wird.

Somit kann die Wasseraufreinigungsanlage 1 als solche unmittelbar in Form einer Gesamt-Wasseraufreinigungsanlage ausgebildet sein, insbesondere wie zuvor dargestellt.

Gemäß einer weiteren Ausführungsform der vorliegenden Erfindung kann es auch vorgesehen sein, dass die Wasseraufreinigungsanlage 1 stromabwärts zu einer Gesamt-Wasseraufreinigungsanlage angeordnet bzw. betrieben und/oder befahren wird. In diesem Zusammenhang kann es insbesondere vorgesehen sein, dass die Wasseraufreinigungsanlage 1 an stromabwärts letzter Stelle bzw., insbesondere bezogen auf die Verfahrens- bzw. Prozessrichtung, am Ende bzw. Auslass der (vorgeschalteten bzw. stromabwärts hierzu angeordneten) Gesamt-Wasseraufreinigungsanlage angeordnet bzw. betrieben und/oder befahren wird. Auf diese Weise können im Rahmen der vorliegenden Erfindung bestehende Wasseraufreinigungsanlagen mit der erfindungsgemäßen Wasseraufreinigungsanlage 1 zur Bereitstellung einer diesbezüglichen Gesamt-Wasseraufbereitunganlage nachgerüstet bzw. ergänzt werden. In diesem Zusammenhang kann in entsprechender Weise auch das erfindungsgemäße Verfahren zur Anwendung kommen.

In diesem Zusammenhang kann die Wasseraufreinigungsanlage 1 somit zur finalen bzw. abschließenden Behandlung bzw. Aufreinigung von dem zu behandelnden bzw. aufzureinigenden Wasser A eingesetzt werden und zwar insbesondere im Rahmen der Ergänzung bzw. Nachrüstung einer zugrundeliegenden Gesamt-Wasseraufreinigungsanlage.

In diesem Zusammenhang kann es erfindungsgemäß gleichermaßen vorgesehen sein, dass die Gesamt-Wasseraufreinigungsanlage mindestens eine Aufbereitungs-und/oder Behandlungseinrichtung, insbesondere wie zuvor für die Wasseraufreinigungsanlage 1 definiert, aufweist. Somit kann die Gesamt-Wasseraufreinigungsanlage (i) mindestens eine insbesondere mechanische Vor- und/oder Grobfiltereinrichtung, (ii) mindestens eine Flockungs- und/oder Sedimentationseinrichtung, (iii) mindestens eine insbesondere mechanische Feinfiltereinrichtung und (iv) gegebenenfalls mindestens eine Grundadsorptionseinrichtung aufweisen, insbesondere in der vorstehenden Reihenfolge (i) bis (iv), bezogen auf die Verfahrens- bzw. Prozessrichtung.

Gemäß dieser Ausführungsform der vorliegenden Erfindung kann insbesondere derart verfahren werden, dass bei Überschreitung des vorgegebenen Einlasskonzentrationsgrenzwertes die Spitzenlastadsorptionseinrichtung 3 stromabwärts zu der weiteren Aufbereitungs- und/oder Behandlungseinrichtung, insbesondere der Mehrzahl an weiteren Aufbereitungs- und/oder Behandlungseinrichtungen, der Gesamt-Wasseraufreinigungsanlage einerseits und stromaufwärts zu der Hauptadsorptionseinrichtung 2 andererseits zwischen- und/oder zugeschaltet wird.

Erfindungsgemäß kann es somit vorgesehen sein, dass - wie zuvor angeführt - die Wasseraufreinigungsanlage 1 in eine Gesamt-Wasseraufreinigungsanlage integriert wird. Auf dieser Basis ergibt sich insbesondere die Möglichkeit der Nachrüstung bestehender Anlagen mit diesbezüglicher Optimierung der Entfernung von Verunreinigungen, und zwar insbesondere was die im Zusammenhang mit zeitlich begrenzt bzw. spontan auftretenden Konzentrationsanstiegen vorliegenden bzw. diese hervorrufenden Verunreinigungen anbelangt. In diesem Zusammenhang können somit bestehende Anlagen mit einer optimierten Aufreinigungsleistung versehen werden, so dass bestehende Anlagen sozusagen funktional ergänzt bzw. erweitert werden können.

Im Hinblick auf die zuvor angeführten weiteren Aufbereitungs- bzw. Behandlungseinrichtungen kann es im Allgemeinen (d. h. sowohl bei Ausrüstung der Wasseraufreinigungsanlage 1 als solcher mit den in Rede stehenden Aufbereitungs- bzw. Behandlungseinrichtungen als auch bei Vorliegen einer Gesamt-Wasseraufreinigungsanlage mit den in Rede stehenden Aufbereitungs- bzw. Behandlungseinrichtungen und der nachgerüsteten bzw. ergänzten Wasseraufreinigungsanlage 1) vorgesehen sein, dass das zu behandelnde bzw. aufzureinigende Wasser A vor Zuführung und/oder Einspeisung in die Spitzenlastadsorptionseinrichtung 3 und vor Zuführung und/oder Einspeisung in die Hauptadsorptionseinrichtung 2 bzw. vor Zuführung und/oder Einspeisung in die Wasseraufreinigungsanlage 1 zunächst (i) durch und/oder in die insbesondere mechanische Vor- und/oder Grobfiltereinrichtung und/oder (ii) durch und/oder in die Flockungs- und/oder Sedimentationseinrichtung und/oder (iii) durch und/oder in die mechanische Feinfiltereinrichtung und/oder (iv) durch und/oder in die Grundadsorptionseinrichtung geführt bzw. geleitet wird.

Was weiterhin den Eingangskonzentrationsgrenzwert anbelangt, so kann dieser im Allgemeinen kontinuierlich oder diskontinuierlich, insbesondere diskontinuierlich, gemessen bzw. erfasst werden, beispielsweise durch kontinuierliche bzw. diskontinuierliche Probenentnahme aus dem zu behandelnden bzw. aufzureinigenden Wasser A, insbesondere stromaufwärts zu der Spitzenlastadsorptionseinrichtung 3 und der Hauptadsorptionseinrichtung 2.

Insbesondere kann der vorgegebene Eingangskonzentrationsgrenzwert in zumindest im Wesentlichen regelmäßigen Zeitabständen, insbesondere in Zeitabständen in einem Bereich von 10 s bis 300 min, vorzugsweise in einem Bereich von 30 s bis 240 min, bevorzugt in einem Bereich von 1 min bis 180 min, besonders bevorzugt in einem Bereich von 5 min bis 120 min, ganz besonders bevorzugt in einem Bereich von 10 min bis 60 min, weiter bevorzugt in einem Bereich von 15 min bis 40 min, gemessen und/oder erfasst werden, insbesondere diskontinuierlich.

Erfindungsgemäß kann der vorgegebene Eingangskonzentrationsgrenzwert im Rahmen bzw. mittels einer sogenannten *Online*-Messung bzw. Online-Erfassung gemessen und/oder erfasst werden.

Im Allgemeinen kann der Eingangskonzentrationsgrenzwert stromaufwärts zu der Spitzenlastadsorptionseinrichtung 3 und der Hauptadsorptionseinrichtung 2 gemessen bzw. erfasst werden.

Insbesondere kann der Eingangskonzentrationsgrenzwert an stromaufwärts erster Stelle und/oder, insbesondere bezogen auf die Verfahrens- und/oder Prozessrichtung, am Anfang und/oder am Einlass der Wasseraufreinigungsanlage 1 und/oder der Gesamt-Wasseraufreinigungsanlage gemessen bzw. erfasst werden.

Erfindungsgemäß kann der Eingangskonzentrationsgrenzwert an dem zu behandelnden und aufzureinigendem Wasser A, insbesondere Rohwasser, vorzugsweise vor Durchführung der Behandlung und Aufreinigung oder allenfalls nach Durchführung einer mechanischen Behandlung und/oder Aufreinigung, insbesondere Grobfilterung, gemessen bzw. erfasst werden.

In diesem Zusammenhang ist es erfindungsgemäß bevorzugt, die Messung bzw. Erfassung des Eingangskonzentrationsgrenzwertes möglichst weit stromaufwärts bzw. zu Beginn der Verfahrens- bzw. Prozessrichtung vorzunehmen. Dies ist auch insofern vorteilhaft, als insbesondere im Hinblick auf eine diskontinuierliche Messung bzw. Erfassung des in Rede stehenden Wertes aufgrund des entsprechenden Strömungsweges bzw. der Strömungsdauer des zu behandelnden bzw. aufzureinigenden Wassers A bis zur Spritzenlastadsorptionseinrichtung 3 bzw. Hauptadsorptionseinrichtung 2 genügend Zeit verbleibt, die Spitzenlastadsorptionseinrichtung 3 entweder zuzuschalten (bei Überschreiten des Einlasskonzentrationsgrenzwertes) bzw. abzuschalten (bei Unterschreiten des Eingangskonzentrationsgrenzwertes). Auch infolgedessen kann eine diskontinuierliche Messwerterfassung realisiert werden, was im Allgemeinen verfahrensökonomisch und kostenmäßig von Vorteil ist. Sofern im Rahmen der erfindungsgemäß eingesetzten Wasseraufreinigungsanlage 1 bzw. der zuvor beschriebenen Gesamt-Wasseraufreinigungsanlage der zusätzliche Einsatz von Aufbereitungs- bzw. Behandlungseinrichtungen, wie zuvor beschrieben, vorgesehen ist, so kann die Messwerterfassung insbesondere auch stromabwärts zu einer mechanischen Vor- bzw. Grobfiltervorrichtung und stromaufwärts zu einer gegebenenfalls nachfolgenden Vorrichtung der Aufbereitungs- bzw. Behandlungseinrichtung (z. B. stromaufwärts zu der Flockungs- bzw. Sedimentationsvorrichtung) bzw. stromaufwärts zu einer weiteren Aufbereitungs- bzw. Behandlungseinrichtung bzw. stromaufwärts zu der Spitzenlastadsorptionseinrichtung 3 bzw. der Hauptadsorptionseinrichtung 2 erfolgen.

Zur Erfassung des Eingangskonzentrationsgrenzwertes können dem Fachmann an sich bekannte Mess- bzw. Erfassungseinrichtungen verwendet werden. Insbesondere kann der Eingangskonzentrationsgrenzwert chromatographisch, insbesondere unter Verwendung von Hochleistungsflüssigkeitschromatograhie-Verfahren (*high performance liquid chromatography,* HPLC), gemessen bzw. erfasst werden.

Erfindungsgemäß kann der Eingangskonzentrationsgrenzwert mittels mindestens einer Verunreinigungsmesseinrichtung 4 gemessen und/oder erfasst werden. Dabei kann als Verunreinigungsmesseinrichtung 4 eine Chromatographie-Verunreinigungsmesseinrichtung, insbesondere eine Hochleistungsflüssigkeitschromatograhie-Verunreinigungsmesseinrichtung, eingesetzt werden.

Erfindungsgemäß kann es weiterhin vorgesehen sein, dass das zu behandelnde und aufzureinigende Wasser A und/oder das behandelte und aufgereinigte Wasser B über mindestens eine Transporteinrichtung 5a, 5b, 5c, 5d, insbesondere Rohrleitungseinrichtung, transportiert wird. Hierzu kann beispielweise mindestens eine Pumpeinrichtung verwendet werden.

Insbesondere kann das zu behandelnde und aufzureinigende Wasser A über mindestens eine erste Transporteinrichtung 5a, insbesondere erste Rohrleitungseinrichtung, transportiert werden, insbesondere der Hauptadsorptionseinrichtung 2 zugeführt werden. Diesbezüglich kann die erste Transporteinrichtung 5a mit der Hauptadsorptionseinrichtung 2, insbesondere mit dem Eingang der Hauptadsorptionseinrichtung 2, insbesondere schaltbar und/oder regelbar, vorzugsweise zu- und abschaltbar, verbunden werden.

Was das erfindungsgemäße Verfahren weiterhin anbelangt, so kann das zu behandelnde und aufzureinigende Wasser A bei Überschreitung des vorgegebenen Eingangskonzentrationsgrenzwertes und/oder vor Durchlaufen und/oder Passieren der Spitzenlastadsorptionseinrichtung 3 über mindestens eine zweite Transporteinrichtung 5b, insbesondere zweite Rohrleitungseinrichtung, transportiert werden, insbesondere der Spitzenlastadsorptionseinrichtung 3 zugeführt werden. Diesbezüglich kann die zweite Transporteinrichtung 5b mit der ersten Transporteinrichtung 5a verbunden werden. Hierzu kann die zweite Transporteinrichtung 5b mit der Spitzenlastadsorptionseinrichtung 3, insbesondere mit dem Eingang der Spitzenlastadsorptionseinrichtung 3, insbesondere schaltbar und/oder regelbar, vorzugsweise zu- und abschaltbar, verbunden werden.

Zudem kann das zu behandelnde und aufzureinigende Wasser A bei Überschreitung des vorgegebenen Eingangskonzentrationsgrenzwertes und/oder nach Durchlaufen und/oder Passieren der Spitzenlastadsorptionseinrichtung 3 über mindestens eine dritte Transporteinrichtung 5c, insbesondere dritte Rohrleitungseinrichtung, transportiert werden, insbesondere der Hauptadsorptionseinrichtung 2 zugeführt werden. In diesem Zusammenhang kann die dritte Transporteinrichtung 5c mit der ersten Transporteinrichtung 5a, insbesondere stromabwärts zu der Verbindung der zweiten Transporteinrichtung 5b mit der ersten Transporteinrichtung 5a, verbunden werden.

Zudem kann die dritte Transporteinrichtung 5c mit der Spitzenlastadsorptionseinrichtung 3, insbesondere mit dem Auslass der Spitzenlastadsorptionseinrichtung 3, insbesondere schaltbar und/oder regelbar, vorzugsweise zu- und abschaltbar, verbunden werden.

Darüber hinaus kann das behandelte und aufgereinigte Wasser B, insbesondere nach Durchlaufen und/oder Passieren der Hauptadsorptionseinrichtung 2, über mindestens eine vierte Transporteinrichtung 5d, insbesondere vierte Rohrleitungseinrichtung, transportiert werden, insbesondere wobei die vierte Transporteinrichtung 5d mit der Hauptadsorptionseinrichtung 2, insbesondere mit dem Auslass der Hauptadsorptionseinrichtung 2, verbunden wird. Die vierte Transporteinrichtung 5d dient insbesondere dem Abtransport des behandelten bzw. aufgereinigten Wasses B.

Erfindungsgemäß kann das Zuschalten und/oder Vorschalten der Spitzenlastadsorptionseinrichtung 3 mittels mindestens einer Regeleinrichtung 6a, 6b, 6c, insbesondere Durchflussregeleinrichtung, insbesondere Ventileinrichtung, bevorzugt mittels einer Mehrzahl an Regeleinrichtungen 6a, 6b, 6c, vorzugsweise mittels einer ersten Regeleinrichtung 6a, einer zweiten Regeleinrichtung 6b und einer dritten Regeleinrichtung 6c, durchgeführt und/oder geregelt werden.

In diesem Zusammenhang kann es vorgesehen sein, dass die Regeleinrichtung(en) 6a, 6b, 6c an den Transporteinrichtungen 5a, 5b, 5c, insbesondere an der ersten Transporteinrichtung 5a und/oder an der zweiten Transporteinrichtung 5b und/oder an der dritten Transporteinrichtung 5c, angeordnet werden. Hierdurch kann der Durchfluss des zu behandelnden bzw. aufzureinigenden Wassers A durch die erste Transporteinrichtung 5a bzw. durch die zweite Transporteinrichtung 5b bzw. durch die dritte Transporteinrichtung 5c geregelt werden. Gleichermaßen kann hierdurch der Durchfluss des zu behandelnden bzw. aufzureinigenden Wassers A durch die Spitzenlastadsorptionseinrichtung 3 bzw. durch die Hauptadsorptionseinrichtung 2 geregelt werden.

Im Allgemeinen kann die erste Regeleinrichtung 6a an der ersten Transporteinrichtung 5a und die zweite Regeleinrichtung 6b an der zweiten Transporteinrichtung 5b und die dritte Regeleinrichtung 6c an der dritten Transporteinrichtung 5c angeordnet werden.

Zudem kann die erste Regeleinrichtung 6a parallel zu der zweiten Regeleinrichtung 6b, der Spitzenlastadsorptionseinrichtung 3 und der dritten Regeleinrichtung 6c angeordnet werden.

Weiterhin kann die zweite Regeleinrichtung 6b stromaufwärts zu der Spitzenlastadsorptionseinrichtung 3 und die dritte Regeleinrichtung 6c stromabwärts zu der Spitzenlastadsorptionseinrichtung 3 angeordnet werden.

Im Allgemeinen können die Regeleinrichtungen 6a, 6b, 6c als Bypass-Schaltung und/oder Bypass-Regelung ausgebildet werden. Hierdurch kann die Spitzenlastadsorptionseinrichtung 3 zu- bzw. abgeschaltet werden. Im Allgemeinen können dem Fachmann als solche wohlbekannte Bypass-Ventile bzw. Bypass-Ventilanordnungen eingesetzt werden.

Erfindungsgemäß kann die Steuerung der Regeleinrichtungen 6a, 6b, 6c mittels mindestens einer Steuereinrichtung 7 durchgeführt werden. Hierzu kann die Steuereinrichtung 7 Bestandteil der Verunreinigungsmesseinrichtung 4 sein. Erfindungsgemäß ist es jedoch bevorzugt, wenn die Steuereinrichtung 7 als eigenständige bzw. separate Einrichtung ausgebildet wird. Hierbei kann die Steuereinrichtung 7 zwischen der Verunreinigungsmesseinrichtung 4 und den Regeleinrichtungen 6a, 6b, 6c positioniert werden.

Mit Hilfe der Steuereinrichtung 7 können somit die Regeleinrichtungen 6a, 6b, 6c in Abhängigkeit von dem zuvor gemessenen bzw. erfassten Einlasskonzentrationsgrenzwert gesteuert werden, insbesondere derart, dass bei Überschreiten des Einlasskonzentrationsgrenzwertes die Regeleinrichtungen 6a, 6b, 6c derart eingestellt werden, dass die Spitzenlastadsorptionseinrichtung 3 zugeschaltet bzw. der Hauptadsorptionseinrichtung 2 vorgeschaltet wird. In entsprechender Weise verhält es sich bei Unterschreiten des in Rede stehenden Konzentrationsgrenzwertes derart, dass die Regeleinrichtungen 6a, 6b, 6c über die Steuereinrichtung 7 gesteuert werden, dass die Spitzenlastadsorptionseinrichtung 3 abgeschaltet bzw. überbrückt wird.

Erfindungsgemäß kann es weiterhin vorgesehen sein, dass die Spitzenlastadsorptionseinrichtung 3 eine Mehrzahl an Spitzenlast-Adsorptionsfilteruntereinheiten 3a, 3b, 3c aufweist. Beispielsweise kann die Spitzenlastadsorptionseinrichtung 3 zwei, drei oder mehr Spitzenlast-Adsorptionsfilteruntereinheiten 3a, 3b, 3c aufweisen. Hierzu kann auch auf nachfolgende Ausführungen verwiesen werden.

In diesem Zusammenhang können die Spitzenlast-Adsorptionsfilteruntereinheiten parallel zueinander, insbesondere strömungstechnisch parallel zueinander, angeordnet bzw. geschaltet werden, insbesondere so dass die Spitzenlast-Adsorptionsfilteruntereinheiten 3a, 3b, 3c in der Spitzenlastadsorptionseinrichtung 3 parallel zueinander, insbesondere strömungstechnisch parallel zueinander, angeordnet und/oder geschaltet werden, insbesondere so dass durch die jeweiligen Spitzenlast-Adsorptionsfilteruntereinheiten 3a, 3b, 3c zumindest ein Teilstrom des durch die Spitzenlastadsorptionseinrichtung 3 geführten zu behandelnden und aufzureinigenden Wassers A führbar ist.

Gleichermaßen kann es vorgesehen sein, dass die partikelförmige Aktivkohle, vorzugsweise die kornförmige Aktivkohle, bevorzugt die kugelförmige Aktivkohle, insbesondere wie nachfolgend definiert, der Spitzenlastadsorptionseinrichtung 3 auf die jeweiligen Spitzenlast-Adsorptionsfilteruntereinheiten 3a, 3b, 3c insbesondere mengen- und/oder volumenmäßig aufgeteilt wird, insbesondere zumindest im Wesentlichen gleichmäßig aufgeteilt wird.

In diesem Zusammenhang kann es erfindungsgemäß vorgesehen sein, dass die jeweiligen Spitzenlast-Adsorptionsfilteruntereinheiten 3a, 3b, 3c, unabhängig voneinander, einen Festbettfilter und/oder ein Festbett auf Basis der partikelförmigen Aktivkohle, vorzugsweise der kornförmigen Aktivkohle, bevorzugt der kugelförmigen Aktivkohle, insbesondere wie nachfolgend definiert, aufweisen.

Im Allgemeinen kann es vorgesehen sein, dass die Spitzenlastadsorptionseinrichtung 3 mindestens 2 und/oder insbesondere 2 bis 10, vorzugsweise 2 bis 8, bevorzugt 3 bis 6, besonders bevorzugt 5, Spitzenlast-Adsorptionsfilteruntereinheiten 3a, 3b, 3c aufweist.

Insbesondere können die Spitzenlast-Adsorptionsfilteruntereinheiten 3a, 3b, 3c, unabhängig voneinander, zu- und abschaltbar sein bzw. derart ausgebildet werden. Insbesondere zu diesem Zweck kann es vorgesehen sein, Regeleinrichtungen 8a, 8b, 8c bzw. 9a, 9b, 9c der Spitzenlast-Adsorptionsfilterunterheiten 3a, 3b, 3c einzusetzen. Dabei können die weiteren Regeleinrichtungen 8a, 8b, 8c den jeweiligen Spitzenlast-Adsorptionsfilterunterheiten 3a, 3b, 3c vorgeschaltet bzw. stromaufwärts hierzu angeordnet werden und/oder die weiteren Regeleinrichtungen 9a, 9b, 9c den jeweiligen Spitzenlast-Adsorptionsfilterunterheiten 3a, 3b, 3c nachgeschaltet bzw. stromabwärts hierzu angeordnet werden. In diesem Zusammenhang kann auch mindestens eine Spitzenlast-Adsorptionsfilterunterheiten-Steuereinrichtung zur Ansteuerung der weiteren Regeleinrichtungen 8a, 8b, 8c bzw. 9a, 9b, 9c eingesetzt werden.

Gleichermaßen kann es erfindungsgemäß vorgesehen sein, dass zumindest eine Spitzenlast-Adsorptionsfilteruntereinheit 3a, 3b, 3c insbesondere zu Zwecken des Austauschs von verbrauchter und/oder erschöpfter partikelförmiger Aktivkohle, vorzugsweise verbrauchter und/oder erschöpfter kornförmiger Aktivkohle, bevorzugt verbrauchter und/oder erschöpfter kugelförmiger Aktivkohle, von dem Strom des zu behandelnden und aufzureinigenden Wassers A abtrennbar und/oder isolierbar ist und/oder für das zu behandelnde und aufzureinigende Wassers A nicht durchströmbar ist.

Schließlich kann es auch vorgesehen sein, dass zumindest eine Spitzenlast-Adsorptionsfilteruntereinheit 3a, 3b, 3c insbesondere zu Zwecken der Bereitstellung einer Reserveadsorptionsfilterkapazität dem Strom des zu behandelnden und aufzureinigenden Wassers A zuschaltbar ist und/oder zusätzlich von dem zu behandelnden und aufzureinigenden Wassers A durchströmbar ist.

Wie zuvor angeführt, ist es aufgrund der erfindungsgemäßen Konzeption insgesamt möglich, die Anzahl der Spitzenlast-Adsorptionsfilterunterheiten 3a, 3b, 3c zu reduzieren. Aufgrund der Zu- bzw. Abschaltbarkeit der jeweiligen Spitzenlast-Adsorptionsfilterunterheiten 3a, 3b, 3c ist gleichermaßen ein kontinuierlicher Betrieb der erfindungsgemäßen Wasseraufreinigungsanlage 1 gewährleistet.

Darüber hinaus kann es vorgesehen sein, dass auch die Hauptadsorptionseinrichtung 2 eine Mehrzahl an Hauptadsorptionsfilteruntereinheiten 2a, 2b, 2c, 2d, 2e, 2f aufweist. Diesbezüglich kann die Hauptadsorptionseinrichtung 2 von den bzw. in die Hauptadsorptionsfilteruntereinheiten 2a, 2b, 2c, 2d, 2e, 2f unterteilt werden. Beispielsweise kann die Hauptadsorptionseinrichtung 2 zwei, drei, vier, fünf, sechs oder mehr Hauptadsorptionsfilteruntereinheiten 2a, 2b, 2c, 2d, 2e, 2f aufweisen. Hierzu kann auch auf nachfolgende Ausführungen verwiesen werden.

Gleichermaßen können die Hauptadsorptionsfilteruntereinheiten 2a bis 2f in der Hauptadsorptionseinrichtung 2 parallel zueinander, insbesondere strömungstechnisch parallel zueinander, angeordnet und/oder geschaltet werden, insbesondere so dass durch die jeweiligen Hauptadsorptionsfilteruntereinheiten 2a bis 2f zumindest ein Teilstrom des durch die Hauptadsorptionseinrichtung 2 geführten zu behandelnden und aufzureinigenden Wassers A führbar ist.

Erfindungsgemäß kann es vorgesehen sein, dass die partikelförmige Aktivkohle, vorzugsweise die kornförmige Aktivkohle, bevorzugt die kugelförmige Aktivkohle, insbesondere wie nachfolgend definiert, der Hauptadsorptionseinrichtung 2 auf die jeweiligen Hauptadsorptionsfilteruntereinheiten 2a bis 2f aufgeteilt wird, insbesondere zumindest im Wesentlichen gleichmäßig aufgeteilt wird.

Zudem kann es vorgesehen sein, dass die jeweiligen Hauptadsorptionsfilteruntereinheiten 2a bis 2f, unabhängig voneinander, einen Festbettfilter und/oder ein Festbett auf Basis der partikelförmigen Aktivkohle, vorzugsweise der kornförmigen Aktivkohle, bevorzugt der kugelförmigen Aktivkohle, insbesondere wie nachfolgend definiert, aufweisen.

Gleichermaßen kann die Hauptadsorptionseinrichtung 2 mindestens 2 und/oder insbesondere 2 bis 30, vorzugsweise 4 bis 20, bevorzugt 5 bis 15, besonders bevorzugt 10, Hauptadsorptionsfilteruntereinheiten 2a, 2b, 2c, 2d, 2e, 2f aufweisen.

Aufgrund der erfindungsgemäßen Konzeption kann auch die Anzahl der der Hauptadsorptionseinrichtung 2 zugrundeliegenden Hauptadsorptionsfilteruntereinheiten 2a bis 2f, entsprechend reduziert werden, insbesondere durch die zugrundeliegende Entlastung durch zuschaltbare Spitzenlastadsorptionseinrichtung 3.

Gleichermaßen können die Hauptadsorptionsfilteruntereinheiten 2a bis 2f, unabhängig voneinander, zu- und abschaltbar sind bzw. derart ausgebildet werden.

In diesem Zusammenhang können gleichermaßen weitere Regeleinrichtungen 10a, 10b, 10c, 10d, 10e, 10f bzw. 11a, 11b, 11c, 11d, 11e, 11f der Hauptadsorptionsfilteruntereinheiten 2a, 2b, 2c, 2d, 2e, 2f eingesetzt werden, insbesondere wobei die weiteren Regeleinrichtungen 10a bis 10f den jeweiligen Hauptadsorptionsfilteruntereinheiten 2a bis 2f vorgeschaltet bzw. stromaufwärts hierzu angeordnet werden und/oder die weiteren Regeleinrichtungen 11a bis 11f den jeweiligen Hauptadsorptionsfilteruntereinheiten 2a bis 2f nachgeschaltet bzw. stromabwärts hierzu angeordnet werden. In diesem Zusammenhang kann auch mindestens eine Hauptadsorptionsfilteruntereinheiten-Steuereinrichtung zur Ansteuerung der weiteren Regeleinrichtungen 10a bis 10f bzw. 11a bis 11f eingesetzt werden.

Erfindungsgemäß kann es vorgesehen sein, dass insbesondere aufgrund der Zu-und Abschaltbarkeit zumindest eine Hauptadsorptionsfilteruntereinheit 2a bis 2f insbesondere zu Zwecken des Austauschs von verbrauchter und/oder erschöpfter partikelförmiger Aktivkohle, vorzugsweise verbrauchter und/oder erschöpfter kornförmiger Aktivkohle, bevorzugt verbrauchter und/oder erschöpfter kugelförmiger Aktivkohle, von dem Strom des zu behandelnden und aufzureinigenden Wassers A abtrennbar und/oder isolierbar ist und/oder für das zu behandelnde und aufzureinigende Wassers A nicht durchströmbar ist.

In diesem Zusammenhang kann es gleichermaßen vorgesehen sein, dass insbesondere aufgrund der Zu- und Abschaltbarkeit zumindest eine Hauptadsorptionsfilteruntereinheit 2a bis 2f insbesondere zu Zwecken der Bereitstellung einer Reserveadsorptionsfilterkapazität dem Strom des zu behandelnden und aufzureinigenden Wassers A zuschaltbar ist und/oder zusätzlich von dem zu behandelnden und aufzureinigenden Wassers A durchströmbar ist.

Im Allgemeinen kann das dem Verfahren entnommene beladene bzw. erschöpfte Adsorptionsmaterial einer Regeneration bzw. Rezyklierung unterworfen werden und nachfolgend dem erfindungsgemäßen Verfahren bzw. der diesbezüglichen Einrichtungen, insbesondere der Spitzenlastadsorptionseinrichtung 3 und/oder der Hauptadsorptionseinrichtung 2 erneut zugeführt werden.

Gemäß einer weiteren erfindungsgemäßen Ausführungsform kann es zudem vorgesehen sein, dass die Wasseraufreinigungsanlage 1 mindestens eine weitere, insbesondere in Abhängigkeit von einem stromabwärts zu der Spitzenlastadsorptionseinrichtung 3 gemessenen bzw. erfassten Konzentrationsgrenzwert der Verunreinigungen in dem zu behandelnden und aufzureinigenden Wasser A zuschaltbare Spitzenlastadsorptionseinrichtung 3' aufweist, wobei die weitere Spitzenlastadsorptionseinrichtung 3' stromabwärts zu der Spitzenlastadsorptionseinrichtung 3 und stromaufwärts zu der Hauptadsorptionseinrichtung 2 angeordnet wird und wobei bei Überschreitung eines vorgegebenen und insbesondere stromabwärts zu der Spitzenlastadsorptionseinrichtung 3 gemessenen bzw. erfassten weiteren Konzentrationsgrenzwertes die weitere Spitzenlastadsorptionseinrichtung 3' zugeschaltet bzw. der Spitzenlastadsorptionseinrichtung 3 nachgeschaltet und der Hauptadsorptionseinrichtung 2 vorgeschaltet wird derart, dass das zu behandelnde bzw. aufzureinigende Wasser A zumindest teilweise, vorzugsweise vollständig, zusätzlich und nachfolgend zu der Spitzenlastadsorptionseinrichtung 3 und vor Eintritt bzw. Überführung in die Hauptadsorptionseinrichtung 2 der weiteren Spitzenlastadsorptionseinrichtung 3' zugeführt und zusätzlich und nachfolgend zu der Spitzenlastadsorptionseinrichtung 3 und vor Eintritt in die Hauptadsorptionseinrichtung 2 auch in der weiteren Spitzenlastadsorptionseinrichtung 3' behandelt bzw. aufgereinigt wird, wobei die noch verbliebenen Verunreinigungen adsorptiv zumindest teilweise entfernt werden, vorzugsweise der Konzentrationsanstieg der Verunreinigungen weiter abgeschwächt und vergleichmäßigt wird.

Demnach verhält es sich im Rahmen der vorliegenden Erfindung insbesondere derart, dass die Spitzenlastadsorptionseinrichtung 3 sowie die gegebenenfalls vorhandene weitere Spitzenlastadsorptionseinrichtung 3' in Reihe geschaltet werden.

Was den weiteren Konzentrationsgrenzwert anbelangt, so kann dieser stromabwärts zu der ersten Spitzenlastadsorptionseinrichtung 3 und stromaufwärts zu der weiteren Spitzenlastadsorptionseinrichtung 3' erfasst bzw. gemessen werden. Somit kann insbesondere für den Fall des Vorliegens von sehr hohen bzw. sehr lang andauernden Konzentrationsanstiegen der Verunreinigungen die weitere Spitzenlastadsorptionseinrichtung 3' insbesondere zu Zwecken der weiterführenden Abschwächung bzw. Vergleichmäßigung des Konzentrationsanstiegs bedarfsweise zugeschaltet werden, einhergehend mit einer weiterführenden Aufreinigung des zuvor durch die Spitzenlastadsorptionseinrichtung 3 geführten zu behandelnden bzw. aufzureinigenden Wassers A.

Im Allgemeinen kann zudem mindestens ein nochmals weiterer Konzentrationsgrenzwert stromabwärts zu der Spitzenlastadsorptionseinrichtung 3 (bzw. stromabwärts zu der gegebenenfalls vorhandenen weiteren Spitzenlastadsorptionseinrichtung 3') und/oder stromaufwärts zu der Hauptadsorptionseinrichtung 2 gemessen und/oder erfasst werden, insbesondere zur Kontrolle der Aufreinigungswirkung der Spitzenlastadsorptionseinrichtung 3. Insbesondere kann in diesem Zusammenhang bei Überschreiten des in Rede stehenden Konzentrationsgrenzwertes das Verfahren auch derart durchgeführt werden, dass zumindest ein Teilstrom, vorzugsweise der Gesamtstrom, des zuvor durch die Spitzenlastadsorptionseinrichtung 3 geführten Wassers erneut der Spitzenlastadsorptionseinrichtung 3 zugeführt wird.

Zur Messung bzw. Erfassung des (nochmals) weiteren Konzentrationsgrenzwertes kann gegebenenfalls mindestens eine weitere Verunreinigungsmesseinrichtung 4' zur Verwendung kommen. Hierzu kann eine Chromatographie-Verunreinigungsmesseinrichtung, insbesondere eine Hochleistungsflüssigkeitschromatograhie-Verunreinigungsmesseinrichtung, eingesetzt werden. Insbesondere kann die weitere Verunreinigungsmesseinrichtung 4' stromabwärts zu der Spitzenlastadsorptionseinrichtung 3 (bzw. stromabwärts zu der gegebenenfalls vorhandenen weiteren Spitzenlastadsorptionseinrichtung 3') und/oder stromaufwärts zu der Hauptadsorptionseinrichtung 2 angeordnet werden.

Erfindungsgemäß kann es zudem vorgesehen sein, dass weitere Regeleinrichtungen 6d, 6e eingesetzt werden, insbesondere zur Regelung des Durchflusses durch die weitere Spitzenlastadsorptionseinrichtung 3'. In diesem Zusammenhang können die weiteren Regeleinrichtungen 6d, 6e an weiteren Transporteinrichtungen 5e, 5f angeordnet werden. Zudem kann eine Steuerung der weiteren Regeleinrichtungen 6d, 6e mittels einer weiteren Steuereinrichtung 7' erfolgen. In diesem Zusammenhang kann die weitere Steuereinrichtung 7' auch die Regeleinrichtung 6c steuern, welche stromabwärts zu der Spitzenlastadsorptionseinrichtung 3 und/oder stromaufwärts zu der weiteren Spitzenlastadsorptionseinrichtung 3' angeordnet sein kann.

Zudem kann die weitere Spitzenlastadsorptionseinrichtung 3' gegebenenfalls weitere Spitzenlast-Adsorptionsfilteruntereinheiten 3a', 3b', 3c' aufweisen, welche insbesondere parallel zueinander angeordnet werden können. Zur Regelung des Durchflusses durch die weiteren Spitzenlast-Adsorptionsfilteruntereinheiten 3a', 3b', 3c' kann es zudem vorgesehen sein, weitere Regeleinrichtungen 8a', 8b', 8c', welche den weiteren Spitzenlast-Adsorptionsfilteruntereinheiten 3a', 3b', 3c' vorgeschaltet bzw. stromaufwärts hierzu angeordnet werden können, und/oder weitere Regeleinrichtungen 9a', 9b', 9c', welche insbesondere den weiteren Spitzenlast-Adsorptionsfilteruntereinheiten 3a' 3b', 3c' nachgeschaltet bzw. stromabwärts hierzu angeordnet werden können, einzusetzen.

Weiterhin kann es erfindungsgemäß vorgesehen sein, dass der Auslasskonzentrationsgrenzwert stromabwärts zu der Hauptadsorptionseinrichtung 2 gemessen bzw. erfasst wird. Insbesondere kann der Auslasskonzentrationsgrenzwert, insbesondere bezogen auf die Verfahrens- bzw. Prozessrichtung, am Ende bzw. am Auslass der Wasseraufreinigungsanlage 1 bzw. der Gesamt-Wasseraufreinigungsanlage gemessen bzw. erfasst werden. Diesbezüglich kann mindestens eine Auslass-Verunreinigungsmesseinrichtung, insbesondere wie zuvor definiert, zur Verwendung kommen. Die Auslass-Verunreinigungsmesseinrichtung kann insbesondere stromabwärts zu der Hauptadsorptionseinrichtung 2 angeordnet sein. Die Auslass-Verunreinigungsmesseinrichtung kann erfindungsgemäß in Form einer Chromatographie-Verunreinigungsmesseinrichtung, insbesondere Hochleistungsflüssigkeitschromatograhie-Verunreinigungsmesseinrichtung, eingesetzt werden. Auf Basis des Auslasskonzentrationsgrenzwertes bzw. dessen Bestimmung kann somit gewissermaßen eine Endkontrolle der durchgeführten Behandlung bzw. Aufreinigung des in Rede stehenden Wassers A erfolgen. Insbesondere kann in diesem Zusammenhang auch derart verfahren werden, dass bei Überschreitung des vorgegebenen Auslasskonzentrationsgrenzwertes das behandelte bzw. aufgereinigte Wasser zumindest teilweise, vorzugsweise vollständig, erneut der Wasseraufreinigungsanlage 1, insbesondere der Spitzenlastadsorptionseinrichtung 3 und/oder der Hauptadsorptionseinrichtung 2, zugeführt wird.

Was die im Rahmen des erfindungsgemäßen Verfahrens zu entfernenden Verunreinigungen anbelangt, so kann es sich diesbezüglich insbesondere wie folgt verhalten:
So können die Verunreinigungen, insbesondere die organischen Verunreinigungen, vorzugsweise die Mikroschadstoffe und/oder die Spurenstoffe, ausgewählt werden aus der Gruppe von (i) landwirtschaftlich genutzten und/oder anfallenden Chemikalien, insbesondere Pestiziden, wie Metaldehyd; Fungiziden und Insektiziden; (ii) industriell genutzten und/oder anfallenden Chemikalien und/oder Industriechemikalien, insbesondere Weichmachern, wie Bisphenol-A; Röntgenkontrastmitteln, wie Amidotrizoesäure und lopamidol; Tensiden, wie perfluorierten Tensiden; Antiklopfmitteln, wie Methyl-tert-butylether (MTBE); und *Dissolved Organic Carbons* (DOC); und (iii) pharmazeutischen Wirkstoffen und/oder Human- und/oder Veterinärpharmaka, insbesondere Antibiotika; Analgetika und Hormonwirkstoffen; vorzugsweise aus der Gruppe von landwirtschaftlich genutzten und/oder anfallenden Chemikalien, insbesondere Pestiziden, wie Metaldehyd; Fungiziden und Insektiziden.

Im Rahmen des erfindungsgemäßen Verfahrens kann somit eine große Vielzahl verschiedener Verunreinigungen aus dem zu behandelnden bzw. aufzureinigenden Wasser A entfernt werden, so dass das erfindungsgemäße Verfahren eine entsprechende Einsatzbreite aufweist. Im Rahmen der vorliegenden Erfindung ist es gleichermaßen im besonderen Maße möglich, spezielle landwirtschaftlich genutzte bzw. landwirtschaftlich anfallende Chemikalien, insbesondere Pestizide, wie beispielsweise Metaldehyd, adsorptiv zu entfernen, und zwar insbesondere auch, was die im Fall von Konzentrationsanstiegen anfallenden großen Mengen der entsprechenden Verunreinigungen anbelangt.

Im Hinblick auf das erfindungsgemäße Verfahren kann somit insbesondere derart vorgegangen werden, dass sich der Einlasskonzentrationsgrenzwert und/oder der entsprechende Auslasskonzentrationsgrenzwert auf eine konkrete Substanz der Verunreinigungen bezieht, wie beispielsweise Pestizide, insbesondere in Form von Metaldehyd.

Was den in Rede stehenden vorgegebenen Einlasskonzentrationsgrenzwert anbelangt, so kann dieser - in Ergänzung zu den obigen Ausführungen - insbesondere auf einen Wert von 0,1 µg/l oder mehr eingestellt werden, beispielsweise im Hinblick auf ein Pestizid, insbesondere in Form von Metaldehyd. Dementsprechend wird im Rahmen des erfindungsgemäßen Verfahrens bei Überschreiten der vorgenannten vorgegebenen Grenzwerte, insbesondere Einlasskonzentrationsgrenzwerte, die in Rede stehende Spitzenlastadsorptionseinrichtung 3 zugeschaltet bzw. der Hauptadsorptionseinrichtung 2 vorgeschaltet bzw. wird bei Unterschreiten bzw. Nichterreichen die Adsorptionsfiltereinrichtung 3 abgeschaltet bzw. überbrückt.

Zudem kann im Rahmen der vorliegenden Erfindung auch derart vorgegangen werden, dass der gegebenenfalls vorgegebene (nochmals) weitere Konzentrationsgrenzwert, insbesondere wie zuvor definiert, auf einen Wert eingestellt wird, welcher kleiner ist als der entsprechende Wert des Einlasskonzentrationsgrenzwertes. Beispielsweise kann der diesbezügliche weitere Grenzwert auf einen Wert von größer als 0,05 µg/l bis weniger als 0,1 µg/l vorgegeben werden. Bei Überschreiten des in Rede stehenden Grenzwertes kann erfindungsgemäß derart vorgegangen werden, dass das zu behandelnde bzw. aufzureinigende Wasser erneut der Spitzenlastadsorptionseinrichtung 3 oder aber zusätzlich der gegebenenfalls vorhandenen weiteren Spitzenlastadsorptionseinrichtung 3' zugeführt wird.

Schließlich kann der Auslasskonzentrationsgrenzwert auf einen Wert beispielsweise von 0,05 µg/l oder weniger vorgegeben werden.

Insbesondere kann das im Rahmen des erfindungsgemäßen Verfahrens erhaltene behandelte bzw. aufgereinigte Wasser B eine Menge bzw. Konzentration an Verunreinigungen von höchstens 0,1 µg/l, insbesondere höchstens 0,08 µg/l, vorzugsweise höchstens 0,05 µg/l, aufweisen, insbesondere bezogen auf die in dem behandelten bzw. aufgereinigten Wasser B vorhandenen Pestizide, insbesondere Metaldehyd.

Im Hinblick auf das erfindungsgemäße Verfahren kommt auch dem hierzu eingesetzten partikelförmigen Adsorptionsmaterial eine große Bedeutung zu, insbesondere im Hinblick auf die Bereitstellung einer hohen adsorptiven Reinigungseffizienz sowie -spezifität, insbesondere im Hinblick auf die Adsorption spezieller Verunreinigungen, wie von Pestiziden, insbesondere Metaldehyd:
In diesem Zusammenhang kann das partikelförmige Adsorptionsmaterial in Form der partikelförmigen Aktivkohle, vorzugsweise der kornförmigen Aktivkohle, bevorzugt der kugelförmigen Aktivkohle, der Spitzenlastadsorptionseinrichtung 3 und das partikelförmige Adsorptionsmaterial in Form der partikelförmigen Aktivkohle, vorzugsweise der kornförmigen Aktivkohle, bevorzugt der kugelförmigen Aktivkohle, der Hauptadsorptionseinrichtung 2, unabhängig voneinander, erhältlich sein durch Carbonisierung und nachfolgende Aktivierung eines synthetischen und/oder nicht naturstoffbasierten Ausgangsmaterials, insbesondere auf Basis organischer Polymere.

Zudem kann die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, aus einem Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten werden, insbesondere durch Carbonisierung und nachfolgende Aktivierung des Ausgangsmaterials, insbesondere wobei der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt.

In diesem Zusammenhang kann das Ausgangsmaterial ein insbesondere sulfoniertes und/oder Sulfonsäuregruppen enthaltendes lonenaustauscherharz, insbesondere vom Geltyp, sein.

Gleichermaßen kann als partikelförmige Aktivkohle, vorzugsweise kornförmige Aktivkohle, bevorzugt kugelförmige Aktivkohle, der Spitzenlastadsorptionseinrichtung 3 und als partikelförmige Aktivkohle, vorzugsweise kornförmige Aktivkohle, bevorzugt kugelförmige Aktivkohle, der Hauptadsorptionseinrichtung 2, unabhängig voneinander, eine polymerbasierte sphärische Aktivkohle (PBSAC; *Polymer-based Spherical Activated Carbon*) eingesetzt werden.

Die eingesetzte Aktivkohle kann dabei grundsätzlich nach bekannten Verfahren des Standes der Technik erhalten werden: Insbesondere werden zu diesem Zweck kugelförmige sulfonierte organische Polymere, insbesondere auf Basis von divinylbenzolvernetztem Polystyrol, carbonisiert und anschließend zu der betreffenden Aktivkohle aktiviert, insbesondere wie zuvor angeführt. Für weitergehende diesbezügliche Einzelheiten kann beispielsweise auf die DE 43 28 219 A1, DE 43 04 026 A1, DE 196 00 237 A1 sowie auf die EP 1 918 022 A1 bzw. auf die parallele, zu derselben Patentfamilie gehörende US 2008/0107589 A1 verwiesen werden, deren jeweiliger Inhalt hiermit durch Bezugnahme vollumfänglich eingeschlossen ist.

Im Rahmen der vorliegenden Erfindung zum Einsatz kommende Aktivkohlen sind im Allgemeinen kommerziell erhältlich bzw. handelsüblich. Insbesondere können Aktivkohlen zum Einsatz kommen, welche beispielsweise von der Blücher GmbH, Erkrath, Deutschland, vertrieben werden.

Die erfindungsgemäß eingesetzten Aktivkohlen weisen neben ihren hervorragenden physikalischen Eigenschaften (d. h. große mechanische Stabilität, geringer Abrieb bzw. geringe Staubbildung und infolgedessen hervorragende Transporteigenschaften sowohl innerhalb der Schüttung als auch im Rahmen des Regenerationsprozesses) darüber hinaus auch hervorragende Adsorptionseigenschaften im Hinblick auf die aus dem zu behandelnden bzw. aufzureinigenden Wasser zu entfernenden Verunreinigungen auf. Insbesondere kann im Rahmen der vorliegenden Erfindung eine gewissermaßen maßgeschneiderte Aktivkohle eingesetzt werden, welche der Komplexität, den Molekülgrößen, sowie den spezifischen Polaritäten der zu entfernenden Verunreinigungen bzw. Mikroschadstoffe mit dem diesbezüglichen Einfluss auf das Adsorptionsverhalten Rechnung trägt. Dabei kommt insbesondere unter Berücksichtigung der Polaritäten und der in der Wasserphase resultierenden Hydrathüllen der entsprechenden Molekülgröße der zu entfernenden Verunreinigungen eine große Bedeutung insofern zu, als für eine optimale Adsorption ein sehr spezifisches Adsorptionsporensystem mit einer darauf abgestimmten speziellen Oberflächenchemie des Adsorptionsmaterials bzw. der eingesetzten Aktivkohle von Vorteil ist. Wie zuvor angeführt, können die im Rahmen der vorliegenden Erfindung eingesetzten Adsorptionsmaterialien bzw. Aktivkohlen diesbezüglich gewissermaßen individuell angepasst bzw. maßgeschneidert werden, was zu einer weiterführenden Optimierung der Adsorptionseigenschaften führt. Infolgedessen resultieren signifikante Vorteile auch gegenüber herkömmlichen Adsorptionsmaterialien, insbesondere was die Adsorptionsleistung, -selektivität und die damit in Verbindung stehenden Standzeiten bzw. Einsatzzeiten anbelangt, was insgesamt auch zu reduzierten Kosten führt.

Erfindungsgemäß kann es folglich insbesondere vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die kornförmige Aktivkohle, bevorzugt die kugelförmige Aktivkohle, der Hauptadsorptionseinrichtung 2, unabhängig voneinander, eine Schüttdichte (*bulk density*) in einem Bereich von 100 g/l bis 900 g/l, insbesondere in einem Bereich von 350 g/l bis 750 g/l, vorzugsweise in einem Bereich von 375 g/l bis 625 g/l, bevorzugt in einem Bereich von 415 g/l bis 550 g/l, aufweisen.

Zudem kann es erfindungsgemäß vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine Rüttel- und Stampfdichte im Bereich von 150 g/l bis 1.500 g/l, insbesondere im Bereich von 300 g/l bis 1.250 g/l, vorzugsweise im Bereich von 350 g/l bis 900 g/l, bevorzugt im Bereich von 400 g/l bis 700 g/l, besonders bevorzugt im Bereich von 425 g/l bis 600 g/l, aufweisen.

Die Schüttdichte bzw. Rüttel- und/oder Stampfdichte kann insbesondere gemäß der ASTM B527-93/00 bestimmt werden. Die Rüttel- bzw. Stampfdichte als solche kann insbesondere auch gemäß der DIN 53194 bestimmt werden.

Zudem kann es erfindungsgemäß vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine Abriebfestigkeit (*ball pan hardness*) und/oder Abriebhärte von mindestens 92 %, insbesondere mindestens 95 %, vorzugsweise mindestens 96 %, bevorzugt mindestens 97 %, besonders bevorzugt mindestens 97,5 %, weiter bevorzugt mindestens 98 %, noch weiter bevorzugt mindestens 98,5 %, wiederum weiter bevorzugt mindestens 99 %, aufweisen.

Insbesondere kann es vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine Druck- bzw. Berstfestigkeit (Gewichtsbelastbarkeit) pro Adsorptionspartikel, insbesondere pro Aktivkohlepartikel, von mindestens 5 Newton, insbesondere mindestens 10 Newton, vorzugsweise mindestens 15 Newton, bevorzugt mindestens 20 Newton, und/oder eine Druck- und/oder Berstfestigkeit (Gewichtsbelastbarkeit) pro Adsorptionspartikel, insbesondere pro Aktivkohlepartikel, im Bereich von 5 bis 50 Newton, insbesondere 10 bis 45 Newton, vorzugsweise 15 bis 40 Newton, aufweisen.

Somit zeichnet sich die erfindungsgemäß eingesetzte Aktivkohle weiterhin durch hervorragende mechanische Eigenschaften aus, was sich auch in der hohen Abriebfestigkeit äußert. Die hohe mechanische Festigkeit der erfindungsgemäß eingesetzten Aktivkohle führt im Rahmen der Anwendung allenfalls zu geringen Abrieben, was insbesondere hinsichtlich der Einsatz- bzw. Standzeit sowie der Vermeidung von Schlammbildung durch Abrieb oder dergleichen insbesondere bei Filtersystemen zur Aufbereitung von Wasser von Vorteil ist. Die Abriebfestigkeit bzw. - härte kann im Allgemeinen gemäß der ASTM D3802-05 bestimmt werden.

Die Bestimmung der Druck- bzw. Berstfestigkeit kann in einer dem Fachmann an sich bekannten Art und Weise erfolgen, insbesondere anhand der Bestimmung der Druck- bzw. Berstfestigkeit an einzelnen Partikeln bzw. Teilchen über Krafteinwirkung mittels eines Stempels bis zum Bersten des jeweiligen Partikels bzw. Teilchens.

Erfindungsgemäß kann es zudem vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, einen Wassergehalt und/oder Feuchtigkeitsgehalt im Bereich von 0,005 Gew.-% bis 2,5 Gew.-%, insbesondere im Bereich von 0,01 Gew.-% bis 1,5 Gew.-%, vorzugsweise im Bereich von 0,05 Gew.-% bis 1 Gew.-%, bevorzugt im Bereich von 0,075 Gew.-% bis 0,75 Gew.-%, besonders bevorzugt im Bereich von 0,08 Gew.-% bis 0,5 Gew.-%, bezogen auf die partikelförmige Aktivkohle, aufweisen. Derartige Aktivkohlen eignen sich in besonderer Weise für den erfindungsgemäßen Zweck. Die diesbezügliche Bestimmung kann insbesondere gemäß der ASTM D2867-04 erfolgen.

Weiterhin kann es erfindungsgemäß auch vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, einen Aschegehalt von höchstens 1 Gew.-%, insbesondere höchstens 0,9 Gew.-%, vorzugsweise höchstens 0,8 Gew.-%, bevorzugt höchstens 0,7 Gew.-%, besonders bevorzugt höchstens 0,5 Gew.-%, ganz besonders bevorzugt höchstens 0,3 Gew.-%, weiter bevorzugt höchstens 0,2 Gew.-%, bezogen auf die partikelförmige Aktivkohle, aufweisen. Der Aschegehalt der erfindungsgemäß in bevorzugter Weise eingesetzten Aktivkohle kann insbesondere gemäß der ASTM D2866-94/04 bestimmt werden.

Darüber hinaus ist es im Rahmen der vorliegenden Erfindung bevorzugt, wenn die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine Partikelgröße, insbesondere einen Teilchendurchmesser, in einem Bereich von 0,01 mm bis 2,5 mm, insbesondere in einem Bereich von 0,02 mm bis 2 mm, bevorzugt in einem Bereich von 0,05 mm bis 1,5 mm, vorzugsweise in einem Bereich von 0,1 mm bis 1 mm, besonders bevorzugt in einem Bereich von 0,2 mm bis 0,8 mm, ganz besonders bevorzugt in einem Bereich von 0,3 mm bis 0,6 mm, aufweisen, insbesondere wobei mindestens 70 Gew.-%, insbesondere mindestens 80 Gew.-%, der Adsorptionspartikel, insbesondere der Aktivkohlepartikel, Partikelgrößen, insbesondere Teilchendurchmesser, in den vorgenannten Bereichen aufweisen.

In diesem Zusammenhang kann es erfindungsgemäß vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine mittlere Partikelgröße D50, insbesondere einen mittleren Teilchendurchmesser D50, im Bereich von 0,15 mm bis 1,15 mm, insbesondere 0,2 mm bis 1 mm, vorzugsweise 0,25 mm bis 0,85 mm, bevorzugt 0,3 mm bis 0,7 mm, besonders bevorzugt 0,35 mm bis 0,55 mm, aufweisen.

Die entsprechenden Teilchengrößen bzw. -durchmesser können insbesondere auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. zudem kann auch eine Bestimmung mittels eines Camsizers erfolgen. Die jeweiligen Bestimmungsmethoden sind dem Fachmann als solche wohlbekannt, so dass es diesbezüglich keiner weiteren Ausführungen bedarf. Die Auswahl spezieller Teilchengrößen bzw. Teilchendurchmesser führt im Lichte der vorliegenden Erfindung zum einen zu einer besonders gleichmäßigen Schüttung innerhalb der Anlage und zu einem weiter verbesserten Strömungsverhalten des Wassers in der Schüttung.

Was das erfindungsgemäß in bevorzugter Weise eingesetzte Adsorptionsmaterial weiterhin anbelangt, so kann es zudem vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine spezifische Oberfläche (BET-Oberfläche) von mindestens 600 m²/g, insbesondere mindestens 900 m²/g, vorzugsweise mindestens 1.200 m²/g, besonders bevorzugt mindestens 1.400 m²/g, aufweisen. In diesem Zusammenhang kann es gleichermaßen vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, eine spezifische Oberfläche (BET-Oberfläche) in einem Bereich von 600 m²/g bis 3.750 m²/g, insbesondere in einem Bereich von 900 m²/g bis 3.000 m²/g, vorzugsweise in einem Bereich von 1.200 m²/g bis 2.250 m²/g, besonders bevorzugt in einem Bereich von 1.400 m²/g bis 2.000 m²/g, aufweisen.

Die Bestimmung der spezifischen Oberfläche gemäß BET ist dem Fachmann grundsätzlich bekannt. Sämtliche BET-Oberflächenangaben beziehen sich insbesondere auf die Bestimmung gemäß ASTM D6556-04. Im Rahmen der vorliegenden Erfindung wird zur Bestimmung der BET-Oberfläche insbesondere die sogenannte MultiPoint-BET-Bestimmungsmethode (MP-BET) in einem Partialdruckbereich p/p₀ von 0,05 bis 0,1 angewendet.

In entsprechender Weise kann es erfindungsgemäß vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, ein Gesamtporenvolumen nach Gurvich von mindestens 0,55 cm³/g, insbesondere mindestens 0,65 cm³/g, vorzugsweise mindestens 0,7 cm³/g, besonders bevorzugt mindestens 0,75 cm³/g, ganz besonders bevorzugt mindestens 0,8 cm³/g, aufweisen. In diese Zusammenhang kann es gleichermaßen vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander, ein Gesamtporenvolumen nach Gurvich in einem Bereich von 0,55 cm³/g bis 2,2 cm³/g, insbesondere in einem Bereich von 0,65 cm³/g bis 2 cm³/g, vorzugsweise in einem Bereich von 0,7 cm³/g bis 1,5 cm³/g, besonders bevorzugt in einem Bereich von 0,8 cm³/g bis 1,2 cm³/g, aufweisen.

Was die Bestimmung des Gesamtporenvolumens nach Gurvich anbelangt, so handelt es sich um eine dem Fachmann auf diesem Gebiet an sich bekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et a/., Characterization of Porous Solids and Powders: Surface Area Pore Size and Density, Kluwer Academic Publishers, Article Technologies Series, Seiten 111 ff.

Erfindungsgemäß kann es zudem vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2, unabhängig voneinander eine lodzahl von mindestens 1.100 mg/g, insbesondere mindestens 1.300 mg/g, bevorzugt mindestens 1.525 mg/g, aufweisen. In diesem Zusammenhang kann es zudem vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 und die kornförmige Aktivkohle, bevorzugt die kugelförmige Aktivkohle, der Hauptadsorptionseinrichtung 2, unabhängig voneinander, eine lodzahl in einem Bereich von 1.100 mg/g bis 2.000 mg/g, insbesondere in einem Bereich von 1.300 mg/g bis 1.950 mg/g, vorzugsweise in einem Bereich von 1.525 mg/g bis 1.900 mg/g, aufweisen.

Die lodzahl wird insbesondere gemäß der ASTM D4607-94/99 bestimmt oder mittels CEFIC, Test Methods for Activated Carbon, April 1986, Abschnitt 2.3.).

Gemäß einer erfindungsgemäß bevorzugten Ausführungsform kann es vorgesehen sein dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2 zumindest im Wesentlichen gleiche und/oder identische Materialeigenschaften aufweisen, insbesondere wie zuvor definiert. In diesem Zusammenhang kann es insbesondere vorgesehen sein dass für die partikelförmige Aktivkohle, vorzugsweise die kornförmige Aktivkohle, bevorzugt die kugelförmige Aktivkohle, der Spitzenlastadsorptionseinrichtung 3 und für die partikelförmige Aktivkohle, vorzugsweise die kornförmige Aktivkohle, bevorzugt die kugelförmige Aktivkohle, der Hauptadsorptionseinrichtung 2 zumindest im Wesentlichen identische Materialien und/oder Materialien mit zumindest im Wesentlichen identischen Materialeigenschaften, insbesondere wie zuvor definiert, eingesetzt werden.

Im Rahmen der vorliegenden Erfindung ist es gleichermaßen möglich, dass die partikelförmige Aktivkohle, vorzugsweise die kornförmige Aktivkohle, bevorzugt die kugelförmige Aktivkohle, der Spitzenlastadsorptionseinrichtung 3 und die partikelförmige Aktivkohle, vorzugsweise die kornförmige Aktivkohle, bevorzugt die kugelförmige Aktivkohle, der Hauptadsorptionseinrichtung 2 in mindestens einer Materialeigenschaft, insbesondere wie in zuvor definiert, voneinander unterscheiden.

In diesem Zusammenhang kann es insbesondere vorgesehen sein, dass die Materialeigenschaft ausgewählt ist aus der Gruppe von (i) Schüttdichte und/oder Rüttel- und Stampfdichte; (ii) Teilchenform, insbesondere Partikelgröße, vorzugsweise Teilchendurchmesser, und/oder mittlerer Partikelgröße (D50), vorzugsweise mittlerem Teilchendurchmesser D50; (iii) spezifischer Oberfläche, insbesondere spezifischer BET-Oberfläche; (iv) Gesamtporenvolumen, insbesondere Gesamtporenvolumen nach Gurvich; sowie (v) Porosität und/oder Porenverteilung; und/oder wobei sich die jeweilige Materialeigenschaft der partikelförmigen Aktivkohle, vorzugsweise der kornförmigen Aktivkohle, bevorzugt der kugelförmigen Aktivkohle, der Spitzenlastadsorptionseinrichtung 3 und der partikelförmigen Aktivkohle, vorzugsweise der kornförmigen Aktivkohle, bevorzugt der kugelförmigen Aktivkohle, der Hauptadsorptionseinrichtung 2 um mindestens einen Faktor 1,05, insbesondere mindestens einen Faktor 1,1, vorzugsweise mindestens einen Faktor 1,15, bevorzugt mindestens einen Faktor 1,2, besonders bevorzugt mindestens einen Faktor 1,3, ganz besonders bevorzugt mindestens einen Faktor 1,5, jeweils bezogen auf den kleineren Wert der Materialeigenschaft, voneinander unterscheiden.

Erfindungsgemäß kann es vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 einen höheren Aktivierungsgrad und/oder eine größere spezifische Oberfläche, insbesondere BET-Oberfläche, und/oder ein größeres Gesamtporenvolumen, insbesondere Gesamtporenvolumen nach Gurvich, als die partikelförmige Aktivkohle, der Hauptadsorptionseinrichtung 2, aufweist. In diesem Zusammenhang kann es insbesondere vorgesehen sein, dass die partikelförmige Aktivkohle, vorzugsweise die kornförmige Aktivkohle, bevorzugt die kugelförmige Aktivkohle, der Spitzenlastadsorptionseinrichtung 3 einen um mindestens einen Faktor 1,05, insbesondere mindestens einen Faktor 1,1, vorzugsweise mindestens einen Faktor 1,15, bevorzugt mindestens einen Faktor 1,2, besonders bevorzugt mindestens einen Faktor 1,3, ganz besonders bevorzugt mindestens einen Faktor 1,5, größeren Aktivierungsgrad und/oder größere spezifische Oberfläche, insbesondere BET-Oberfläche, und/oder größeres Gesamtporenvolumen, insbesondere Gesamtporenvolumen nach Gurvich, als das partikelförmige Adsorptionsmaterial, insbesondere die partikelförmige Aktivkohle, vorzugsweise die kornförmige Aktivkohle, bevorzugt die kugelförmige Aktivkohle, der Hauptadsorptionseinrichtung 2, aufweist.

Erfindungsgemäß wird somit insgesamt ein leistungsfähiges Verfahren zur Aufbereitung bzw. Aufreinigung von Wasser bereitgestellt, mit welchem auch im Rahmen von Konzentrationsanstiegen vorliegende hohe Mengen an Verunreinigungen wirksam aus dem aufzureinigenden Wasser entfernt werden können.

Darüber hinaus betrifft die vorliegende Erfindung - gemäß einem **weiteren** Aspekt der vorliegenden Erfindung - auch eine Wasseraufbereitungsanlage 1, insbesondere zur vorzugsweise kontinuierlichen Behandlung und Aufreinigung von mit organischen Verunreinigungen, vorzugsweise Mikroschadstoffen und/oder Spurenstoffen, belastetem Wasser A, insbesondere Rohwasser, vorzugsweise zu Zwecken der Gewinnung von behandeltem und aufgereinigtem Wasser B, insbesondere Reinwasser, vorzugsweise Trinkwasser und/oder Brauchwasser, vorzugsweise eine Wasseraufbereitungsanlage 1 zur Durchführung eines erfindungsgemäßen Verfahrens, wie zuvor definiert,
wobei die Wasseraufbereitungsanlage 1 zur adsorptiven Entfernung von Verunreinigungen aus dem zu behandelnden und aufzureinigenden Wasser A, bevorzugt im Falle von zeitlich begrenzt und/oder spontan auftretenden Konzentrationsanstiegen der Verunreinigungen in dem zu behandelnden und aufzureinigenden Wasser A, ausgebildet ist,
wobei es vorgesehen ist, das zu behandelnde und aufzureinigende Wasser A der Wasseraufreinigungsanlage 1 zur adsorptiven Entfernung der Verunreinigungen zuzuführen,
wobei die Wasseraufreinigungsanlage 1 mindestens eine Hauptadsorptionseinrichtung 2 und mindestens eine in Abhängigkeit von einem vorgegebenen Einlasskonzentrationsgrenzwert, der Verunreinigungen in dem zu behandelnden und aufzureinigenden Wasser A zuschaltbare, stromaufwärts zur Hauptadsorptionseinrichtung 2 angeordnete Spitzenlastadsorptionseinrichtung 3 aufweist,
wobei die Hauptadsorptionseinrichtung (2) ein Festbett auf Basis einer partikelförmigen Aktivkohle in loser Schüttung der partikelförmigen Aktivkohle aufweist und wobei die Spitzenlastadsorptionseinrichtung (3) ein Festbett auf Basis einer partikelförmigen Aktivkohle in loser Schüttung der partikelförmigen Aktivkohle aufweist,
wobei die Spitzenlastadsorptionseinrichtung (3) ein geringeres Festbettfiltervolumen (V_{SLA}) als die Hauptadsorptionseinrichtung (2) aufweist, wobei das Verhältnis des Festbettfiltervolumens (V_{HA}) der Hauptadsorptionseinrichtung (2) einerseits zu dem Festbettfiltervolumen (V_{SLA}) der Spitzenlastadsorptionseinrichtung (3) andererseits mindestens 1,2 : 1 beträgt, und
wobei die Wasseraufreinigungsanlage (1) derart ausgebildet ist, dass die Verweilzeit des zu behandelnden und aufzureinigenden Wassers (A) in der Spitzenlastadsorptionseinrichtung (3) auf einen kleineren Wert als in der Hauptadsorptionseinrichtung (2) eingestellt wird, wobei das Verhältnis der Verweilzeit des zu behandelnden und aufzureinigenden Wassers (A) in der Hauptadsorptionseinrichtung (2) zu der Verweilzeit des zu behandelnden und aufzureinigenden Wassers (A) in der Spitzenlastadsorptionseinrichtung (3) auf einen Wert von mindestens 1,2 : 1 eingestellt wird,
wobei die Wasseraufreinigungsanlage 1 derart ausgebildet ist, dass das zu behandelnde und aufzureinigende Wasser A der Hauptadsorptionseinrichtung 2 zugeführt und in der Hauptadsorptionseinrichtung 2 behandelt und aufgereinigt wird, wobei die Verunreinigungen adsorptiv zumindest im Wesentlichen vollständig in der Hauptadsorptionseinrichtung 2 entfernt werden, insbesondere derart, dass die Konzentration der Verunreinigungen unterhalb eines vorgegebenen Auslasskonzentrationsgrenzwertes abgesenkt wird, und
wobei die Wasseraufreinigungsanlage 1 derart ausgebildet ist, dass bei Überschreitung des vorgegebenen Einlasskonzentrationsgrenzwertes der Verunreinigungen in dem zu behandelnden und aufzureinigenden Wasser A die Spitzenlastadsorptionseinrichtung 3 der Hauptadsorptionseinrichtung 2 vorgeschaltet wird derart, dass das zu behandelnde und aufzureinigende Wasser A zumindest teilweise, vorzugsweise vollständig, zunächst der Spitzenlastadsorptionseinrichtung 3 zugeführt und in der Spitzenlastadsorptionseinrichtung 3 behandelt und aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird.

Im Allgemeinen ist die Spitzenlastadsorptionseinrichtung 3 zuschaltbar und/oder der Hauptadsorptionseinrichtung 2 vorschaltbar ausgebildet derart, dass bei Zuschaltung und/oder Vorschaltung der Spitzenlastadsorptionseinrichtung 3 die Konzentration an Verunreinigungen in dem zu behandelnden und aufzureinigenden Wasser A stromabwärts zu der Spitzenlastadsorptionseinrichtung 3 und/oder am Auslass der Spitzenlastadsorptionseinrichtung 3, bezogen auf die Verfahrens- bzw. Prozessrichtung, unterhalb des vorgegebenen Einlasskonzentrationsgrenzwertes abgesenkt wird.

Insbesondere ist die Spitzenlastadsorptionseinrichtung 3 zuschaltbar bzw. vorschaltbar ausgebildet derart, dass bei Zuschaltung und/oder Vorschaltung der Spitzenlastadsorptionseinrichtung 3 die Konzentration an Verunreinigungen in dem behandelten und aufgereinigten Wasser B und/oder stromabwärts zu der Hauptadsorptionseinrichtung 2 und/oder am Auslass der Hauptadsorptionseinrichtung 2, bezogen auf die Verfahrens- und/oder Prozessrichtung, unterhalb des vorgegebenen Auslasskonzentrationsgrenzwertes abgesenkt wird.

Im Allgemeinen weist die Hauptadsorptionseinrichtung 2 eine partikelförmige Aktivkohle, vorzugsweise eine kornförmige Aktivkohle, bevorzugt eine kugelförmige Aktivkohle, auf. Erfindungsgemäß weist die Hauptadsorptionseinrichtung 2 ein Festbett auf Basis partikelförmiger Aktivkohle, vorzugsweise auf Basis kornförmiger Aktivkohle, bevorzugt auf Basis kugelförmiger Aktivkohle, insbesondere in loser Schüttung des partikelförmigen Adsorptionsmaterials, auf.

Weiterhin weist die Spitzenlastadsorptionseinrichtung 3 eine partikelförmige Aktivkohle, vorzugsweise eine kornförmige Aktivkohle, bevorzugt eine kugelförmige Aktivkohle, auf. Erfindungsgemäß weist die Spitzenlastadsorptionseinrichtung 3 zudem ein Festbett auf Basis partikelförmiger Aktivkohle, vorzugsweise auf Basis kornförmiger Aktivkohle, bevorzugt auf Basis kugelförmiger Aktivkohle, insbesondere in loser Schüttung des partikelförmigen Adsorptionsmaterials, auf.

Erfindungsgemäß ist es zudem vorgesehen, dass die Spitzenlastadsorptionseinrichtung 3 ein geringeres Festbettfiltervolumen V_{SLA}, insbesondere ein geringeres Volumen der Schüttung, der partikelförmigen Aktivkohle, vorzugsweise der kornförmigen Aktivkohle, bevorzugt der kugelförmigen Aktivkohle, und/oder eine geringere Menge der partikelförmigen Aktivkohle, vorzugsweise der kornförmigen Aktivkohle, bevorzugt der kugelförmigen Aktivkohle, als die Hauptadsorptionseinrichtung 2 aufweist.

In diesem Zusammenhang kann die Spitzenlastadsorptionseinrichtung 3 ein Festbettfiltervolumen V_{SLA}, insbesondere ein Volumen der Schüttung, der partikelförmigen Aktivkohle, vorzugsweise der kornförmigen Aktivkohle, bevorzugt der kugelförmigen Aktivkohle, von mindestens 0,01 m³, insbesondere mindestens 0,1 m³, vorzugsweise mindestens 0,5 m³, bevorzugt mindestens 1 m³, besonders bevorzugt mindestens 5 m³, ganz besonders bevorzugt mindestens 10 m³, weiter bevorzugt mindestens 15 m³, aufweisen.

Gleichermaßen kann die Spitzenlastadsorptionseinrichtung 3 ein Festbettfiltervolumen V_{SLA}, insbesondere ein Volumen der Schüttung, der partikelförmigen Aktivkohle, vorzugsweise der kornförmigen Aktivkohle, bevorzugt der kugelförmigen Aktivkohle, in einem Bereich von 0,01 m³ bis 750 m³, insbesondere in einem Bereich von 0,1 m³ bis 600 m³, vorzugsweise in einem Bereich von 0,5 m³ bis 500 m³, bevorzugt in einem Bereich von 1 m³ bis 300 m³, besonders bevorzugt in einem Bereich von 5 m³ bis 200 m³, ganz besonders bevorzugt in einem Bereich von 10 m³ bis 100 m³, weiter bevorzugt in einem Bereich von 15 m³ bis 150 m³, aufweisen.

Gleichermaßen kann die Hauptadsorptionseinrichtung 2 ein Festbettfiltervolumen V_{HA}, insbesondere ein Volumen der Schüttung, der partikelförmigen Aktivkohle, vorzugsweise der kornförmigen Aktivkohle, bevorzugt der kugelförmigen Aktivkohle, von mindestens 1 m³, insbesondere mindestens 5 m³, vorzugsweise mindestens 10 m³, bevorzugt mindestens 15 m³, besonders bevorzugt mindestens 20 m³, aufweisen.

In diesem Zusammenhang kann die Hauptadsorptionseinrichtung 2 ein Festbettfiltervolumen V_{HA}, insbesondere ein Volumen der Schüttung, der partikelförmigen Aktivkohle, vorzugsweise der kornförmigen Aktivkohle, bevorzugt der kugelförmigen Aktivkohle, in einem Bereich von 1 m³ bis 1.500 m³, insbesondere in einem Bereich von 5 m³ bis 1.000 m³, vorzugsweise in einem Bereich von 10 m³ bis 800 m³, bevorzugt in einem Bereich von 15 m³ bis 600 m³, besonders bevorzugt in einem Bereich von 20 m³ bis 400 m³, aufweisen.

Erfindungsgemäß beträgt das Verhältnis des Festbettfiltervolumens V_{HA}, insbesondere des Volumens der Schüttung, der partikelförmigen Aktivkohle, vorzugsweise der kornförmigen Aktivkohle, bevorzugt der kugelförmigen Aktivkohle, der Hauptadsorptionseinrichtung 2 einerseits zu dem Festbettfiltervolumen V_{SLA}, vorzugsweise Volumen der Schüttung, der partikelförmigen Aktivkohle, vorzugsweise der kornförmigen Aktivkohle, bevorzugt der kugelförmigen Aktivkohle, der Spitzenlastadsorptionseinrichtung 3 andererseits mindestens 1,2 : 1, besonders bevorzugt mindestens 1,4 : 1, ganz besonders bevorzugt mindestens 1,6 : 1.

Insbesondere kann das Verhältnis des Festbettfiltervolumens V_{HA}, insbesondere des Volumens der Schüttung, der partikelförmigen Aktivkohle, vorzugsweise der kornförmigen Aktivkohle, bevorzugt der kugelförmigen Aktivkohle, der Hauptadsorptionseinrichtung 2 einerseits zu dem Festbettfiltervolumen V_{SLA}, vorzugsweise Volumen der Schüttung, der partikelförmigen Aktivkohle, vorzugsweise der kornförmigen Aktivkohle, bevorzugt der kugelförmigen Aktivkohle, der Spitzenlastadsorptionseinrichtung 3 andererseits in einem Bereich von 1,2 : 1 bis 30 : 1, besonders bevorzugt in einem Bereich von 1,4 : 1 bis 20 : 1, ganz besonders bevorzugt in einem Bereich von 1,6: 1 bis 10: 1, weiter bevorzugt in einem Bereich von 1,8 : 1 bis 5 : 1, liegen.

Im Allgemeinen weist die Wasseraufreinigungsanlage 1 eine Standzeit und/oder ein Bettvolumen BV von mindestens 1.000 BV, insbesondere mindestens 5.000 BV, vorzugsweise mindestens 10.000 BV, bevorzugt mindestens 15.000 BV, besonders bevorzugt mindestens 20.000 BV, auf, berechnet als Quotient aus dem Volumen des behandelten und aufgereinigten Wassers V_{H2O} einerseits und der Summe des Festbettfiltervolumens V_{SLA}, insbesondere des Volumens der Schüttung, des partikelförmigen Adsorptionsmaterials der Spitzenlastadsorptionseinrichtung 3 und des Festbettfiltervolumens V_{HA}, insbesondere des Volumens der Schüttung, des partikelförmigen Adsorptionsmaterials der Hauptadsorptionseinrichtung 2 andererseits [BV = V_{H2O[m³]} / (V_{SLA[m³]} + V_{HA[m³]})].

Insbesondere kann die Wasseraufreinigungsanlage 1 eine Standzeit und/oder ein Bettvolumen BV in einem Bereich von 1.000 BV bis 500.000 BV, insbesondere in einem Bereich von 5.000 BV bis 200.000 BV, vorzugsweise in einem Bereich von 10.000 BV bis 100.000 BV, bevorzugt in einem Bereich von 15.000 BV bis 50.000 BV, besonders bevorzugt in einem Bereich von 20.000 BV bis 40.000 BV, aufweisen, berechnet als Quotient aus dem Volumen des behandelten und aufgereinigten Wassers V_{H2O} einerseits und der Summe des Festbettfiltervolumens V_{SLA}, insbesondere des Volumens der Schüttung, des partikelförmigen Adsorptionsmaterials der Spitzenlastadsorptionseinrichtung 3 und des Festbettfiltervolumens V_{HA}, insbesondere des Volumens der Schüttung, des partikelförmigen Adsorptionsmaterials der Hauptadsorptionseinrichtung 2 andererseits [BV = V_{H2O[m³]} / (V_{SLA[m³]} + V_{HA[m³]})].

Im Allgemeinen kann die Wasseraufreinigungsanlage 1 derart ausgebildet sein, dass bei Überschreitung des vorgegebenen Einlasskonzentrationsgrenzwertes das zu behandelnde und aufzureinigende Wasser A zumindest teilweise, vorzugsweise vollständig, zunächst durch und/oder in die Spitzenlastadsorptionseinrichtung 3 geleitet und/oder geführt und anschließend durch und/oder in die Hauptadsorptionseinrichtung 2 geleitet und/oder geführt wird.

Weiterhin kann die Wasseraufreinigungsanlage 1 derart ausgebildet sein, dass bei Überschreitung des Einlasskonzentrationsgrenzwertes der Gesamtstrom des zu behandelnden und aufzureinigenden Wassers A und/oder das zu behandelnde und aufzureinigende Wassers A zunächst der Spitzenlastadsorptionseinrichtung 3 zugeführt und das zu behandelnde und aufzureinigende Wassers A in der Spitzenlastadsorptionseinrichtung 3 behandelt und aufgereinigt wird und nachfolgend der Hauptadsorptionseinrichtung 2 zugeführt und in der Hauptadsorptionseinrichtung 2 behandelt und aufgereinigt wird.

Im Allgemeinen kann es vorgesehen sein, dass die Wasseraufreinigungsanlage 1 derart ausgebildet ist, dass bei Unterschreiten bzw. Vorliegen bzw. Nichterreichen des vorgegebenen Einlasskonzentrationsgrenzwertes das zu behandelnde und aufzureinigende Wasser A zumindest im Wesentlichen vollständig der Hauptadsorptionseinrichtung 2 unmittelbar und/oder unter Umgehung und/oder Auslassen der Spitzenlastadsorptionseinrichtung 3 zugeführt und in der Hauptadsorptionseinrichtung 2 behandelt und aufgereinigt wird.

Im Allgemeinen kann die Wasseraufreinigungsanlage 1 zusätzlich zur Hauptadsorptionseinrichtung 2 und/oder Spitzenlastadsorptionseinrichtung 3 mindestens eine weitere Aufbereitungs- und/oder Behandlungseinrichtung, insbesondere eine Mehrzahl an weiteren Aufbereitungs- und/oder Behandlungseinrichtungen, aufweisen.

In diese Zusammenhang kann die weitere Aufbereitungs- und/oder Behandlungseinrichtung mindestens eine insbesondere mechanische Vor- und/oder Grobfiltereinrichtung und/oder mindestens eine Flockungs- und/oder Sedimentationseinrichtung und/oder mindestens eine insbesondere mechanische Feinfiltereinrichtung und/oder mindestens eine Grundadsorptionseinrichtung aufweist oder hieraus besteht.

Diesbezüglich kann die weitere Aufbereitungs- und/oder Behandlungseinrichtung (i) mindestens eine insbesondere mechanische Vor- und/oder Grobfiltereinrichtung, (ii) mindestens eine Flockungs- und/oder Sedimentationseinrichtung, (iii) mindestens eine insbesondere mechanische Feinfiltereinrichtung und (iv) gegebenenfalls mindestens eine Grundadsorptionseinrichtung aufweisen, insbesondere in der vorstehenden Reihenfolge (i) bis (iv), bezogen auf die Verfahrens- und/oder Prozessrichtung.

In diesem Zusammenhang kann die Wasseraufreinigungsanlage 1 derart ausgebildet sein, dass bei Überschreitung des vorgegebenen Einlasskonzentrationsgrenzwertes die Spitzenlastadsorptionseinrichtung 3 stromabwärts zu der weiteren Aufbereitungs- und/oder Behandlungseinrichtung, insbesondere der Mehrzahl an weiteren Aufbereitungs- und/oder Behandlungseinrichtungen, einerseits und stromaufwärts zu der Hauptadsorptionseinrichtung 2 andererseits zwischen- und/oder zugeschaltet wird.

Erfindungsgemäß ist es zudem möglich, dass die Wasseraufreinigungsanlage 1 stromabwärts zu einer Gesamt-Wasseraufreinigungsanlage angeordnet ist.

In diesem Zusammenhang kann die Wasseraufreinigungsanlage 1 an stromabwärts letzter Stelle und/oder, insbesondere bezogen auf die Verfahrens- und/oder Prozessrichtung, am Ende und/oder Auslass der Gesamt-Wasseraufreinigungsanlage angeordnet sein.

Insbesondere kann die wobei Wasseraufreinigungsanlage 1 zur finalen und/oder abschließenden Behandlung und Aufreinigung von dem zu behandelnden und aufzureinigenden Wasser A eingesetzt sein.

Gleichermaßen kann die Gesamt-Wasseraufreinigungsanlage als solche, in welcher die Wasseraufreinigungsanlage 1 integriert ist, mindestens eine Aufbereitungs- und/oder Behandlungseinrichtung, insbesondere eine Mehrzahl an Aufbereitungs- und/oder Behandlungseinrichtungen, vorzugsweise wie zuvor definiert, aufweisen.

In diesem Zusammenhang kann die weitere Aufbereitungs- und/oder Behandlungseinrichtung der Gesamt-Wasseraufreinigungsanlage mindestens eine insbesondere mechanische Vor- und/oder Grobfiltereinrichtung und/oder mindestens eine Flockungs- und/oder Sedimentationseinrichtung und/oder mindestens eine insbesondere mechanische Feinfiltereinrichtung und/oder mindestens eine Grundadsorptionseinrichtung aufweisen oder hieraus bestehen.

Insbesondere kann die weitere Aufbereitungs- und/oder Behandlungseinrichtung der Gesamt-Wasseraufreinigungsanlage (i) mindestens eine insbesondere mechanische Vor- und/oder Grobfiltereinrichtung, (ii) mindestens eine Flockungs- und/oder Sedimentationseinrichtung, (iii) mindestens eine insbesondere mechanische Feinfiltereinrichtung und (iv) gegebenenfalls mindestens eine Grundadsorptionseinrichtung aufweisen, insbesondere in der vorstehenden Reihenfolge (i) bis (iv), bezogen auf die Verfahrens- und/oder Prozessrichtung.

In diesem Zusammenhang kann die Wasseraufreinigungsanlage 1 nach der Erfindug derart ausgebildet sein, dass das zu behandelnde und aufzureinigende Wasser A vor Zuführung und/oder Einspeisung in die Spitzenlastadsorptionseinrichtung 3 und vor Zuführung und/oder Einspeisung in die Hauptadsorptionseinrichtung 2 und/oder vor Zuführung und/oder Einspeisung in die Wasseraufreinigungsanlage 1 zunächst (i) durch und/oder in die insbesondere mechanische Vor- und/oder Grobfiltereinrichtung und/oder (ii) durch und/oder in die Flockungs- und/oder Sedimentationseinrichtung und/oder (iii) durch und/oder in die mechanische Feinfiltereinrichtung und/oder (iv) durch und/oder in die Grundadsorptionseinrichtung geführt und/oder geleitet wird.

Erfindungsgemäß kann die Wasseraufreinigungsanlage 1 mindestens eine Verunreinigungsmesseinrichtung 4, insbesondere zur Messung und/oder Erfassung des Eingangskonzentrationsgrenzwerts aufweisen. In diesem Zusammenhang kann die Verunreinigungsmesseinrichtung 4 stromaufwärts zu der Spitzenlastadsorptionseinrichtung 3 und der Hauptadsorptionseinrichtung 2 angeordnet sein.

Im Allgemeinen kann die Wasseraufreinigungsanlage 1 zudem auch mindestens eine Transporteinrichtung 5a, 5b, 5c, 5d, insbesondere Rohrleitungseinrichtung, insbesondere zum Transport des zu behandelnden und aufzureinigenden Wassers A und/oder des behandelten und aufgereinigten Wassers B aufweisen. Dabei kann die Transporteinrichtung 5a, 5b, 5c, 5d zum Transport des zu behandelnden bzw. aufzureingenden Wassers A und/oder des behandelten bzw. aufgereinigten Wassers B dienen.

Im Allgemeinen kann die erste Transporteinrichtung 5a mit der Hauptadsorptionseinrichtung 2, insbesondere mit dem Eingang der Hauptadsorptionseinrichtung 2, insbesondere schaltbar und/oder regelbar, vorzugsweise zu- und abschaltbar, verbunden sein.

Gleichermaßen ist es erfindungsgemäß möglich, dass die zweite Transporteinrichtung 5b mit der ersten Transporteinrichtung 5a verbunden wird und/oder insbesondere wobei die zweite Transporteinrichtung 5b mit der Spitzenlastadsorptionseinrichtung 3, insbesondere mit dem Eingang der Spitzenlastadsorptionseinrichtung 3, insbesondere schaltbar und/oder regelbar, vorzugsweise zu- und abschaltbar, verbunden ist.

Zudem kann es erfindungsgemäß vorgesehen sein, dass die dritte Transporteinrichtung 5c mit der ersten Transporteinrichtung 5a, insbesondere stromabwärts zu der Verbindung der zweiten Transporteinrichtung 5b mit der ersten Transporteinrichtung 5a, verbunden ist und/oder insbesondere wobei die dritte Transporteinrichtung 5c mit der Spitzenlastadsorptionseinrichtung 3, insbesondere mit dem Auslass der Spitzenlastadsorptionseinrichtung 3, insbesondere schaltbar und/oder regelbar, vorzugsweise zu- und abschaltbar, verbunden ist.

Im Allgemeinen kann die vierte Transporteinrichtung 5d mit der Hauptadsorptionseinrichtung 2, insbesondere mit dem Auslass der Hauptadsorptionseinrichtung 2, verbunden sein.

Zudem kann es erfindungsgemäß vorgesehen sein, dass die Wasseraufreinigungsanlage 1 mindestens eine Regeleinrichtung 6a, 6b, 6c, insbesondere Durchflussregeleinrichtung, insbesondere Ventileinrichtung, bevorzugt eine Mehrzahl an Regeleinrichtungen 6a, 6b, 6c, vorzugsweise eine erste Regeleinrichtung 6a, eine zweiten Regeleinrichtung 6b und eine dritte Regeleinrichtung 6c, aufweist. Die in Rede stehende Regeleinrichtung 6a, 6b, 6c dient insbesondere zum Zuschalten und/oder Vorschalten und/oder zum Abschalten der Spitzenlastadsorptionseinrichtung 3.

Im Allgemeinen sind die Regeleinrichtung(en) 6a, 6b, 6c an den Transporteinrichtungen 5a, 5b, 5c, insbesondere an der ersten Transporteinrichtung 5a und/oder an der zweiten Transporteinrichtung 5b und/oder an der dritten Transporteinrichtung 5c, angeordnet. Hierdurch kann der Durchfluss des zu behandelnden bzw. aufzureinigenden Wassers A durch die erste Transporteinrichtung 5a bzw. durch die zweite Transporteinrichtung 5b bzw. durch die dritte Transporteinrichtung 5c entsprechend geregelt werden. Zudem kann hierdurch der Durchfluss bzw. der Strom des zu behandelnden bzw. aufzureinigenden Wassers A durch die Spitzenlastadsorptionseinrichtung 3 bzw. durch die Hauptadsorptionseinrichtung 2 geregelt werden.

Im Allgemeinen kann die erste Regeleinrichtung 6a an der ersten Transporteinrichtung 5a und die zweite Regeleinrichtung 6b an der zweiten Transporteinrichtung 5b und die dritte Regeleinrichtung 6c an der dritten Transporteinrichtung 5c angeordnet sein.

Zudem kann die erste Regeleinrichtung 6a parallel (d. h. insbesondere strömungstechnisch parallel) zu der zweiten Regeleinrichtung 6b, der Spitzenlastadsorptionseinrichtung 3 und der dritten Regeleinrichtung 6c angeordnet sein.

Zudem kann die zweite Regeleinrichtung 6b stromaufwärts zu der Spitzenlastadsorptionseinrichtung 3 und die dritte Regeleinrichtung 6c stromabwärts zu der Spitzenlastadsorptionseinrichtung 3 angeordnet sein.

Im Allgemeinen können die Regeleinrichtungen 6a, 6b, 6c als Bypass-Schaltung und/oder Bypass-Regelung ausgebildet sein, insbesondere zur Zu- und/oder Vorschaltung der Spitzenlastadsorptionseinrichtung 3.

Zudem kann die Wasseraufreinigungsanlage 1 mindestens eine Steuereinrichtung 7, insbesondere zur Steuerung der Regeleinrichtungen 6a, 6b, 6c, aufweisen.

Erfindungsgemäß kann es zudem vorgesehen sein, dass die Spitzenlastadsorptionseinrichtung 3 eine Mehrzahl an Spitzenlast-Adsorptionsfilteruntereinheiten 3a, 3b, 3c aufweist. In diesem Zusammenhang kann die Spitzenlastadsorptionseinrichtung 3 von den bzw. in die Spitzenlast-Adsorptionsfilteruntereinheiten 3a, 3b, 3c unterteilt sein.

Zudem kann die Spitzenlast-Adsorptionsfilteruntereinheiten 3a, 3b, 3c in der Spitzenlastadsorptionseinrichtung 3 parallel zueinander, insbesondere strömungstechnisch parallel zueinander, angeordnet und/oder geschaltet sein. Hierdurch kann durch die jeweiligen Spitzenlast-Adsorptionsfilteruntereinheiten 3a, 3b, 3c zumindest ein Teilstrom des durch die Spitzenlastadsorptionseinrichtung 3 geführten zu behandelnden bzw. aufzureinigenden Wassers geführt werden.

Im Allgemeinen kann die Spitzenlastadsorptionseinrichtung 3 mindestens 2 und/oder insbesondere 2 bis 10, vorzugsweise 2 bis 8, bevorzugt 3 bis 6, besonders bevorzugt 5, Spitzenlast-Adsorptionsfilteruntereinheiten 3a, 3b, 3c aufweisen.

Insbesondere können die Spitzenlast-Adsorptionsfilteruntereinheiten 3a, 3b, 3c, unabhängig voneinander, zu- und abschaltbar sein bzw. derart ausgebildet sein.

Im Allgemeinen kann die Hauptadsorptionseinrichtung 2 zudem eine Mehrzahl an Hauptadsorptionsfilteruntereinheiten 2a bis 2f aufweisen.

Erfindungsgemäß kann die Hauptadsorptionseinrichtung 2 von den bzw. in die Hauptadsorptionsfilteruntereinheiten 2a bis 2f unterteilt sein.

In diesem Zusammenhang können die Hauptadsorptionsfilteruntereinheiten 2a bis 2f in der Hauptadsorptionseinrichtung 2 parallel zueinander, insbesondere strömungstechnisch parallel zueinander, angeordnet bzw. geschaltet sein, insbesondere so dass durch die jeweiligen Hauptadsorptionsfilteruntereinheiten 2a bis 2f zumindest ein Teilstrom des durch die Hauptadsorptionseinrichtung 2 geführten zu behandelnden und aufzureinigenden Wassers A führbar ist.

Im Allgemeinen kann die Hauptadsorptionseinrichtung 2 mindestens 2 und/oder insbesondere 2 bis 30, vorzugsweise 4 bis 20, bevorzugt 5 bis 15, besonders bevorzugt 10, Hauptadsorptionsfilteruntereinheiten 2a bis 2f aufweisen.

Erfindungsgemäß können die Hauptadsorptionsfilteruntereinheiten 2a bis 2f, unabhängig voneinander, zu- und abschaltbar sein bzw. derart ausgebildet sein.

Erfindungsgemäß kann es vorgesehen sein, dass die Wasseraufreinigungsanlage 1 nach der Erfindung mindestens eine weitere zuschaltbare Spitzenlastadsorptionseinrichtung 3' aufweist.

Im Allgemeinen kann die partikelförmige Aktivkohle, vorzugsweise die kornförmige Aktivkohle, bevorzugt die kugelförmige Aktivkohle, der Spitzenlastadsorptionseinrichtung 3 eine wie zuvor im Rahmen des erfindungsgemäßen Verfahrens definierte partikelförmige Aktivkohle, vorzugsweise eine kornförmige Aktivkohle, sein.

Zudem kann die partikelförmige Aktivkohle, vorzugsweise die kornförmige Aktivkohle, bevorzugt die kugelförmige Aktivkohle, der Hauptadsorptionseinrichtung 2 eine partikelförmige Aktivkohle, vorzugsweise eine kornförmige Aktivkohle, wie zuvor definiert, sein.

Darüber hinaus ist vorliegend auch eine Gesamt-Wasseraufreinigungsanlage (synonym auch als Gesamt-Wasseraufbereitungsanlage bezeichnet) beschrieben, insbesondere zur vorzugsweise kontinuierlichen Behandlung und Aufreinigung von mit organischen Verunreinigungen, vorzugsweise Mikroschadstoffen und/oder Spurenstoffen, belastetem Wasser A, insbesondere Rohwasser, zu Zwecken der Gewinnung und/oder des Erhalts von behandeltem und aufgereinigtem Wasser B, insbesondere Reinwasser, vorzugsweise Trinkwasser und/oder Brauchwasser, vorzugsweise Gesamt-Wasseraufreinigungsanlage zur Durchführung des zuvor definierten Verfahrens, wobei die Gesamt-Wasseraufreinigungsanlage mindestens eine wie zuvor definierte Wasseraufbereitungsanlage 1 aufweist.

Was die Gesamt-Wasseraufreinigungsanlage anbelangt, so kann diese mindestens eine Aufbereitungs- bzw. Behandlungseinrichtung, aufweisen.

Dabei kann die Aufbereitungs- und/oder Behandlungseinrichtung mindestens eine insbesondere mechanische Vor- und/oder Grobfiltereinrichtung und/oder mindestens eine Flockungs- und/oder Sedimentationseinrichtung und/oder mindestens eine insbesondere mechanische Feinfiltereinrichtung und/oder mindestens eine Grundadsorptionseinrichtung, aufweise oder hieraus bestehen.

Insbesondere kann die weitere Aufbereitungs- und/oder Behandlungseinrichtung (i)mindestens eine insbesondere mechanische Vor- und/oder Grobfiltereinrichtung, (ii) mindestens eine Flockungs- und/oder Sedimentationseinrichtung, (iii) mindestens eine insbesondere mechanische Feinfiltereinrichtung und (iv)gegebenenfalls mindestens eine Grundadsorptionseinrichtungaufweisen, insbesondere in der vorstehenden Reihenfolge (i) bis (iv), bezogen auf die Verfahrens- und/oder Prozessrichtung.

Vorliegend ist es bevorzugt, dass die Wasseraufreinigungsanlage (1) stromabwärts an letzter Stelle bzw. am Ende der Gesamt-Wasseraufreinigungsanlage bzw. stromabwärts zu der Aufbereitungs- und/oder Behandlungseinrichtung angeordnet ist bzw. der Aufbereitungs- und/oder Behandlungseinrichtung nachgeschaltet ist.

Darüber hinaus betrifft die vorliegende Erfindung - gemäß einem **weiteren** Aspekt der vorliegenden Erfindung - auch die erfindungsgemäßen Verwendungen, wie nachfolgend angeführt:
So betrifft die vorliegende Erfindung die Verwendung einer wie zuvor definierten Wasseraufbereitungsanlage zur vorzugsweise kontinuierlichen Behandlung bzw. Aufreinigung von mit organischen Verunreinigungen, vorzugsweise Mikroschadstoffen und/oder Spurenstoffen, belastetem Wasser, insbesondere Rohwasser, zu Zwecken der Gewinnung von behandeltem und aufgereinigtem Wasser, insbesondere Reinwasser, vorzugsweise Trinkwasser und/oder Brauchwasser.

In diesem Zusammenhang zielt die vorliegende Erfindung auch auf die vorgenannte Verwendung zur adsorptiven Entfernung der Verunreinigungen aus dem zu behandelnden und aufzureinigenden Wasser ab, bevorzugt im Falle von zeitlich begrenzt und/oder spontan auftretenden Konzentrationsanstiegen der Verunreinigungen in dem zu behandelnden und aufzureinigenden Wasser.

Zudem ist vorliegend auch die Verwendung einer wie zuvor definierten Wasseraufbereitungsanlage als Bestandteil einer Gesamt-Wasseraufreinigungsanlage zur vorzugsweise kontinuierlichen Behandlung bzw. Aufreinigung von mit Verunreinigungen belastetem Wasser, insbesondere als Bestandteil einer wie zuvor definierten Gesamt-Wasseraufreinigungsanlage, beschrieben.

Zudem betrifft die vorliegende Erfindung auch die Verwendung einer wie zuvor definierten Wasseraufbereitungsanlage zur Abschwächung und zur Vergleichmäßigung von zeitlich begrenzt und/oder spontan auftretenden Konzentrationsanstiegen von Verunreinigungen in zu behandelndem bzw. aufzureinigendem Wasser.

Zudem betrifft die vorliegende Erfindung auch die Verwendung einer wie zuvor definierten Wasseraufbereitungsanlage zur Nachrüstung oder Ergänzung von bestehenden Wasseraufreinigungsanlagen oder Wasseraufreinigungsvorrichtungen für die kontinuierlichen Behandlung und Aufreinigung von mit organischen Verunreinigungen, vorzugsweise Mikroschadstoffen und/oder Spurenstoffen, belastetem Wasser, insbesondere Rohwasser.

In diesem Zusammenhang zielt die vorliegende Erfindung auch auf die vorgenannte Verwendung zur Erhöhung und/oder Verlängerung der Standzeit der bestehenden Wasseraufreinigungsanlagen und/oder Wasseraufreinigungsvorrichtungen ab.

Zudem ist vorliegend auch die Verwendung einer wie zuvor definierten Spitzenlastadsorptionseinrichtung 3, insbesondere bei der vorzugsweise kontinuierlichen Behandlung und Aufreinigung von mit organischen Verunreinigungen, vorzugsweise Mikroschadstoffen und/oder Spurenstoffen, belastetem Wasser A, insbesondere Rohwasser, zu Zwecken der Gewinnung von behandeltem und aufgereinigtem Wasser B, insbesondere Reinwasser, vorzugsweise Trinkwasser und/oder Brauchwasser, im Rahmen einer für die adsorptive Entfernung der Verunreinigungen vorgesehenen, mindestens eine Hauptadsorptionseinrichtung 2 und mindestens eine in Abhängigkeit von einem vorgegebenen Einlasskonzentrationsgrenzwert der Verunreinigungen in dem zu behandelnden und aufzureinigenden Wasser A zuschaltbare, stromaufwärts zur Hauptadsorptionseinrichtung 2 angeordnete Spitzenlastadsorptionseinrichtung 3 aufweisenden Wasseraufreinigungsanlage 1,
zur Abschwächung und/oder zur Vergleichmäßigung von zeitlich begrenzt und/oder spontan auftretenden Konzentrationsanstiegen von Verunreinigungen in zu behandelndem und aufzureinigendem Wasser; und/oder
zur Verlängerung der Standzeit der Hauptadsorptionseinrichtung 2 und/oder der Wasseraufreinigungsanlage 1 insgesamt.

Bei der vorgenannten Verwendung kann das zu behandelnde und aufzureinigende Wasser A der Hauptadsorptionseinrichtung 2 zugeführt und in der Hauptadsorptionseinrichtung 2 behandelt und aufgereinigt werden, insbesondere die Verunreinigungen adsorptiv zumindest im Wesentlichen vollständig in der Hauptadsorptionseinrichtung 2 entfernt werden, insbesondere derart, dass die Konzentration der Verunreinigungen unterhalb eines vorgegebenen Auslasskonzentrationsgrenzwertes abgesenkt wird, und
wobei bei Überschreitung des vorgegebenen Einlasskonzentrationsgrenzwertes der Verunreinigungen in dem zu behandelnden und aufzureinigenden Wasser A die Spitzenlastadsorptionseinrichtung 3 zugeschaltet und/oder der Hauptadsorptionseinrichtung 2 vorgeschaltet wird derart, dass das zu behandelnde und aufzureinigende Wasser A zumindest teilweise, vorzugsweise vollständig, zunächst der Spitzenlastadsorptionseinrichtung 3 zugeführt und in der Spitzenlastadsorptionseinrichtung 3 behandelt bzw. aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird.

Im Folgenden wird die vorliegende Erfindung anhand von bevorzugten Ausführungsbeispielen bzw. Ausführungsformen darstellenden Zeichnungen bzw. Figurendarstellungen insbesondere auch im Vergleich zu nichterfindungsgemäßen (Vergleichs-)Ausführungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung aufgezeigt.

In den Figurendarstellungen zeigt:

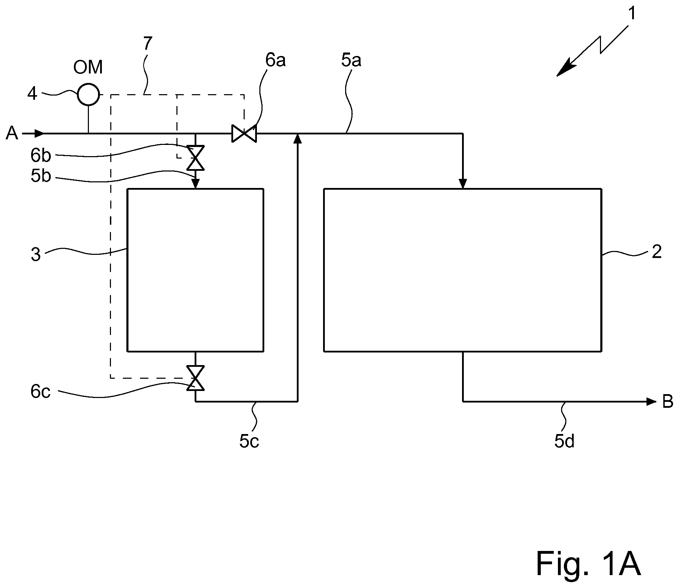

- Fig. 1A: eine schematische Darstellung bzw. Übersicht einer erfindungsgemäßen Verfahrensführung sowie einer dem erfindungsgemäßen Verfahren zugrundeliegenden Wasseraufreinigungsanlage nach der Erfindung gemäß einer erfindungsgemäßen Ausführungsform, wonach die Wasseraufreinigungsanlage eine Hauptadsorptionseinrichtung und eine der Hauptadsorptionseinrichtung vorschaltbare Spitzenlastadsorptionseinrichtung aufweist;

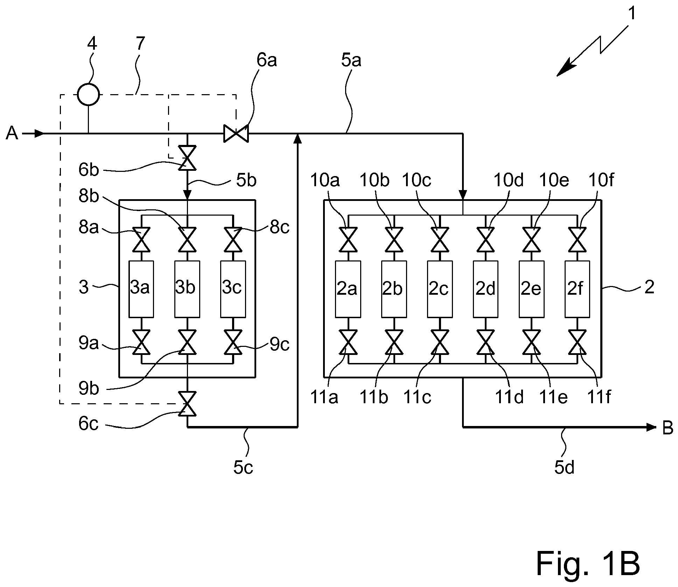

- Fig. 1B: eine schematische Darstellung bzw. Übersicht einer erfindungsgemäßen Verfahrensführung bzw. einer weiteren, dem erfindungsgemäßen Verfahren zugrundeliegenden Wasseraufreinigungsanlage nach der Erfindung gemäß einer weiteren erfindungsgemäßen Ausführungsform, wonach die Spitzenlastadsorptionseinrichtung entsprechende Spitzenlast-Adsorptionsfilteruntereinheiten und die Hauptadsorptionseinrichtung entsprechende Hauptadsorptionsfilteruntereinheiten aufweist;

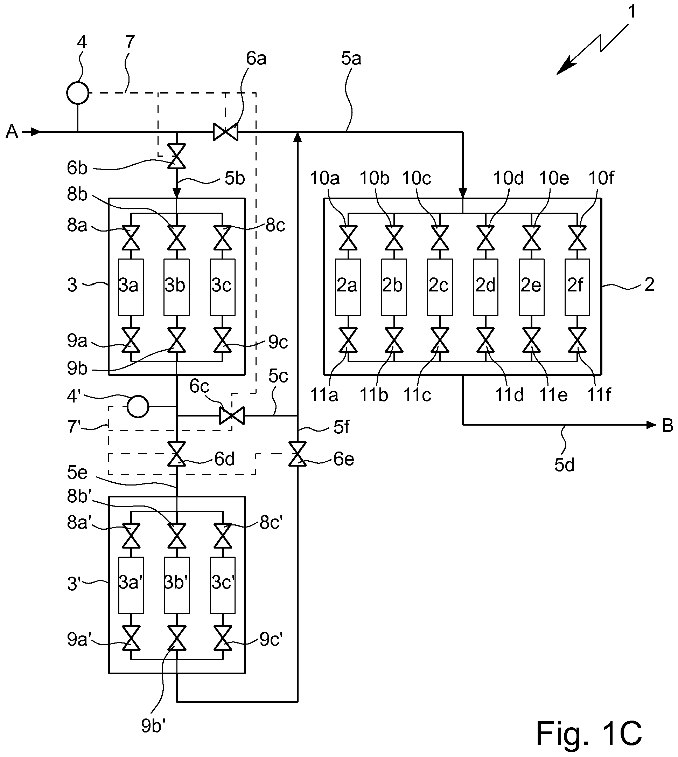

- Fig. 1C: eine schematische Darstellung bzw. Übersicht einer erfindungsgemäßen Verfahrensführung bzw. einer nochmals weiteren, dem erfindungsgemäßen Verfahren zugrundeliegenden Wasseraufreinigungsanlage nach der Erfindung, wonach die Wasseraufreinigungsanlage eine weitere Spitzenlastadsorptionseinrichtung mit diesbezüglichen SpitzenlastAdsorptionsfilteruntereinheiten aufweist;

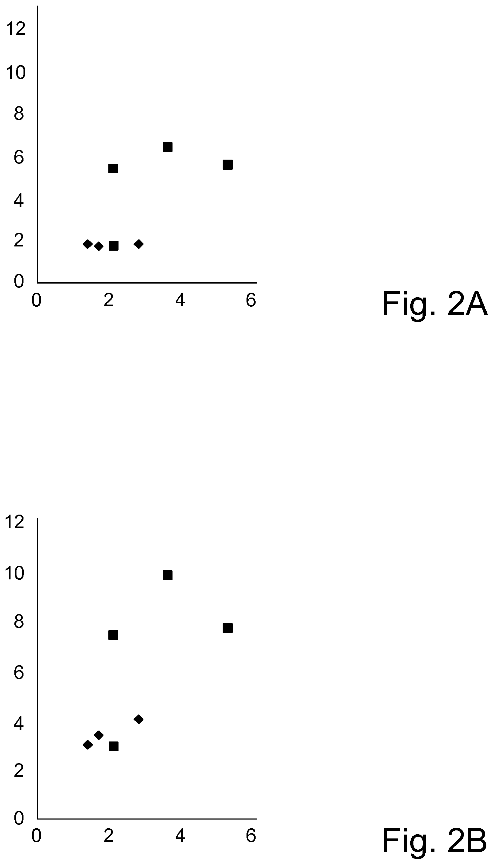

- Fig. 2A: eine grafische Darstellung der spezifischen Kapazität bzw. der Beladungsmenge des Pestizids Metaldehyd in Bezug auf das eingesetzte Adsorptionsmaterial bzw. Medium in Form einer speziellen kugelförmigen Aktivkohle bei unterschiedlichen Eingangskonzentrationen der zu adsorbierenden Substanz (Metaldehyd) (rautenförmig dargestellte Datenpunkte = konstant niedrige Metaldehyd-Eingangskonzentration von 0,1 µg/l und quadratförmig dargestellte Datenpunkte = konstant hohe Metaldehyd-Eingangskonzentration von 0,5 µg/l mit zusätzlichen Konzentrationsspitzen von 2 µg/l für 6 Stunden) zu dem Durchbruchspunkt- bzw. wert c > 0,01 µg/l (beginnender Durchbruch) und für steigende Verweilzeiten (*empty bed contact time* (*EBCT*)); die x-Achse gibt die Verweilzeit (min) an, und die y-Achse gibt die spezifische Kapazität in Bezug auf Metaldehyd (mg _{Metaldehyd} / l _{Medium}) an;
- Fig. 2B: eine Fig. 2A entsprechende grafische Darstellung, jedoch zu dem Durchbruchspunkt- bzw. wert c > 0,05 µg/l (Zielwert);

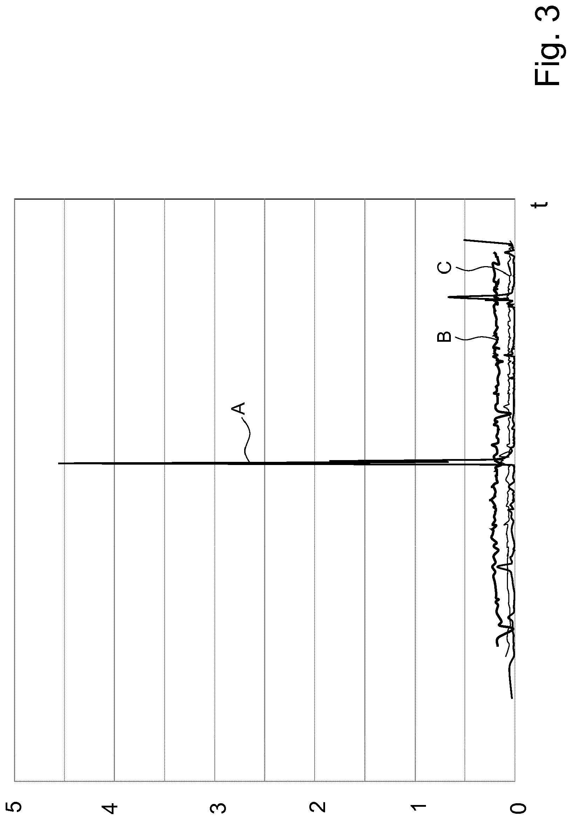

- Fig. 3: eine grafische Darstellung des Konzentrationsverlaufs von Metaldehyd in verschiedenen Rohwasserquellen A, B, C, wie sie in diesbezüglichen Wasseraufreinigungsanlagen verarbeitet werden können, wobei die x-Achse den zeitlichen Verlauf zeigt und wobei die y-Achse die Konzentration an Metaldehyd (µg/l) angibt;

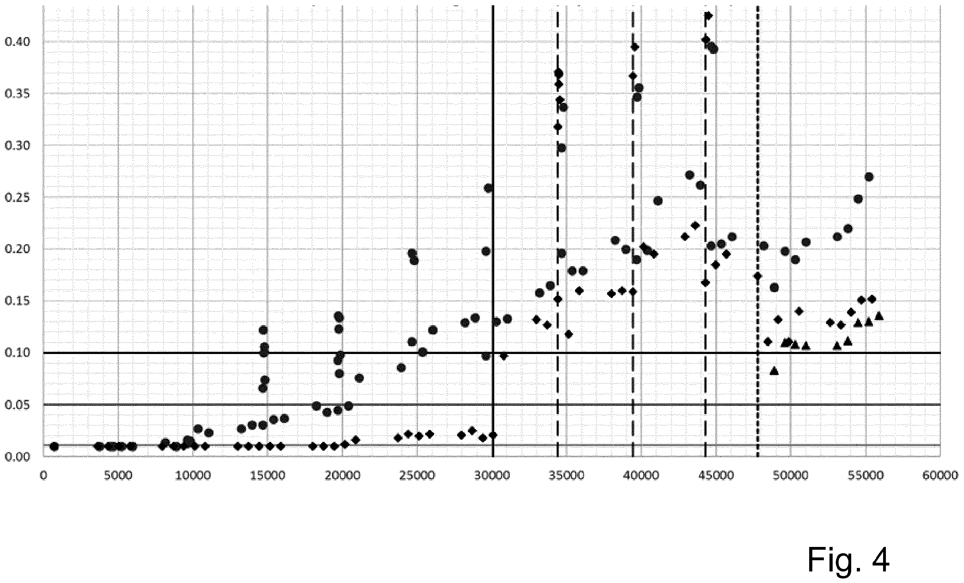

- Fig. 4: eine grafische Darstellung zur Verdeutlichung des Vorliegens von unerwünschter Desorption bei Metaldehyd für einen einstufigen adsorptiven Aufreinigsprozess unter Verwendung verschiedenener bzw. einzelner Versuchskolonnen bzw. ohne Einsatz einer zuschaltbaren Spitzenlastadsorptionseinrichtung (Vergleich), wobei die x-Achse das Bettvolumen (BV) angibt und wobei die y-Achse die absolute Konzentration von Metaldehyd (µg/l) am Auslauf bzw. Auslass der jeweiligen Versuchskolonne angibt (kreisförmige Datenpunktdarstellung = erste Versuchskolonne; rautenförmige Datenpunktdarstellung = zweite Versuchskolonne; dreieckförmige Datenpunktdarstellung = Konzentration von Metaldehyd am Eingang der jeweiligen Kolonne (ohne vorliegende Konzentrationsanstiege bzw. nach abgesetzten Konzentrationsanstiegen); die parallel zur x-Achse verlaufenden Geraden zeigen von oben nach unten zudem (i) den vorgegebenen Metaldehyd-Grenzwert (unter Heranziehung eines PCV-Wertes (*permissable concentration or* value) bzw. eines *Gesundheitlichen Orientierungswertes* (GOW)), (ii) den vorgegebenen Metaldehyd-Zielwert (*target value*) sowie (iii) die Metaldehyd-Nachweisgrenze, und die parallel zur y-Achse verlaufenden Geraden zeigen von links nach rechts zudem (i) den Startpunkt der Durchführung bzw. des Vorliegens von Konzentrationsanstiegen, (ii) das Vorliegen entsprechender Konzentrationserhöhungen (nachfolgende drei Geraden in Langstrichdarstellung) sowie (iii) das Aussetzen der Durchführung bzw. des Vorliegens von Konzentrationsanstiegen (nachfolgende rechte Gerade in Kurzstrichdarstellung).

Fig. 1 schematisiert somit eine bevorzugte Ausführungsform der erfindungsgemäßen Verfahrensführung bzw. der Wasseraufreinigungsanlage 1 nach der Erfindung, wie nachfolgend weiterführend beschrieben:
Insbesondere zeigt Fig. 1 die erfindungsgemäße Wasseraufreinigungsanlage 1, welche insbesondere zur vorzugsweise kontinuierlichen Behandlung bzw. Aufreinigung von mit organischen Verunreinigungen, vorzugsweise Mikroschadstoffen bzw. Spurenschadstoffen, belastetem Wasser A, vorzugsweise zu Zwecken der Gewinnung bzw. des Erhalts von behandeltem bzw. aufgereinigtem Wasser B, bzw. zur Durchführung des erfindungsgemäßen Verfahrens eingesetzt wird. In diesem Zusammenhang ist die erfindungsgemäße Wasseraufbereitungsanlage 1 zur adsorptiven Entfernung von Verunreinigungen aus dem zu behandelnden und aufzureinigenden Wasser A, bevorzugt im Falle von zeitlich begrenzt und/oder spontan auftretenden Konzentrationsanstiegen der Verunreinigungen in dem zu behandelnden und aufzureinigenden Wasser A, ausgebildet.

Wie Fig. 1 verdeutlicht, weist die Wasseraufreinigungsanlage 1 nach der Erfindung mindestens eine Hauptadsorptionseinrichtung 2 und mindestens eine in Abhängigkeit von einem vorgegebenen Einlasskonzentrationsgrenzwert der Verunreinigungen in dem zu behandelnden bzw. aufzureinigenden Wasser A zuschaltbare, stromaufwärts zu der Hauptadsorptionseinrichtung 2 angeordnete Spitzenlastadsorptionseinrichtung 3 auf. Der vorgegebene Einlasskonzentrationsgrenzwert kann dabei insbesondere stromaufwärts zu der Spitzenlastadsorptionseinrichtung 3 und der Hauptadsorptionseinrichtung 2 bzw. am Einlass der erfindungsgemäßen Wasseraufreinigungsanlage 1 gemessen bzw. erfasst werden, beispielweise unter Einsatz einer Verunreinigungsmesseinrichtung.

Die erfindungsgemäße Wasseraufreinigungsanlage 1 ist zudem derart ausgebildet, dass das zu behandelnde bzw. aufzureinigende Wasser A der Hauptadsorptionseinrichtung 2 zugeführt und in der Hauptadsorptionseinrichtung 2 behandelt bzw. aufgereinigt wird, insbesondere derart, dass die Konzentration der Verunreinigungen unterhalb eines vorgegebenen Auslasskonzentrationsgrenzwertes abgesenkt wird, welcher insbesondere stromabwärts zu der Hauptadsorptionseinrichtung 2 gemessen bzw. erfasst werden kann.

Die erfindungsgemäße Wasseraufreinigungsanlage 1 zeichnet sich dabei zudem durch eine spezielle Ausbildung aus, wonach bei Überschreitung des vorgegebenen Einlasskonzentrationsgrenzwertes der Verunreinigungen in dem zu behandelnden bzw. aufzureinigenden Wasser A die Spitzenlastadsorptionseinrichtung 3 zugeschaltet bzw. der Hauptadsorptionseinrichtung 2 vorgeschaltet wird derart, dass das zu behandelnde bzw. aufzureinigende Wasser A zumindest teilweise, vorzugsweise vollständig, zunächst der Spitzenlastadsorptionseinrichtung 3 zugeführt und in der Spitzenlastadsorptionseinrichtung 3 behandelt bzw. aufgereinigt wird, vorzugsweise der Konzentrationsanstieg der Verunreinigungen abgeschwächt bzw. vergleichmäßigt wird (d. h. bevor das zu behandelnde bzw. aufzureinigende Wasser A nachfolgend der Hauptadsorptionseinrichtung 2 zugeführt wird).

In diesem Zusammenhang verdeutlicht Fig. 1 auch das erfindungsgemäße Verfahren, wonach die Verunreinigungen adsorptiv aus dem zu behandelnden bzw. aufzureinigenden Wasser A entfernt werden, und zwar bevorzugt im Fall von zeitlich begrenzt bzw. spontan auftretenden Konzentrationsanstiegen der Verunreinigungen in dem zu behandelnden bzw. aufzureinigenden Wasser A, wobei erfindungsgemäß nämlich insbesondere derart vorgegangen wird, dass bei Überschreitung des in Rede stehenden vorgegebenen Einlasskonzentrationsgrenzwertes der Verunreinigungen in dem zu behandelnden bzw. aufzureinigenden Wasser A die Spitzenlastadsorptionseinrichtung 3 zugeschaltet bzw. der Hauptadsorptionseinrichtung 2 vorgeschaltet wird, derart, dass das zu behandelnde bzw. aufzureinigende Wasser A zumindest teilweise, vorzugsweise vollständig, zunächst der Spitzenlastadsorptionseinrichtung 3 zugeführt und in der Spitzenlastadsorptionseinrichtung 3 behandelt bzw. aufgereinigt wird, wobei die Verunreinigungen adsorptiv zumindest teilweise entfernt werden, vorzugsweise der Konzentrationsanstieg der Verunreinigungen abgeschwächt bzw. vergleichmäßigt wird.

Nach entsprechendem Durchlaufen durch die Spitzenlastadsorptionseinrichtung 3 erfolgt dann eine weiterführende bzw. nachgeschaltete Aufreinigung des zu behandelnden bzw. aufzureinigenden Wassers A in der Hauptadsorptionseinrichtung 2, wonach es nämlich insbesondere vorgesehen ist, das zu behandelnde bzw. aufzureinigende Wasser der Hauptadsorptionseinrichtung 2 zuzuführen und in der Hauptadsorptionseinrichtung 2 zu behandeln bzw. aufzureinigen, wobei die Verunreinigungen adsorptiv zumindest im Wesentlichen vollständig entfernt werden, insbesondere derart, dass sie Konzentrationen der Verunreinigungen unterhalb eines vorgegebenen Auslasskonzentrationsgrenzwertes abgesenkt wird.

Für den Fall des Unterschreitens bzw. Nichterreichens des vorgegebenen Einlasskonzentrationsgrenzwertes stellt das erfindungsgemäße Verfahren insbesondere auf eine direkte Behandlung bzw. Aufreinigung des Wassers A in der Hauptadsorptionseinrichtung 2 unter Abschaltung bzw. Überbrückung der Spitzenlastadsorptionseinrichtung 3 ab, so dass diese dann sozusagen außer Betrieb gesetzt wird (und zwar bis der vorgegebene Einlasskonzentrationsgrenzwert erneut überschritten wird).

Fig. 1B zeigt eine weitere Ausführungsform der erfindungsgemäßen Wasseraufreinigungsanlage 1 bzw. des erfindungsgemäßen Verfahrens, wonach nämlich die Spitzenlastadsorptionseinrichtung 3 eine Mehrzahl an Spitzenlast-Adsorptionsfilteruntereinheiten 3a, 3b, 3c und die Hauptadsorptionseinrichtung 2 eine Mehrzahl an Hauptadsorptionsfilteruntereinheiten 2a, 2b, 2c, 2d, 2e, 2f aufweisen, wobei die in Rede stehenden Untereinheiten einzeln zu- bzw. abschaltbar sind bzw. derart ausgebildet sind.

Zudem zeigt Fig. 1C eine weitere erfindungsgemäße Ausführungsform, wonach die erfindungsgemäße Wasseraufreinigungsanlage 1 zusätzlich eine weitere Spitzenlastadsorptionseinrichtung 3' aufweist. In diesem Zusammenhang ist es insbesondere vorgesehen, dass die weitere Spitzenlastadsorptionseinrichtung 3' in Abhängigkeit von einem insbesondere stromabwärts zu der ersten Spitzenlastadsorptionseinrichtung 3 gemessenen bzw. erfassen weiteren Konzentrationsgrenzwert der Verunreinigungen zugeschaltet werden kann, insbesondere derart, dass bei Überschreiten des vorgegebenen weiteren Konzentrationsgrenzwertes die weitere Spitzenlastadsorptionseinrichtung 3' zugeschaltet bzw. der Spitzenlastadsorptionseinrichtung 3 nachgeschaltet und der Hauptadsorptionseinrichtung 2 vorgeschaltet wird, so dass das zu behandelnde bzw. aufzureinigende Wasser A vor Eintritt bzw. Überführung in die Hauptadsorptionseinrichtung 2 und nach Durchlaufen der ersten Spitzenlastadsorptionseinrichtung 3 die zweite bzw. weitere Spitzenlastadsorptionseinrichtung 3' durchläuft. Hierdurch kann beispielsweise bei besonders starken Konzentrationsanstiegen der Verunreinigungen eine weiterführende Abschwächung bzw. Vergleichmäßigung des Konzentrationsanstiegs erreicht werden, insbesondere derart, dass nach Durchlaufen der weiteren Spitzenlastadsorptionseinrichtung 3' der vorgegebene Einlasskonzentrationsgrenzwert unterschritten wird. Hierdurch resultiert eine weitere Entlastung der in diesem Fall der weiteren Spitzenlastadsorptionseinrichtung 3' nachgeschalteten Hauptadsorptionseinrichtung 2 sowie eine nochmals verbesserte Aufreinigung des zugrundeliegenden Wassers.

Was weiterhin Fig. 3 bzw. Fig. 4 anbelangt, so kann hierzu insbesondere auch auf die nachfolgenden Ausführungen in den Ausführungsbeispielen verwiesen werden.

Zusammenfassend ist somit festzustellen, dass erfindungsgemäß ein leistungsfähiges Gesamtkonzept zur Behandlung bzw. Aufreinigung von mit Verunreinigungen, wie Pestiziden, belastetem Wasser bereitgestellt wird, wonach insbesondere auch im Zusammenhang mit zeitlich begrenzten bzw. spontan auftretenden Konzentrationsanstiegen einhergehende große Mengen an Verunreinigungen aus dem zugrundeliegenden Wasser sicher entfernt werden können, und dies bei gleichzeitig verbesserten Standzeiten der hierzu eingesetzten Wasseraufreinigungsanlagen.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung gemäß der beiliegenden Ansprüche verlässt.

Die vorliegende Erfindung wird anhand der nachfolgenden Ausführungsbeispiele veranschaulicht, welche die vorliegende Erfindung jedoch keinesfalls beschränken sollen.

### 1. Verschiedene Anlagen sowie verschiedene Verfahren zur Wasserbehandlung bzw. -aufreinigung

Im Folgenden wird Bezug genommen auf weiterführende Untersuchungen an verschiedenen Anlagen zur Wasseraufbereitung unter Anwendung verschiedener Verfahren zur Wasserbehandlung bzw. -aufreinigung, und zwar im Hinblick auf die Behandlung bzw. Aufreinigung von Rohwasser, welches mit Verunreinigungen in Form des Pestizids Metaldehyd belastet ist, und zwar insbesondere was das Vorliegen zeitlich begrenzter bzw. spontan auftretender Konzentrationsanstiege von Metaldehyd in dem Rohwasser anbelangt.

In diesem Zusammenhang ist auch beachtlich, dass sich Metaldehyd, welches vorliegend auch stellvertretend für Pestizide als solche steht, zur Beurteilung der Aufreinigungseigenschaften einer Aufreinigungsanlage bzw. entsprechender Verfahren besonders eignet, zumal für Metaldehyd die vorgeschriebenen Grenzwerte niedrig angesetzt sind. So beträgt die erlaubte Maximalkonzentration für Metaldehyd c < 0,1 µg/l, wobei dieser Wert nicht überschritten werden sollte (vgl. *permissable concentration or value* bzw. PCV-Wert bzw. *Gesundheitlicher Orientierungswert* bzw. GOW). Weiterhin beträgt der angestrebte Zielwert (*target value*) c < 0,05 µg/l. Die zugrundeliegenden Grenzwerte sind insbesondere auch aus dem Maßnahmenplan der Europäischen Union zur Sicherung der Wassergüte abgeleitet.

Zu den in Rede stehenden Untersuchungen im Einzelnen:
a) Eine erste Wasseraufreinigungsanlage (Anlage I, Vergleich) ist derart aufgebaut, dass das zu behandelnde bzw. aufzureinigende Wasser zunächst eine mechanische Vor- bzw. Grobfiltereinrichtung, anschließend eine Flockungs- bzw. Sedimentationseinrichtung, wiederum anschließend eine mechanische Feinfiltereinrichtung und abschließend eine Grundadsorptionseinrichtung durchläuft, wobei die abschließende Grundadsorptionseinrichtung eine herkömmliche Formaktivkohle auf Basis von Kokosnussschalen umfasst. Die Wasseraufreinigungsanlage weist dabei einen maximalen täglichen Wasserdurchsatz von 36.000 m³/d auf.
   Die Wasseraufreinigungsanlage wird dabei mit Rohwasser (insbesondere in Form einer Mischung) aus verschiedenen Quellen, wie sie auch in Fig. 3 angeführt sind, betrieben, wobei das diesbezügliche Rohwasser zeitlich begrenzt mit besonders hohen Konzentrationen bzw. Mengen von Metaldehyd belastet ist, was beispielsweise durch starke Regenfälle in den Wintermonaten bedingt sein kann. Folglich liegen in dem der Aufreinigung zugrundeliegenden Rohwasser zeitlich begrenzte und spontan auftretende Konzentrationsanstiege bzw. -erhöhungen des Pestizids Metaldehyd vor, wie gleichermaßen in Fig. 3 dargestellt.
   Das aufzureinigende Wasser wird zu Zwecken der Entfernung von Metaldehyd durch die Wasseraufreigungsanlage geführt, wobei das Wasser aufeinander abfolgend die jeweiligen Reinigungsstufen mit der zuletzt vorliegenden Grundadsorptionseinrichtung durchläuft.
   Dabei ist jedoch festzustellen, dass das Metaldehyd mit der vorliegenden Vorgehensweise bzw. der hierzu eingesetzten Anlage im Rahmen der Trinkwasseraufbereitung nicht in zufriedenstellendem Maße aus dem Rohwasser entfernt bzw. abgetrennt werden kann, und zwar auch nicht im letzten Aufreinigungsschritt mit der hierzu eingesetzten Grundadsorptionseinrichtung auf Basis konventioneller Aktivkohle.
   Die vorliegend untersuchte Anlage weist zudem eine nur geringe Standzeit auf, welche nämlich weniger als 10.000 BV bzw. < 10.000 BV beträgt. Zudem sind in dem behandelten Wasser relativ hohe Durchbrüche von Metaldehyd zu beobachten, welche maßgeblich mit dem Vorliegen von plötzlich auftretenden Metaldehyd-Konzentrationsanstiegen in dem Rohwasser korrelieren.
   Nach dem Abklingen bzw. dem Durchlaufen der jeweiligen Konzentrationsanstiege bzw. -erhöhungen liegt zudem eine übermäßige Desorption von bereits adsorbiertem Metaldehyd vor, was insbesondere durch den plötzlichen Konzentrationsabfall der Verunreinigungen in dem zu behandelnden bzw. aufzuarbeitenden Wasser mit der damit einhergehenden Einstellung eines neuen chemischen Gleichgewichts zwischen freiem Metaldehyd im Wasser und an der Aktivkohle gebundenem Metaldehyd bedingt ist.
   Im Ergebnis kann auf Basis der vorliegenden Wasseraufreinigungsanlage somit keine effektive Aufreinigung des zugrundeliegenden Rohwassers erfolgen, und zwar insbesondere was die Handhabung von Konzentrationsanstiegen der vorliegenden Art anbelangt, so dass auch von daher die entsprechenden Verunreinigungsgrenzwerte, wie zuvor angeführt, oftmals nicht eingehalten bzw. erfüllt werden können.
b) Darüber hinaus werden Untersuchungen an einer weiteren Wasseraufreinigungsanlage (Anlage II, Vergleich) durchgeführt, welche vom Aufbau der zuvor angeführten Anlage I mit der Maßgabe entspricht, dass stromabwärts zu der Grundadsorptionseinrichtung eine weitere Grundadsorptionseinrichtung angeordnet bzw. der ersten Grundadsorptionseinrichtung nachgeschaltet wird. Auch die zweite Grundadsorptionseinrichtung umfasst dabei eine herkömmliche Formaktivkohle auf Basis von Kokosnussschalen.
   Die diesbezügliche Wasseraufreinigungsanlage wird in entsprechender Weise, wie zuvor für Anlage I angeführt, betrieben. Dabei weist die vorliegend untersuchte Anlage II gegenüber Anlage I eine leicht verbesserte Standzeit auf, welche nämlich < 15.000 BV beträgt. Jedoch treten auch bei der Wasseraufbereitungsanlage gemäß Anlage II bei Vorliegen spontaner Konzentrationsanstiege von Metaldehyd in dem Rohwasser unerwünschte Durchbrüche in dem behandelten Wasser auf. Zudem liegt auch bei der vorliegenden Wasseraufreinigungsanlage das Problem der Desorption nach Durchlaufen einzelner Konzentrationsanstiege von Metaldehyd vor, so dass auch die in Rede stehende Anlage II insgesamt nicht die hohen Anforderungen in Bezug auf die Entfernung von insbesondere im Rahmen von Konzentrationsanstiegen vorliegenden Metaldehyd erfüllt.
c) In entsprechender Weise werden Untersuchungen an einer weiteren Wasseraufreinigungsanlage (Anlage III, Vergleich) durchgeführt, wobei die vorliegend untersuchte Anlage III der zuvor angeführten Anlage II mit der Maßgabe entspricht, dass nachfolgend zu den Grundadsorptionseinrichtungen, und zwar stromabwärts zu der zweiten Grundadsorptionseinrichtung und somit sozusagen als stromabwärts zuletzt angeordnete Aufreinigungseinrichtung eine weitere Adsorptionseinrichtung eingesetzt wird.
   Die stromabwärts zuletzt angeordnete Adsorptionseinrichtung weist dabei eine Hochleistungsaktivkohle in Form einer kugelförmigen Aktivkohle auf (mittlerer Teilchendurchmesser ca. 0,4 mm, spezifische Oberfläche (BET-Oberfläche) etwa 1.700 m²/g; Jodzahl etwa 1.600 mg/g; Rüttel- bzw. Stampfdichte etwa 490 kg/m³; Aschegehalt etwa 0,2 Gew.-%; Wassergehalt etwa 0,1 Gew.-%; Abriebhärte bzw. -festigkeit etwa 99 %). Auch die vorliegende Trinkwasseraufreinigungsanlage gemäß Anlage III wird in entsprechender Weise zu den obigen Ausführungen betrieben, so dass folglich auch für die vorliegende Wasseraufreinigungsanlage ein mit Verunreinigungen in Form von Metaldehyd belastetem Rohwasser eingesetzt wird, bei welchem der in Rede stehende Schadstoff gleichermaßen auch in Form von zeitlich begrenzten bzw. spontanen Konzentrationsanstiegen anfällt bzw. vorliegt, wie zuvor angeführt.
   Die vorliegend untersuchte Trinkwasseraufreinigungsanlage weist eine Standzeit von < 20.000 BV auf. Zwar ist die Gefahr von spontanen Durchbrüchen bei Vorliegen eines Konzentrationsanstiegs von Metaldehyd etwas verringert, jedoch treten bei Anlage III entsprechende Durchbrüche am Auslass der Anlage bzw. in dem behandelten Wasser auf, welche gleichermaßen mit dem Vorliegen jeweiliger Konzentrationsspitzen korrelieren. Gleichermaßen ist auch eine Desorption von Metaldehyd nach Durchlaufen des Konzentrationsanstiegs in dem behandelten Wasser bzw. am Auslass der Adsorptionsstufe zu beobachten.
d) Schließlich wird eine weitere Wasseraufbereitungsanlage (Anlage IV, erfindungsgemäß) unter Durchführung einer erfindungsgemäßen Verfahrensführung untersucht. Die erfindungsgemäße Wasseraufreinigungsanlage gemäß Anlage IV entspricht dabei der zuvor genannten Anlage I mit der Maßgabe, dass stromabwärts zu der Grundadsorptionsstufe eine Hauptadsorptionseinrichtung sowie eine in Abhängigkeit von einem vorgegebenen Konzentrationsgrenzwert, insbesondere von einem vorgegebenen Einlasskonzentrationsgrenzwert, der Verunreinigungen in dem zu behandelnden bzw. aufzureinigenden Wasser zuschaltbare, stromaufwärts zu der Hauptadsorptionseinrichtung und stromabwärts zu der Grundadsorptionsstufe angeordnete Spitzenlastadsorptionseinrichtung eingesetzt werden. Dabei werden vorliegend sowohl die Spitzenlastadsorptionseinrichtung als auch die Hauptadsorptionseinrichtung mit der bereits für die vorgenannte Anlage III verwendeten Hochleistungsaktivkohle in Form einer kugelförmigen Aktivkohle mit den diesbezüglich angeführten Eigenschaften ausgerüstet. Hierzu kann auf die Ausführungen in Abschnitt c) verwiesen werden.
   Zudem weist die erfindungsgemäße Anlage IV eine Verunreinigungsmesseinrichtung auf, wobei die Erfassung bzw. Messung des vorgegebenen Konzentrationsgrenzwertes, insbesondere des vorgegebenen Einlasskonzentrationsgrenzwertes, am Einlass der Anlage erfolgt. Dabei kann die Messung bzw. Erfassung des Einlasskonzentrationsgrenzwertes in Form einer *Online*-Messung erfolgen. Der vorgegebene Eingangskonzentrationsgrenzwert, insbesondere Einlasskonzentrationsgrenzwert, wird im Rahmen der vorliegenden Untersuchung mit einem Wert von 0,1 µg/l vorgegeben, so dass bei Überschreiten des in Rede stehenden Wertes (d. h. bei Vorliegen eines Konzentrationsanstiegs) die Spitzenlastadsorptionsstufe zugeschaltet und bei Unterschreiten des in Rede stehenden Wertes abgeschaltet wird.
   Die Spitzenlastadsorptionseinrichtung kann dabei über entsprechende Regeleinrichtungen zu- bzw. abgeschaltet werden, wobei im zugeschalteten Zustand bzw. bei Überschreiten des vorgegebenen Konzentrationsgrenzwertes, insbesondere Einlasskonzentrationsgrenzwertes, derart verfahren wird, dass unter Zuschaltung der Spitzenlastadsorptionseinrichtung das zu behandelnde bzw. aufzureinigende Wasser nach Durchlaufen der Grundadsorptionseinrichtung (sowie der weiteren der Grundadsorptionseinrichtung vorgeschalteten Aufbereitungs- bzw. Behandlungseinrichtungen bzw. Aufreinigungsstufen) zunächst durch die Spitzenlastadsorptionseinrichtung und anschließend durch die Hauptadsorptionseinrichtung geführt wird.
   Zudem wird bei Unterschreiten des vorgegebenen Konzentrationsgrenzwertes, insbesondere Einlasskonzentrationsgrenzwertes, die Spitzenlastadsorptionseinrichtung erneut abgeschaltet (wobei diese in einem zuschaltbaren Zustand verbleibt), so dass bei Unterschreiten des in Rede stehenden Grenzwertes das aufzureinigende bzw. zu behandelnde Wasser unter Auslassen bzw. Überbrückung der Spitzenlastadsorptionseinrichtung aus der Grundadsorptionseinrichtung direkt in die Hauptadsorptionsstufe geführt wird.
   Im Hinblick auf die erfindungsgemäße Wasseraufreinigungsanlage wird somit auf das erfindungsgemäße Konzept abgestellt, wonach sozusagen im Rahmen der Trinkwasseraufbereitung als nachgeschaltete Aufreinigung (d.h. nach Passieren des zu reinigenden Wassers durch die Grundadsorptionseinrichtung sowie durch die weiteren der Grundadsorptionseinrichtung vorgeschalteten Aufbereitungs- bzw. Behandlungseinrichtungen bzw. Aufreinigungsstufen) eine Hauptadsorptionseinrichtung mit einer insbesondere nach Art einer vorschaltbaren "Fire*wall*" konzipierten Spitzenlastadsorptionseinrichtung eingesetzt wird, wobei die Spitzenlastadsorptionseinrichtung zum gezielten Abfangen von Spitzenlastkonzentrationen der Hauptadsorptionseinrichtung vorgeschaltet wird, so dass die Spitzenlastadsorptionsstufe im Bedarfsfall bei Überschreiten des in Rede stehenden Konzentrationsgrenzwertes eingesetzt bzw. zugeschaltet wird.
   Die in Rede stehende erfindungsgemäße Wasseraufreinigungsanlage gemäß Anlage IV wird dabei in entsprechender Weise zu den zuvor angeführten Anlagen betrieben. Hierbei verhält es sich insbesondere derart, dass bei Unterschreiten der in Rede stehenden Einlasskonzentration von Metaldehyd (also bei Unterschreiten einer Einlasskonzentration von 0,1 µg/l) das zu reinigende Wasser unter Umgehung bzw. Überbrückung der Spitzenlastadsorptionsstufe in die Hauptadsorptionsstufe geführt wird, wobei dort die Konzentration unter den Zielwert von 0,05 µg/l verringert bzw. reduziert wird.
   Bei Überschreiten der Eingangskonzentration von 0,1 µg/l, was mit dem Vorliegen eines zeitlich begrenzten bzw. spontan auftretenden Konzentrationsanstiegs von Metaldehyd einhergeht, wird die Spitzenlastadsorptionseinrichtung stromaufwärts zu der Hauptadsorptionseinrichtung zugeschaltet, so dass nur die Spitzenlastadsorptionseinrichtung mit hohen Konzentrationen von Metaldehyd beladen wird, was mit einer entsprechenden Vergleichmäßigung bzw. Verringerung der Metaldehydkonzentration einhergeht, so dass die nachfolgende Hauptadsorptionseinrichtung mit entsprechend verringerten Konzentrationen von Metaldehyd beladen wird. Dabei verhält es sich insbesondere derart, dass in der vorgeschalteten Spitzenlastadsorptionseinrichtung die Konzentration der Verunreinigungen unterhalb des Grenzwertes von 0,1 µg/l abgesenkt werden kann und dass in der nachfolgend angeordneten Hauptadsorptionseinrichtung das vorgereinigte Wasser weiterführend aufbereitet bzw. finalisiert wird, und zwar dahingehend, dass in der Hauptadsorptionseinrichtung die Konzentration der Verunreinigungen unterhalb des Grenzwertes von 0,05 µg/l gesenkt wird.
   Auf diese Weise wird erfindungsgemäß eine sehr hohe Standzeit erreicht, welche nämlich für die erfindungsgemäße Anlage IV > 30.000 BV beträgt. Weiterhin wird das Auftreten von Durchbrüchen der Verunreinigungen am Auslass der Hauptadsorptionseinrichtung bzw. der Wasseraufreinigungsanlage insgesamt auch bei Vorliegen hoher Eingangskonzentrationen bzw. Konzentrationsanstiegen vermieden, nämlich insbesondere dahingehend, dass auch bei Vorliegen hoher Eingangskonzentrationen das letztendlich erhaltene aufgereinigte Wasser eine Konzentration von Metaldehyd unterhalb des Zielwertes von 0,05 µg/l aufweist.
   Im Rahmen der erfindungsgemäßen Konzeption werden somit hervorragende Aufreinigungsergebnisse bei gleichzeitig signifikant verlängerten Standzeiten der zugrundeliegenden Wasseraufreinigungsanlage nach der Erfindung realisiert.

### 2. Hohe Eingangskonzentrationen führen zu hohen Adsorptionskapazitäten

Die Anmelderin kann auf Basis experimenteller Untersuchungen in überraschender Weise zeigen, dass insbesondere für die erfindungsgemäß in bevorzugter Weise eingesetzten Hochleistungsadsorbentien, wie sie beispielsweise auch in der zuvor angeführten erfindungsgemäßen Wasseraufreinigungsanlage gemäß Anlage IV eingesetzt werden, hohe Eingangskonzentrationen an Verunreinigungen, wie Metaldehyd, zu hohen Adsorptionskapazitäten der zugrundeliegenden Aktivkohle führen, wie insbesondere in Fig. 3A sowie Fig. 3B dargestellt.

Fig. 3A bzw. Fig. 3B ist dabei zu entnehmen, dass niedrige Eingangskonzentrationen zu niedrigen Kapazitäten bzw. zu niedrigen Mengen an adsorbiertem Metaldehyd führen, während hohe Eingangskonzentrationen zu hohen Kapazitäten bzw. hohen Mengen an adsorbiertem Metaldehyd führen.

Auch von daher werden für die bei Überschreitung eines entsprechend hohen Konzentrationsgrenzwertes, insbesondere Einlassgrenzwertes, zugeschaltete Spitzenlastadsorptionseinrichtung gemäß der erfindungsgemäßen Konzeption hohe Kapazitäten erreicht, so dass bereits kleine Volumen bzw. geringe Mengen an Adsorptionsmaterial zu einer hervorragenden Adsorptionsleistung der Spitzenlastadsorptionseinrichtung führen. Darüber hinaus geht die erfindungsgemäße Konzeption mit der zu der Spitzenlastadsorptionseinrichtung nachfolgenden Behandlung in der Hauptadsorptionseinrichtung im Falle des Vorliegens hoher Einlasskonzentrationen mit dem Vorteil einher, dass es im Hinblick auf die zugeschaltete Spitzenlastadsorptionseinrichtung nicht erforderlich ist, die Zielkonzentration hierdurch auf einen Wert von weniger als 0,05 µg/l zu reduzieren, sondern insbesondere lediglich auf einen Wert von beispielsweise weniger als 0,1 µg/l, da das aufzureinigende Wasser im Anschluss noch durch die Hauptadsorptionseinrichtung geleitet und dort weiterführend aufgereinigt wird. Folglich kann die Spitzenlastadsorptionseinrichtung entsprechend kleiner dimensioniert werden bzw. diesbezüglich ein höheres Potential des dort eingesetzten Adsorptionsmaterials ausgeschöpft werden.

### 3. Konzentrationsabfall führt zu einer Desorption

Wie zuvor für die Vergleichs-Wasseraufreinigungsanlagen gemäß Anlage I bis III angeführt, besteht bislang die Gefahr der unerwünschten Freisetzung von Verunreinigungen bzw. Metaldehyd durch Desorption nach Durchlaufen des Konzentrationsanstiegs bzw. bei Absinken der Einlasskonzentration der Verunreinigungen auf ein normales Niveau.

In diesem Zusammenhang bedeutet das Auftreten einer Desorption beispielsweise von Metaldehyd, dass zuvor adsorbiertes Metaldehyd von dem Adsorptionsmaterial zurück in das Wasser gelöst wird. Dieser Effekt beruht - ohne sich auf diese Theorie beschränken oder festlegen zu wollen - darauf, dass sich ein neues chemisches Gleichgewicht zwischen auf dem Adsorptionsmaterial adsorbiertem Metaldehyd und gelöstem Metaldehyd im Wasser einstellt. Liegt in diesem Zusammenhang eine große Menge an Metaldehyd auf bzw. an dem Adsorptionsmaterial und eine geringe Menge bzw. Konzentration im Wasser vor, so löst sich eine entsprechend große Menge an Metaldehyd von dem Adsorptionsmaterial, so dass sich ein neues Gleichgewicht unter Freisetzung von zuvor gebundenem Metaldehyd, wobei die zugrundeliegende Desorptionsproblematik maßgeblich an den zuvor genannten Vergleichs-Wasseraufreinigungsanlagen beobachtet wird.

Vor diesem Hintergrund kann auch auf Fig. 4 verwiesen werden. Fig. 4 zeigt den Verlauf der Konzentration von Metaldehyd am jeweiligen Auslauf von zwei Versuchskolonnen in Abhängigkeit von dem Bettvolumen (vgl. rautenförmig und kreisförmig dargestellte Datenpunkte). Dabei wird in Fig. 4 derart vorgegangen, dass zunächst die Konzentrationsanstiege (in Langstrichform dargestellte Geraden) bei Erreichen eines bestimmten Bettvolumens, nämlich 47.000 BV, eingestellt werden (vgl. rechte Gerade in Kurzstrichdarstellung), so dass nach Überschreiten des zuvor angeführten Bettvolumens das aufzureinigende Wasser mit nur niedriger Eingangskonzentration an Metaldehyd durch die jeweiligen Versuchskolonnen geführt wird (vgl. dreieckförmige Datenpunkte). Hierbei zeigt sich jedoch, dass die Konzentration von Metaldehyd am jeweiligen Auslass nicht weiter abfällt, sondern - diametral hierzu - sogar ansteigt. Fig. 4 zeigt auch, dass der Effekt der Desorption bei einer höher beladenen Versuchskolonne deutlich stärker ausgeprägt ist (vgl. kreisförmig dargestellte Datenpunkte *versus* rautenförmig dargestellte Datenpunkte).

Auf Basis des erfindungsgemäßen Verfahrens bzw. der erfindungsgemäßen Wasseraufreinigungsanlage wird die Gefahr bzw. das Risiko einer Desorption nachhaltig verringert, da die zuschaltbare Spitzenlastadsorptionseinrichtung nur mit hohen Eingangskonzentrationen der in Rede stehenden Verunreinigungen und die Hauptadsorptionsstufe nur mit niedrigen Eingangskonzentrationen befahren wird.

### 4. Weitere Vorteile der vorliegenden Erfindung

Das erfindungsgemäße Verfahren bzw. die erfindungsgemäße Wasseraufreinigungsanlage ist mit dem weiteren zentralen Vorteil verbunden, dass, wie zuvor angeführt, die Standzeit der Wasseraufreinigungsanlage bzw. der Hauptadsorptionseinrichtung präzise vorhersagbar ist. Hierbei ist auch von Relevanz, dass die bei hohen Einlass- bzw. Eingangskonzentrationen der Verunreinigungen zugeschaltete Spitzenlastadsorptionseinrichtung dazu führt, dass die Hauptadsorptionseinrichtung nur mit konstant niedrigen Konzentrationen von Verunreinigungen betrieben bzw. befahren wird, was zu einer hohen und darüber hinaus präzise vorhersagbaren Standzeit führt. Der zweckgerichtete Einsatz der Spitzenlastadsorptionseinrichtung führt somit im Rahmen der vorliegenden Erfindung dazu, dass die Hauptadsorptionsstufe auch bei Vorliegen hoher Schadstoffkonzentrationen mit konstant geringen Eingangskonzentrationen an Verunreinigungen betrieben bzw. befahren wird, was dazu führt, dass deren Standzeit verlängert und zudem vorhersagbar ist und dass keine unerwarteten Durchbrüche an Verunreinigungen vorliegen und dass das Risiko einer unerwünschten Desorption signifikant verringert ist.

In diesem Zusammenhang ist wiederum für die Spitzenlastadsorptionseinrichtung anzuführen, dass diese maßgeblich nur mit hohen Konzentrationen an Verunreinigungen bei Vorliegen entsprechender Konzentrationsanstiege betrieben bzw. befahren wird, was zu einer hohen Beladung bzw. zu hohen Kapazitäten und damit zu einer effektiven Verringerung der Belastung mit den zugrundeliegenden Verunreinigungen führt. Zudem ist auch das Risiko einer Desorption deutlich reduziert. Zudem wird, wie zuvor angeführt, die Spitzenlastadsorptionseinrichtung nur dann in Betrieb gesetzt, wenn dies erforderlich ist (d. h. bei Überschreiten des vorgegebenen Konzentrationsgrenzwertes bzw. Einlasskonzentrationsgrenzwertes). Auch hierdurch ist eine höhere Ausnutzung des in der Spitzenlastadsorptionseinrichtung eingesetzten Adsorptionsmaterials möglich.

Die vorliegenden Untersuchungen und Ausführungen zeigen somit insgesamt die hervorragenden Eigenschaften des erfindungsgemäßen Verfahrens sowie der entsprechenden Wasseraufreinigungsanlage bzw. der diesbezüglichen Gesamt-Wasseraufreinigungsanlage nach der Erfindung, und zwar auch im Hinblick auf die erfindungsgemäß in spezieller Weise eingesetzten Adsorbentien in Form von insbesondere kugelförmiger Aktivkohle.

### BEZUGSZEICHENLISTE:

- 1: Wasseraufreinigungsanlage
- 2: Hauptadsorptionseinrichtung
- 2a-f: Hauptadsorptionsfilteruntereinheiten
- 3: Spitzenlastadsorptionseinrichtung
- 3a-c: weitere Spitzenlast-Adsorptionsfilteruntereinheiten
- 3': weitere Spitzenlastadsorptionseinrichtung
- 3a'-c': Spitzenlast-Adsorptionsfilteruntereinheiten der weiteren Spitzenlastadsorptionseinrichtung
- 4: Verunreinigungsmesseinrichtung
- 4': weitere Verunreinigungsmesseinrichtung
- 5a-f: Transporteinrichtungen
- 6a-e: Regeleinrichtungen
- 7: Steuereinrichtung
- 7': weitere Steuereinrichtung
- 8a-c: weitere Regeleinrichtungen der Spitzenlast-Adsorptionsfilteruntereinheiten (vorgeschaltet)
- 9a-c: weitere Regeleinrichtungen der Spitzenlast-Adsorptionsfilteruntereinheiten (nachgeschaltet)
- 10a-f: weitere Regeleinrichtungen der Hauptadsorptionsfilteruntereinheiten (vorgeschaltet)
- 11a-f: weitere Regeleinrichtungen der Hauptadsorptionsfilteruntereinheiten (nachgeschaltet)

## Patentansprüche

1. Verfahren zur vorzugsweise kontinuierlichen Behandlung und Aufreinigung von mit organischen Verunreinigungen, vorzugsweise Mikroschadstoffen und/oder Spurenstoffen, belastetem Wasser (A) zu Zwecken der Gewinnung von behandeltem und aufgereinigtem Wasser (B),
wobei die Verunreinigungen adsorptiv aus dem zu behandelnden und aufzureinigenden Wasser (A) entfernt werden, bevorzugt im Falle von zeitlich begrenzt und/oder spontan auftretenden Konzentrationsanstiegen der Verunreinigungen in dem zu behandelnden und aufzureinigenden Wasser (A),
wobei das zu behandelnde und aufzureinigende Wasser (A) einer Wasseraufreinigungsanlage (1) zur adsorptiven Entfernung der Verunreinigungen zugeführt wird, wobei die Wasseraufreinigungsanlage (1) mindestens eine Hauptadsorptionseinrichtung (2) und mindestens eine in Abhängigkeit von einem vorgegebenen Einlasskonzentrationsgrenzwert der Verunreinigungen in dem zu behandelnden und aufzureinigenden Wasser (A) zuschaltbare, stromaufwärts zur Hauptadsorptionseinrichtung (2) angeordnete Spitzenlastadsorptionseinrichtung (3) aufweist,
wobei die Hauptadsorptionseinrichtung (2) ein Festbett auf Basis einer partikelförmigen Aktivkohle in loser Schüttung der partikelförmigen Aktivkohle aufweist und wobei die Spitzenlastadsorptionseinrichtung (3) ein Festbett auf Basis einer partikelförmigen Aktivkohle in loser Schüttung der partikelförmigen Aktivkohle aufweist,
wobei die Spitzenlastadsorptionseinrichtung (3) ein geringeres Festbettfiltervolumen (V_{SLA}) als die Hauptadsorptionseinrichtung (2) aufweist, wobei das Verhältnis des Festbettfiltervolumens (V_{HA}) der Hauptadsorptionseinrichtung (2) einerseits zu dem Festbettfiltervolumen (V_{SLA}) der Spitzenlastadsorptionseinrichtung (3) andererseits mindestens 1,2 : 1 beträgt,
wobei die Verweilzeit des zu behandelnden und aufzureinigenden Wassers (A) in der Spitzenlastadsorptionseinrichtung (3) auf einen kleineren Wert als in der Hauptadsorptionseinrichtung (2) eingestellt wird, wobei das Verhältnis der Verweilzeit des zu behandelnden und aufzureinigenden Wassers (A) in der Hauptadsorptionseinrichtung (2) zu der Verweilzeit des zu behandelnden und aufzureinigenden Wassers (A) in der Spitzenlastadsorptionseinrichtung (3) auf einen Wert von mindestens 1,2 : 1 eingestellt wird,
wobei das zu behandelnde und aufzureinigende Wasser (A) der Hauptadsorptionseinrichtung (2) zugeführt und in der Hauptadsorptionseinrichtung (2) behandelt und aufgereinigt wird, wobei die Verunreinigungen adsorptiv zumindest im Wesentlichen vollständig in der Hauptadsorptionseinrichtung (2) entfernt werden, insbesondere derart, dass die Konzentration der Verunreinigungen unterhalb eines vorgegebenen Auslasskonzentrationsgrenzwertes abgesenkt wird, und
wobei bei Überschreitung des vorgegebenen Einlasskonzentrationsgrenzwertes der Verunreinigungen in dem zu behandelnden und aufzureinigenden Wasser (A) die Spitzenlastadsorptionseinrichtung (3) zugeschaltet und der Hauptadsorptionseinrichtung (2) vorgeschaltet wird derart, dass das zu behandelnde und aufzureinigende Wasser (A) zumindest teilweise, vorzugsweise vollständig, zunächst der Spitzenlastadsorptionseinrichtung (3) zugeführt und in der Spitzenlastadsorptionseinrichtung (3) behandelt und aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird.

2. Verfahren nach Anspruch 1,
wobei die Hauptadsorptionseinrichtung (2) die partikelförmige Aktivkohle in Form einer kornförmigen Aktivkohle, bevorzugt einer kugelförmigen Aktivkohle, aufweist; und/oder wobei die Spitzenlastadsorptionseinrichtung (3) die partikelförmige Aktivkohle in Form einer kornförmigen Aktivkohle, bevorzugt einer kugelförmigen Aktivkohle, aufweist.

3. Verfahren nach Anspruch 1 oder 2,
wobei das Verhältnis des Festbettfiltervolumens (V_{HA}) der Hauptadsorptionseinrichtung (2) einerseits zu dem Festbettfiltervolumen (V_{SLA}) der Spitzenlastadsorptionseinrichtung (3) andererseits mindestens 1,4 : 1, ganz besonders bevorzugt mindestens 1,6 : 1, beträgt; und/oder
wobei das Verhältnis des Festbettfiltervolumens (V_{HA}) der Hauptadsorptionseinrichtung (2) einerseits zu dem Festbettfiltervolumen (V_{SLA}) der Spitzenlastadsorptionseinrichtung (3) andererseits in einem Bereich von 1,2 : 1 bis 30 : 1, besonders bevorzugt in einem Bereich von 1,4 : 1 bis 20 : 1, ganz besonders bevorzugt in einem Bereich von 1,6 : 1 bis 10 : 1, weiter bevorzugt in einem Bereich von 1,8 : 1 bis 5 : 1, liegt.

4. Verfahren nach einem der vorangehenden Ansprüche,
wobei das Verhältnis der Verweilzeit des zu behandelnden und aufzureinigenden Wassers (A) in der Hauptadsorptionseinrichtung (2) zu der Verweilzeit des zu behandelnden und aufzureinigenden Wassers (A) in der Spitzenlastadsorptionseinrichtung (3) auf einen Wert von mindestens 1,4 : 1, ganz besonders bevorzugt mindestens 1,6 : 1, eingestellt wird;
und/oder wobei das Verhältnis der Verweilzeit des zu behandelnden und aufzureinigenden Wassers (A) in der Hauptadsorptionseinrichtung (2) zu der Verweilzeit des zu behandelnden und aufzureinigenden Wassers (A) in der Spitzenlastadsorptionseinrichtung (3) auf einen Wert in einem Bereich von 1,4 : 1 bis 5 :1, ganz besonders bevorzugt in einem Bereich von 1,6 : 1 bis 2 :1, eingestellt wird.

5. Verfahren nach einem der vorangehenden Ansprüche,
wobei bei Unterschreiten oder Vorliegen des vorgegebenen Einlasskonzentrationsgrenzwertes das zu behandelnde und aufzureinigende Wassers (A) zumindest im Wesentlichen vollständig der Hauptadsorptionseinrichtung (2) unmittelbar und/oder unter Umgehung der Spitzenlastadsorptionseinrichtung (3) zugeführt und in der Hauptadsorptionseinrichtung (2) behandelt und aufgereinigt wird.

6. Verfahren nach einem der vorangehenden Ansprüche,
wobei die Wasseraufreinigungsanlage (1) zusätzlich zur Hauptadsorptionseinrichtung (2) und Spitzenlastadsorptionseinrichtung (3) mindestens eine weitere Aufbereitungs- und Behandlungseinrichtung, insbesondere eine Mehrzahl an weiteren Aufbereitungs- und Behandlungseinrichtungen, aufweist oder hieraus besteht;
insbesondere wobei die weitere Aufbereitungs- und Behandlungseinrichtung
(i) mindestens eine mechanische Vor- und/oder Grobfiltereinrichtung,
(ii) mindestens eine Flockungs- und/oder Sedimentationseinrichtung,
(iii) mindestens eine mechanische Feinfiltereinrichtung und
(iv) gegebenenfalls mindestens eine Grundadsorptionseinrichtung aufweist, insbesondere in der vorstehenden Reihenfolge (i) bis (iv), bezogen auf die Verfahrens- und/oder Prozessrichtung;
insbesondere wobei die Flockungs- und/oder Sedimentationsvorrichtung stromabwärts zu der Vor- und/oder Grobfiltervorrichtung angeordnet wird; und/oder
insbesondere wobei die Feinfiltervorrichtung stromabwärts zu der Vor- und/oder Grobfiltervorrichtung und/oder der Flockungs- und/oder Sedimentationsvorrichtung angeordnet wird; und/oder
insbesondere wobei die Grundadsorptionsvorrichtung stromabwärts zu der Vor- und/oder Grobfiltervorrichtung und/oder der Flockungs- und/oder Sedimentationsvorrichtung und/oder der Feinfiltervorrichtung angeordnet wird.

7. Verfahren nach einem der vorangehenden Ansprüche,
wobei der Eingangskonzentrationsgrenzwert stromaufwärts zu der Spitzenlastadsorptionseinrichtung (3) und der Hauptadsorptionseinrichtung (2) gemessen und erfasst wird; und/oder
wobei der Eingangskonzentrationsgrenzwert an stromaufwärts erster Stelle und/oder, insbesondere bezogen auf die Verfahrens- und/oder Prozessrichtung, am Anfang und/oder am Einlass der Wasseraufreinigungsanlage (1) und/oder der Gesamt-Wasseraufreinigungsanlage gemessen und/oder erfasst wird.

8. Verfahren nach einem der vorangehenden Ansprüche,
wobei die Spitzenlastadsorptionseinrichtung (3) eine Mehrzahl an Spitzenlast-Adsorptionsfilteruntereinheiten (3a, 3b, 3c) aufweist;
insbesondere wobei die Spitzenlast-Adsorptionsfilteruntereinheiten (3a, 3b, 3c) in der Spitzenlastadsorptionseinrichtung (3) parallel zueinander, insbesondere strömungstechnisch parallel zueinander, angeordnet und/oder geschaltet werden, insbesondere so dass durch die jeweiligen Spitzenlast-Adsorptionsfilteruntereinheiten (3a, 3b, 3c) zumindest ein Teilstrom des durch die Spitzenlastadsorptionseinrichtung (3) geführten zu behandelnden und/oder aufzureinigenden Wassers (A) führbar ist; und/oder
wobei die Hauptadsorptionseinrichtung (2) eine Mehrzahl an Hauptadsorptionsfilteruntereinheiten (2a, 2b, 2c, 2d, 2e, 2f) aufweist;
insbesondere wobei die Hauptadsorptionsfilteruntereinheiten (2a, 2b, 2c, 2d, 2e, 2f) in der Hauptadsorptionseinrichtung (2) parallel zueinander, insbesondere strömungstechnisch parallel zueinander, angeordnet und/oder geschaltet sind, insbesondere so dass durch die jeweiligen Hauptadsorptionsfilteruntereinheiten (2a, 2b, 2c, 2d, 2e, 2f) zumindest ein Teilstrom des durch die Hauptadsorptionseinrichtung (2) geführten zu behandelnden und/oder aufzureinigenden Wassers (A) führbar ist.

9. Verfahren nach einem der vorangehenden Ansprüche,
wobei die organischen Verunreinigungen, vorzugsweise die Mikroschadstoffe und/oder die Spurenstoffe, ausgewählt werden aus der Gruppe von (i) landwirtschaftlich genutzten und/oder anfallenden Chemikalien, insbesondere Pestiziden, wie Metaldehyd; Fungiziden und Insektiziden; (ii) industriell genutzten und/oder anfallenden Chemikalien und/oder Industriechemikalien, insbesondere Weichmachern, wie Bisphenol-A; Röntgenkontrastmitteln, wie Amidotrizoesäure und lopamidol; Tensiden, wie perfluorierten Tensiden; Antiklopfmitteln, wie Methyl-tert-butylether (MTBE); und *Dissolved Organic Carbons* (DOC); und (iii) pharmazeutischen Wirkstoffen und/oder Human- und/oder Veterinärpharmaka, insbesondere Antibiotika; Analgetika und Hormonwirkstoffen; vorzugsweise aus der Gruppe von landwirtschaftlich genutzten und/oder anfallenden Chemikalien, insbesondere Pestiziden, wie Metaldehyd; Fungiziden und Insektiziden.

10. Verfahren nach einem der vorangehenden Ansprüche,
wobei die partikelförmige Aktivkohle der Spitzenlastadsorptionseinrichtung (3) und die partikelförmige Aktivkohle der Hauptadsorptionseinrichtung (2), unabhängig voneinander, erhältlich sind durch Carbonisierung und nachfolgende Aktivierung eines synthetischen und/oder nicht naturstoffbasierten Ausgangsmaterials, insbesondere auf Basis organischer Polymere; und/oder
wobei die partikelförmige Aktivkohle der Spitzenlastadsorptionseinrichtung (3) und die partikelförmige Aktivkohle der Hauptadsorptionseinrichtung (2), unabhängig voneinander, aus einem Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten werden, insbesondere durch Carbonisierung und nachfolgende Aktivierung des Ausgangsmaterials, insbesondere wobei der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt; und/oder
insbesondere wobei das Ausgangsmaterial ein insbesondere sulfoniertes und/oder Sulfonsäuregruppen enthaltendes lonenaustauscherharz, insbesondere vom Geltyp, ist; und/oder
wobei als partikelförmige Aktivkohle der Spitzenlastadsorptionseinrichtung (3) und als partikelförmige Aktivkohle der Hauptadsorptionseinrichtung (2), unabhängig voneinander, eine polymerbasierte sphärische Aktivkohle (PBSAC; *Polymer-based Spherical Activated Carbon)* eingesetzt wird.

11. Verfahren nach einem der vorangehenden Ansprüche,
wobei die partikelförmige Aktivkohle der Spitzenlastadsorptionseinrichtung (3) einen höheren Aktivierungsgrad und/oder eine größere spezifische Oberfläche, insbesondere BET-Oberfläche, und/oder ein größeres Gesamtporenvolumen, insbesondere Gesamtporenvolumen nach Gurvich, als die partikelförmige Aktivkohle der Hauptadsorptionseinrichtung (2), aufweist.

12. Wasseraufbereitungsanlage (1), insbesondere zur vorzugsweise kontinuierlichen Behandlung und Aufreinigung von mit organischen Verunreinigungen, vorzugsweise Mikroschadstoffen und/oder Spurenstoffen, belastetem Wasser (A) zu Zwecken der Gewinnung von behandeltem und aufgereinigtem Wasser (B), vorzugsweise Wasseraufbereitungsanlage (1) zur Durchführung eines Verfahrens nach einem der Ansprüche 1 bis 11,
wobei die Wasseraufbereitungsanlage (1) zur adsorptiven Entfernung von Verunreinigungen aus dem zu behandelnden und aufzureinigenden Wasser (A), bevorzugt im Falle von zeitlich begrenzt und/oder spontan auftretenden Konzentrationsanstiegen der Verunreinigungen in dem zu behandelnden und aufzureinigenden Wasser (A), ausgebildet ist,
wobei es vorgesehen ist, das zu behandelnde und aufzureinigende Wasser (A) der Wasseraufreinigungsanlage (1) zur adsorptiven Entfernung der Verunreinigungen zuzuführen,
wobei die Wasseraufreinigungsanlage (1) mindestens eine Hauptadsorptionseinrichtung (2) und mindestens eine in Abhängigkeit von einem vorgegebenen Einlasskonzentrationsgrenzwert der Verunreinigungen in dem zu behandelnden und aufzureinigenden Wasser (A) zuschaltbare, stromaufwärts zur Hauptadsorptionseinrichtung (2) angeordnete Spitzenlastadsorptionseinrichtung (3) aufweist,
wobei die Hauptadsorptionseinrichtung (2) ein Festbett auf Basis einer partikelförmigen Aktivkohle in loser Schüttung der partikelförmigen Aktivkohle aufweist und wobei die Spitzenlastadsorptionseinrichtung (3) ein Festbett auf Basis einer partikelförmigen Aktivkohle in loser Schüttung der partikelförmigen Aktivkohle aufweist,
wobei die Spitzenlastadsorptionseinrichtung (3) ein geringeres Festbettfiltervolumen (V_{SLA}) als die Hauptadsorptionseinrichtung (2) aufweist, wobei das Verhältnis des Festbettfiltervolumens (V_{HA}) der Hauptadsorptionseinrichtung (2) einerseits zu dem Festbettfiltervolumen (V_{SLA}) der Spitzenlastadsorptionseinrichtung (3) andererseits mindestens 1,2 : 1 beträgt, und
wobei die Wasseraufreinigungsanlage (1) derart ausgebildet ist, dass die Verweilzeit des zu behandelnden und aufzureinigenden Wassers (A) in der Spitzenlastadsorptionseinrichtung (3) auf einen kleineren Wert als in der Hauptadsorptionseinrichtung (2) eingestellt wird, wobei das Verhältnis der Verweilzeit des zu behandelnden und aufzureinigenden Wassers (A) in der Hauptadsorptionseinrichtung (2) zu der Verweilzeit des zu behandelnden und aufzureinigenden Wassers (A) in der Spitzenlastadsorptionseinrichtung (3) auf einen Wert von mindestens 1,2 : 1 eingestellt wird,
wobei die Wasseraufreinigungsanlage (1) derart ausgebildet ist, dass das zu behandelnde und aufzureinigende Wasser (A) der Hauptadsorptionseinrichtung (2) zugeführt und in der Hauptadsorptionseinrichtung (2) behandelt und aufgereinigt wird, wobei die Verunreinigungen adsorptiv zumindest im Wesentlichen vollständig in der Hauptadsorptionseinrichtung (2) entfernt werden, insbesondere derart, dass die Konzentration der Verunreinigungen unterhalb eines vorgegebenen Auslasskonzentrationsgrenzwertes abgesenkt wird, und
wobei die Wasseraufreinigungsanlage (1) derart ausgebildet ist, dass bei Überschreitung des vorgegebenen Einlasskonzentrationsgrenzwertes der Verunreinigungen in dem zu behandelnden und aufzureinigenden Wasser (A) die Spitzenlastadsorptionseinrichtung (3) der Hauptadsorptionseinrichtung (2) vorgeschaltet wird derart, dass das zu behandelnde und aufzureinigende Wasser (A) zumindest teilweise, vorzugsweise vollständig, zunächst der Spitzenlastadsorptionseinrichtung (3) zugeführt und in der Spitzenlastadsorptionseinrichtung (3) behandelt und aufgereinigt wird, wobei die Verunreinigungen adsorptiv zumindest teilweise entfernt werden, vorzugsweise der Konzentrationsanstieg der Verunreinigungen abgeschwächt und vergleichmäßigt wird.

13. Verwendung einer Wasseraufbereitungsanlage gemäß Anspruch 12
zur vorzugsweise kontinuierlichen Behandlung und/oder Aufreinigung von mit organischen Verunreinigungen, vorzugsweise Mikroschadstoffen und/oder Spurenstoffen, belastetem Wasser zu Zwecken der Gewinnung von behandeltem und aufgereinigtem Wasser; und/oder
zur Abschwächung und Vergleichmäßigung von zeitlich begrenzt und/oder spontan auftretenden Konzentrationsanstiegen von Verunreinigungen in zu behandelndem und aufzureinigendem Wasser; und/oder
zur Nachrüstung oder Ergänzung von bestehenden Wasseraufreinigungsanlagen oder Wasseraufreinigungsvorrichtungen für die kontinuierlichen Behandlung und Aufreinigung von mit organischen Verunreinigungen, vorzugsweise Mikroschadstoffen und/oder Spurenstoffen, belastetem Wasser.

## Claims

1. A method for preferably continuously treating and purifying water (A) contaminated with organic impurities, preferably micropollutants and/or trace substances, for the purpose of obtaining treated and purified water (B),
wherein the impurities are adsorptively removed from the water (A) to be treated and purified, preferably in the case of temporary and/or spontaneously occurring increases in concentration of the impurities in the water (A) to be treated and purified,
wherein the water (A) to be treated and purified is fed to a water purification system (1) for adsorptive removal of the impurities, wherein the water purification system (1) has at least one main adsorption device (2) and at least one peak load adsorption device (3) which can be engaged as a function of a predetermined inlet concentration limit value of the impurities in the water (A) to be treated and purified and is arranged upstream of the main adsorption device (2),
wherein the main adsorption device (2) has a fixed bed based on a particulate activated carbon in a loose bulk of particulate activated carbon and wherein the peak load adsorption device (3) has a fixed bed based on a particulate activated carbon in a loose bulk of particulate activated carbon,
wherein the peak load adsorption device (3) has a smaller fixed bed filter volume (V_{SLA}) than the main adsorption device (2), wherein the ratio of the fixed bed filter volume (V_{HA}) of the main adsorption device (2), on the one hand, to the fixed bed filter volume (V_{SLA}) of the peak load adsorption device (3), on the other hand, is at least 1.2:1,
wherein the residence time of the water (A) to be treated and purified in the peak load adsorption device (3) is set to a smaller value than in the main adsorption device (2), wherein the ratio of the residence time of the water (A) to be treated and purified in the main adsorption device (2) to the residence time of the water (A) to be treated and purified in the peak load adsorption device (3) is set to a value of at least 1.2:1,
wherein the water (A) to be treated and purified is fed to the main adsorption device (2) and treated and purified in the main adsorption device (2), wherein the impurities are adsorptively, at least substantially completely, removed in the main adsorption device (2), in particular in such a way that the concentration of the impurities is reduced below a predetermined outlet concentration limit value, and
wherein the peak load adsorption device (3) is engaged when the specified inlet concentration limit value of the impurities in the water (A) to be treated and purified is exceeded and the main adsorption device (2) is connected upstream in such a way that the water (A) to be treated and purified is at least partially, preferably completely, first fed to the peak load adsorption device (3) and treated and purified in the peak load adsorption device (3), wherein the impurities are at least partially removed by adsorption, the increase in the concentration of the impurities is preferably attenuated and evened out.

2. The method according to claim 1,
wherein the main adsorption device (2) has the particulate activated carbon in the form of a granular activated carbon, preferably a spherical activated carbon; and/or
wherein the peak load adsorption device (3) has the particulate activated carbon in the form of a granular activated carbon, preferably a spherical activated carbon.

3. The method according to claim 1 or 2,
wherein the ratio of the fixed bed filter volume (V_{HA}) of the main adsorption device (2), on the one hand, to the fixed bed filter volume (V_{SLA}) of the peak load adsorption device (3), on the other hand, is at least 1.4:1, very particularly preferably 1.6:1; and/or
wherein the ratio of the fixed bed filter volume (V_{HA}) of the main adsorption device (2), on the one hand, to the fixed bed filter volume (V_{SLA}) of the peak load adsorption device (3), on the other hand, is in a range of 1.2:1 to 30:1, particularly preferably in a range from 1.4:1 to 20:1, very particularly preferably in a range from 1.6:1 to 10:1, further preferably in a range from 1.8:1 to 5:1.

4. The method according to one of the preceding claims,
wherein the ratio of the residence time of the water (A) to be treated and purified in the main adsorption device (2) to the residence time of the water (A) to be treated and purified in the peak load adsorption device (3) is set to a value of at least 1.4:1, very particularly preferably at least 1.6:1;
and/or wherein the ratio of the residence time of the water (A) to be treated and purified in the main adsorption device (2) to the residence time of the water (A) to be treated and purified in the peak load adsorption device (3) is set in a range from 1.4:1 to 5:1, very particularly preferably in a range from 1.6:1 to 2:1.

5. The method according to one of the preceding claims,
wherein, if the inlet concentration limit value falls below or is met, the water (A) to be treated and purified is at least substantially completely fed to the main adsorption device (2) directly and/or bypassing the peak load adsorption device (3) and treated and purified in the main adsorption device (2).

6. The method according to one of the preceding claims,
wherein the water purification system (1) in addition to the main adsorption device (2) and the peak load adsorption device (3) has or consists of at least one further processing and treatment device, in particular a plurality of further processing and treatment devices;
in particular, wherein the further processing and treatment device has
(i) at least one mechanical pre-filter and/or coarse filter device,
(ii) at least one flocculation and/or sedimentation device,
(iii) at least one mechanical fine filter device and
(iv) optionally at least one basic adsorption device,
in particular in the above order (i) to (iv), based on the method and/or process direction;
in particular wherein the flocculation and/or sedimentation device is arranged downstream of the pre-filter and/or coarse filter device; and/or
in particular wherein the fine filter device is arranged downstream of the pre-filter and/or coarse filter device and/or the flocculation and/or sedimentation device; and/or
in particular wherein the basic adsorption device is arranged downstream of the pre-filter and/or coarse filter device and/or the flocculation and/or sedimentation device and/or the fine filter device.

7. The method according to one of the preceding claims,
wherein the input concentration limit value is measured and detected upstream of the peak load adsorption device (3) and the main adsorption device (2); and/or
wherein the input concentration limit value is measured and/or detected at the first point upstream and/or, in particular with reference to the method and/or process direction, at the beginning and/or at the inlet of the water purification system (1) and/or the entire water purification system.

8. The method according to one of the preceding claims,
wherein the peak load adsorption device (3) has a plurality of peak load adsorption filter sub-units (3a, 3b, 3c);
in particular wherein the peak load adsorption filter sub-units (3a, 3b, 3c) in the peak load adsorption device (3) are arranged and/or connected parallel to one another, in particular fluidically parallel to one another, in particular so that at least a partial flow of the water (A) to be treated and/or to be purified that is passed through the peak load adsorption device (3) can be passed through the respective peak load adsorption filter sub-units (3a, 3b, 3c); and/or
wherein the main adsorption device (2) has a plurality of main adsorption filter sub-units (2a, 2b, 2c, 2d, 2e, 2f);
in particular wherein the main adsorption filter sub-units (2a, 2b, 2c, 2d, 2e, 2f) are arranged and/or connected in the main adsorption device (2) parallel to one another, in particular fluidically parallel to one another, in particular so that at least a partial flow of the water (A) to be treated and/or to be purified that is passed through the main adsorption device (2) can be passed through the respective main adsorption filter sub-units (2a, 2b, 2c, 2d, 2e, 2f).

9. The method according to one of the preceding claims,
wherein the organic impurities, preferably the micropollutants and/or the trace substances, are selected from the group of (i) agriculturally used and/or agriculturally arising chemicals, in particular pesticides, such as metaldehyde, fungicides and insecticides; (ii) industrially used and/or industrially arising chemicals and/or industrial chemicals, in particular plasticisers such as bisphenol A; x-ray contrast agents such as amidotrizoic acid and iopamidol; surfactants such as perfluorinated surfactants; anti-knock agents such as methyl tert-butyl ether (MTBE); and dissolved organic carbons (DOC); and (iii) active pharmaceutical ingredients and/or human and/or veterinary drugs, in particular antibiotics; analgesics and hormonal agents; preferably from the group of agriculturally used and/or agriculturally arising chemicals, in particular pesticides, such as metaldehyde, fungicides and insecticides.

10. The method according to one of the preceding claims,
wherein the particulate activated carbon of the peak load adsorption device (3) and the particulate activated carbon of the main adsorption device (2), independently of one another, can be obtained by carbonisation and subsequent activation of a synthetic and/or non-natural substance-based starting material, in particular based on organic polymers; and/or
wherein the particulate activated carbon of the peak load adsorption device (3) and the particulate activated carbon of the main adsorption device (2), independently of one another, are obtained from a starting material based on organic polymers, in particular based on sulphonated organic polymers, preferably based on divinylbenzene-crosslinked polystyrene, preferably based on styrene/divinylbenzene copolymers, in particular by carbonisation and subsequent activation of the starting material, in particular wherein the content of divinylbenzene in the starting material is in the range from 1% by weight to 20% by weight, in particular 1% by weight to 15% by weight, preferably 1.5% by weight to 12.5% by weight, more preferably 2% by weight to 10% by weight, based on the starting material; and/or
in particular wherein the starting material is an ion exchange resin, in particular of the gel type, containing in particular sulphonated and/or sulphonic acid groups; and/or
wherein a polymer-based spherical activated carbon (PBSAC) is used as the particulate activated carbon of the peak load adsorption device (3) and the particulate activated carbon of the main adsorption device (2), independently of one another.

11. The method according to one of the preceding claims,
wherein the particulate activated carbon of the peak load adsorption device (3) has a higher degree of activation and/or a larger specific surface, in particular BET surface, and/or a larger total pore volume, in particular a Gurvich total pore volume, than the particulate activated carbon of the main adsorption device (2).

12. A water preparation system (1), in particular for preferably continuously treating and purifying water (A) contaminated with organic impurities, preferably micropollutants and/or trace substances, for the purpose of obtaining treated and purified water (B), preferably a water preparation system (1) for carrying out a method according to one of claims 1 to 11,
wherein the water preparation system (1) is designed to adsorptively remove impurities from the water (A) to be treated and purified, preferably in the case of temporary and/or spontaneously occurring increases in concentration of the impurities in the water (A) to be treated and purified,
wherein it is provided that the water (A) to be treated and purified is fed to a water purification system (1) for adsorptive removal of the impurities,
wherein the water purification system (1) has at least one main adsorption device (2) and at least one peak load adsorption device (3) which can be engaged as a function of a predetermined inlet concentration limit value of the impurities in the water (A) to be treated and purified and is arranged upstream of the main adsorption device (2),
wherein the main adsorption device (2) has a fixed bed based on a particulate activated carbon in a loose bulk of particulate activated carbon and wherein the peak load adsorption device (3) has a fixed bed based on a particulate activated carbon in a loose bulk of particulate activated carbon,
wherein the peak load adsorption device (3) has a smaller fixed bed filter volume (V_{SLA}) than the main adsorption device (2), wherein the ratio of the fixed bed filter volume (V_{HA}) of the main adsorption device (2), on the one hand, to the fixed bed filter volume (V_{SLA}) of the peak load adsorption device (3), on the other hand, is at least 1.2:1, and
wherein the water purification system (1) is designed such that the residence time of the water (A) to be treated and purified in the peak load adsorption device (3) is set to a smaller value than in the main adsorption device (2), wherein the ratio of the residence time of the water (A) to be treated and purified in the main adsorption device (2) to the residence time of the water (A) to be treated and purified in the peak load adsorption device (3) is set to a value of at least 1.2:1,
wherein the water purification system (1) is designed such that the water (A) to be treated and purified is fed to the main adsorption device (2) and treated and purified in the main adsorption device (2), wherein the impurities are adsorptively, at least substantially completely, removed in the main adsorption device (2), in particular in such a way that the concentration of the impurities is reduced below a predetermined outlet concentration limit value, and
wherein the water purification system (1) is designed such that the peak load adsorption device (3) is engaged when the specified inlet concentration limit value of the impurities in the water (A) to be treated and purified is exceeded and the main adsorption device (2) is connected upstream in such a way that the water (A) to be treated and purified is at least partially, preferably completely, first fed to the peak load adsorption device (3) and treated and purified in the peak load adsorption device (3), wherein the impurities are at least partially removed by adsorption; the increase in the concentration of the impurities is preferably attenuated and evened out.

13. A use of a water preparation system according to claim 12
for preferably continuously treating and/or purifying water contaminated with organic impurities, preferably micropollutants and/or trace substances, for the purpose of obtaining treated and purified water; and/or
for attenuating and evening out temporary and/or spontaneously occurring increases in concentration of impurities in the water to be treated and purified; and/or
for retrofitting or supplementing existing water purification systems or water purification devices for continuously treating and purifying water contaminated with organic impurities, preferably micropollutants and/or trace substances.

## Revendications

1. Procédé de traitement et de purification de préférence en continu de l'eau (A) contaminée par des impuretés organiques, de préférence des micropolluants et/ou des oligoéléments, à des fins de production de l'eau (B) traitée et purifiée,
dans lequel les impuretés sont éliminées par adsorption de l'eau (A) à traiter et purifier, de préférence en cas d'augmentation limitée temporellement et/ou spontanée de la concentration des impuretés dans l'eau (A) à traiter et à purifier,
dans lequel l'eau (A) à traiter et à purifier est amenée à une installation de purification de l'eau (1) pour l'élimination par adsorption des impuretés, dans lequel l'installation de purification de l'eau (1) comporte au moins un dispositif d'adsorption principal (2) et au moins un dispositif d'adsorption de charge de pointe (3) disposé en amont du dispositif d'adsorption principal (2) pouvant être connecté en fonction d'une valeur limite de concentration d'entrée prédéfinie des impuretés dans l'eau (A) à traiter et à purifier,
dans lequel le dispositif d'adsorption principal (2) comporte un lit fixe à base d'un charbon actif particulaire en vrac du charbon actif particulaire et dans lequel le dispositif d'adsorption de charge de pointe (3) comporte un lit fixe à base d'un charbon actif particulaire en vrac du charbon actif particulaire,
dans lequel le dispositif d'adsorption de charge de pointe (3) présente un volume de filtre à lit fixe (V_{SLA}) inférieur au dispositif d'adsorption principal (2), dans lequel le rapport du volume de filtre à lit fixe (V_{HA}) du dispositif d'adsorption principal (2) d'une part au volume de filtre à lit fixe (V_{SLA}) du dispositif d'adsorption de charge de pointe (3) d'autre part est d'au moins 1,2:1,
dans lequel le temps de séjour de l'eau (A) à traiter et à purifier dans le dispositif d'adsorption de charge de pointe (3) est réglé à une valeur inférieure que dans le dispositif d'adsorption principal (2), dans lequel le rapport du temps de séjour de l'eau (A) à traiter et à purifier dans le dispositif d'adsorption principal (2) au temps de séjour de l'eau (A) à traiter et à purifier dans le dispositif d'adsorption de charge de pointe (3) est réglé à une valeur d'au moins 1,2:1,
dans lequel l'eau (A) à traiter et à purifier est amenée dans le dispositif d'adsorption principal (2) et traitée et purifiée dans le dispositif d'adsorption principal (2), dans lequel les impuretés sont éliminées par adsorption au moins essentiellement complètement dans le dispositif d'adsorption principal (2), en particulier de telle sorte que la concentration des impuretés est abaissée en dessous d'une valeur limite de concentration de sortie prédéfinie, et
dans lequel, lorsque la valeur limite de concentration d'entrée prédéfinie des impuretés dans l'eau (A) à traiter et à purifier est dépassée, le dispositif d'adsorption de charge de pointe (3) est connecté et le dispositif d'adsorption principal (2) et connecté en amont de telle sorte que l'eau (A) à traiter et à purifier est au moins partiellement, de préférence complètement, d'abord amenée dans le dispositif d'adsorption de charge de pointe (3) et traitée et purifiée dans le dispositif d'adsorption de charge de pointe (3), dans lequel les impuretés sont au moins partiellement éliminées par adsorption, de préférence l'augmentation de concentration des impuretés étant affaiblie et uniformisée.

2. Procédé selon la revendication 1,
dans lequel le dispositif d'adsorption principal (2) comporte le charbon actif particulaire sous la forme d'un charbon actif granulaire, de préférence un charbon actif sphérique ; et/ou
dans lequel le dispositif d'adsorption de charge de pointe (3) comporte le charbon actif particulaire sous la forme d'un charbon actif granulaire, de préférence un charbon actif sphérique.

3. Procédé selon la revendication 1 ou 2,
dans lequel le rapport du volume de filtre à lit fixe (V_{HA}) du dispositif d'adsorption principal (2) d'une part au volume de filtre à lit fixe (V_{SLA}) du dispositif d'adsorption de charge de pointe (3) d'autre part est d'au moins 1,4:1, mieux encore d'au moins 1,6:1 ; et/ou
le rapport du volume de filtre à lit fixe (V_{HA}) du dispositif d'adsorption principal (2) d'une part au volume de filtre à lit fixe (V_{SLA}) du dispositif d'adsorption de charge de pointe (3) d'autre part se trouve dans une plage de 1,2:1 à 30:1, de manière particulièrement préférée dans une plage de 1,4:1 à 20:1, de manière tout particulièrement préférée dans une plage de 1,6:1 à 10:1, plus préférablement encore dans une plage de 1,8:1 à 5:1.

4. Procédé selon l'une quelconque des revendications précédentes,
dans lequel le rapport du temps de séjour de l'eau (A) à traiter et à purifier dans le dispositif d'adsorption principal (2) au temps de séjour de l'eau (A) à traiter et à purifier dans le dispositif d'adsorption de charge de pointe (3) est réglé sur une valeur d'au moins 1,4:1, mieux encore d'au moins 1,6:1 ;
et/ou dans lequel le rapport du temps de séjour de l'eau (A) à traiter et à purifier dans le dispositif d'adsorption principal (2) au temps de séjour de l'eau (A) à traiter et à purifier dans le dispositif d'adsorption de charge de pointe (3) est réglé sur une valeur dans une plage de 1,4:1 à 5:1, de manière tout particulièrement préférée dans une plage de 1,6:1 à 2:1.

5. Procédé selon l'une quelconque des revendications précédentes,
dans lequel, lorsque la valeur limite de concentration d'entrée prédéfinie n'est pas atteinte ou est juste atteinte, l'eau (A) à traiter et à purifier est au moins essentiellement complètement amenée au dispositif d'adsorption principal (2) directement et/ou en contournant le dispositif d'adsorption de charge de pointe (3), puis traitée et purifiée dans le dispositif d'adsorption principal (2).

6. Procédé selon l'une quelconque des revendications précédentes,
dans lequel l'installation de purification de l'eau (1) en plus du dispositif d'adsorption principal (2) et du dispositif d'adsorption de charge de pointe (3), comporte ou est constitué d'au moins un autre dispositif de préparation et de traitement, en particulier une pluralité d'autres dispositifs de préparation et de traitement ;
en particulier, dans lequel l'autre dispositif de préparation et de traitement
(i) comporte au moins un dispositif de pré-filtre et/ou de filtre grossier mécanique,
(ii) au moins un dispositif de floculation et/ou de sédimentation,
(iii) au moins un dispositif de filtre fin mécanique, et
(iv) éventuellement au moins un dispositif d'adsorption de base,
en particulier dans l'ordre (i) à (iv) ci-dessus, par rapport au sens de procédé et/ou de processus ;
en particulier dans lequel le dispositif de floculation et/ou de sédimentation est disposé en aval du dispositif de pré-filtré et/ou de filtre grossier ; et/ou
en particulier dans lequel le dispositif de filtre fin est disposé en aval du dispositif de pré-filtre et/ou de filtre grossier et/ou du dispositif de floculation et/ou de sédimentation ; et/ou
en particulier dans lequel le dispositif d'adsorption de base est disposé en aval du dispositif de pré-filtre et/ou de filtre grossier et/ou du dispositif de floculation et/ou de sédimentation et/ou du dispositif de filtre fin.

7. Procédé selon l'une quelconque des revendications précédentes,
dans lequel la valeur limite de concentration d'entrée est mesurée et détectée en amont du dispositif d'adsorption de charge de pointe (3) et du dispositif d'adsorption principal (2) ; et/ou
dans lequel la valeur limite de concentration d'entrée est mesurée et/ou détectée au premier point en amont et/ou, en particulier en référence au sens de procédé et/ou de processus, au début et/ou à l'entrée de l'installation de purification de l'eau (1) et/ou de l'ensemble de l'installation de purification de l'eau.

8. Procédé selon l'une quelconque des revendications précédentes,
dans lequel le dispositif d'adsorption de charge de pointe (3) comprend une pluralité de sous-unités de filtre d'adsorption de charge de pointe (3a, 3b, 3c) ;
en particulier dans lequel les sous-unités de filtre d'adsorption de charge de pointe (3a, 3b, 3c) dans le dispositif d'adsorption de charge de pointe (3) sont disposées et/ou connectées en parallèle les unes aux autres, en particulier fluidiquement en parallèle les unes aux autres, en particulier de telle sorte qu'au moins un flux partiel de l'eau (A) à traiter et à purifier amenée à travers le dispositif d'adsorption de charge de pointe (3) peut être amené à travers les sous-unités de filtre d'adsorption de charge de pointe (3a, 3b, 3c) respectives ; et/ou
dans lequel le dispositif d'adsorption principal (2) comprend une pluralité de sous-unités de filtre d'adsorption principal (2a, 2b, 2c, 2d, 2e, 2f) ;
en particulier dans lequel les sous-unités de filtre d'adsorption principal (2a, 2b, 2c, 2d, 2e, 2f) dans le dispositif d'adsorption principal (2) sont disposées et/ou connectées en parallèle les unes aux autres, en particulier fluidiquement en parallè les unes aux autres, en particulier de telle sorte qu'au moins un flux partiel de l'eau (A) à traiter et à purifier amenée à travers le dispositif d'adsorption principal (2) peut être amené à travers les sous-unités de filtre d'adsorption principal (2a, 2b, 2c, 2d, 2e, 2f) respectives.

9. Procédé selon l'une quelconque des revendications précédentes,
dans lequel les contaminants organiques, de préférence les micropolluants et/ou les oligoéléments, sont choisis dans le groupe constitué par (i) des produits chimiques utilisés et/ou présents en agriculture, en particulier des pesticides, tels que le métaldéhyde ; des fongicides et insecticides ; (ii) des produits chimiques utilisés et/ou présents dans l'industrie et/ou des produits chimiques industriels, en particulier des plastifiants tels que le bisphénol-A ; des agents de contraste radiographiques, tels que l'acide amidotrizoïque et l'iopamidol ; des tensioactifs, tels que les tensioactifs perfluorés ; des agents anti-détonants, tels que l'éther méthyl-tert-butylique (MTBE) ; et des *Dissolved Organic Carbons* (DOC, carbone organique dissous) ; et (iii) des substances pharmaceutiques actives et/ou des médicaments humains et/ou vétérinaires, en particulier des antibiotiques ; des analgésiques et substances hormonales ; de préférence dans le groupe constitué par des produits chimiques utilisés et/ou présents en agriculture, en particulier des pesticides, tels que le métaldéhyde ; des fongicides et insecticides.

10. Procédé selon l'une quelconque des revendications précédentes,
dans lequel le charbon actif particulaire du dispositif d'adsorption de charge de pointe (3) et le charbon actif particulaire du dispositif d'adsorption principal (2), indépendamment l'un de l'autre, peuvent être obtenus par carbonisation et activation ultérieure d'une matière de départ à base de substance synthétique et/ou non naturelle, en particulier à base de polymères organiques ; et/ou
dans lequel le charbon actif particulaire du dispositif d'adsorption de charge de pointe (3) et le charbon actif particulaire du dispositif d'adsorption principal (2), indépendamment l'un de l'autre, peuvent être obtenus à partir d'une matière de départ à base de polymères organiques, en particulier à base de polymères organiques sulfonés, de préférence à base de polystyrène réticulé au divinylbenzène, de préférence à base de copolymères styrène/divinylbenzène, en particulier par carbonisation et activation ultérieure de la matière de départ, en particulier dans lequel la teneur en divinylbenzène dans la matière de départ est dans la plage comprise entre 1 % en poids et 20 % en poids, en particulier 1 % en poids et 15 % en poids, de préférence 1,5 % en poids et 12,5 % en poids, de manière préférée 2 % en poids et 10 % en poids, rapporté à la matière de départ ; et/ou
en particulier dans lequel la matière de départ est une résine échangeuse d'ions, en particulier du type gel, en particulier contenant des groupes acide sulfoné et/ou sulfonique ; et/ou
dans lequel, en guise de charbon actif particulaire du dispositif d'adsorption de charge de pointe (3) et en guise de charbon actif particulaire du dispositif d'adsorption principal (2), indépendamment l'un de l'autre, un charbon actif sphérique à base de polymère (PBSAC ; *Polymer-based Spherical Activated Carbon*) est utilisé.

11. Procédé selon l'une quelconque des revendications précédentes,
dans lequel le charbon actif particulaire du dispositif d'adsorption de charge de pointe (3) présente un degré d'activation supérieur et/ou une surface spécifique, en particulier une surface BET, supérieure et/ou un volume de pores total, en particulier un volume de pores total selon Gurvich, supérieur au charbon actif particulaire du dispositif d'adsorption principal (2).

12. Installation de purification de l'eau (1), en particulier destinée au traitement et à la purification, de préférence en continu, de l'eau (A) contaminée par des impuretés organiques, de préférence des micropolluants et/ou des oligoéléments, à des fins de production de l'eau (B) traitée et purifiée, de préférence installation de purification de l'eau (1) destinée à la mise en œuvre d'un procédé selon l'une quelconque des revendications 1 à 11,
dans laquelle l'installation de purification de l'eau (1) est conçue pour éliminer par adsorption des impuretés de l'eau (A) à traiter et à purifier, de préférence en cas d'augmentation temporellement limitée et/ou spontanée de la concentration des impuretés dans l'eau (A) à traiter et à purifier,
dans laquelle l'eau (A) à traiter et à purifier est amenée vers l'installation de purification de l'eau (1) pour l'élimination par adsorption des impuretés,
dans laquelle l'installation de purification de l'eau (1) comprend au moins un dispositif d'adsorption principal (2) et au moins un dispositif d'adsorption de charge de pointe (3) disposé en amont du dispositif d'adsorption principal (2) et pouvant être connecté en fonction d'une valeur limite de concentration d'entrée prédéfinie des impuretés dans l'eau (A) à traiter et à purifier,
dans laquelle le dispositif d'adsorption principal (2) comporte un lit fixe à base d'un charbon actif particulaire en vrac du charbon actif particulaire et dans laquelle le dispositif d'adsorption de charge de pointe (3) comporte un lit fixe à base d'un charbon actif particulaire en vrac du charbon actif particulaire,
dans laquelle le dispositif d'adsorption de charge de pointe (3) présente un volume de filtre à lit fixe (V_{SLA}) inférieur au dispositif d'adsorption principal (2), dans laquelle le rapport du volume de filtre à lit fixe (V_{HA}) du dispositif d'adsorption principal (2) d'une part au volume de filtre à lit fixe (V_{SLA}) du dispositif d'adsorption de charge de pointe (3) d'autre part est d'au moins 1,2:1 et
dans laquelle l'installation de purification de l'eau (1) est conçue de telle sorte que le temps de séjour de l'eau (A) à traiter et à purifier dans le dispositif d'adsorption de charge de pointe (3) est réglé à une valeur inférieure que dans le dispositif d'adsorption principal (2), dans laquelle le rapport du temps de séjour de l'eau (A) à traiter et à purifier dans le dispositif d'adsorption principal (2) au temps de séjour de l'eau (A) à traiter et à purifier dans le dispositif d'adsorption de charge de pointe (3) est réglé à une valeur d'au moins 1,2:1,
dans laquelle l'installation de purification de l'eau (1) est conçue de telle sorte que l'eau (A) à traiter et à purifier est amenée dans le dispositif d'adsorption principal (2) et traitée et purifiée dans le dispositif d'adsorption principal (2), dans laquelle les impuretés sont éliminées par adsorption au moins essentiellement complètement dans le dispositif d'adsorption principal (2), en particulier de telle sorte que la concentration des impuretés est abaissée en dessous d'une valeur limite de concentration de sortie prédéfinie, et
dans laquelle l'installation de purification de l'eau (1) est conçue de telle sorte que, lorsque la valeur limite de concentration d'entrée prédéfinie des impuretés dans l'eau (A) à traiter et à purifier est dépassée, le dispositif d'adsorption de charge de pointe (3) est connecté en amont du dispositif d'adsorption principal (2) de telle sorte que l'eau (A) à traiter et à purifier est au moins partiellement, de préférence complètement, d'abord amenée dans le dispositif d'adsorption de charge de pointe (3) et traitée et purifiée dans le dispositif d'adsorption de charge de pointe (3), dans laquelle les impuretés sont au moins partiellement éliminées par adsorption, de préférence l'augmentation de concentration des impuretés est affaiblie et uniformisée.

13. Utilisation d'une installation de purification de l'eau selon la revendication 12
pour le traitement et/ou la purification, de préférence en continu de l'eau contaminée par des impuretés organiques, de préférence des micropolluants et/ou des oligoéléments, à des fins de production de l'eau traitée et purifiée ; et/ou
pour l'affaiblissement et l'uniformisation des augmentations temporellement limitées et/ou spontanées de la concentration des impuretés dans l'eau à traiter et purifier ; et/ou
pour la mise à niveau ou le complément des installations de purification de l'eau ou des dispositifs de purification de l'eau existants destinés au traitement et à la purification en continu de l'eau contaminée par des impuretés organiques, de préférence des micropolluants et/ou des oligoéléments.
